# EUROPEAN PATENT APPLICATION

(11) **EP 1 038 912 A2**
(43) Date of publication of application: **27.09.2000**
(21) Application number: 00810549.6
(22) Date of filing: 22.06.2000
(51) Int. Cl.: C08K 5/3492

(54) **High molecular weight hindered hydrocarbyloxyamine stabilizers**

(71) Applicant: Ciba Specialty Chemicals Holding Inc., 4057 Basel (CH)
(72) Inventor: Horsey, Douglas Wayne, Briarcliff Manor, NY 10510 (US)

(57) **Abstract**

A high molecular weight hindered hydrocarbyloxyamine selected from the group consisting of 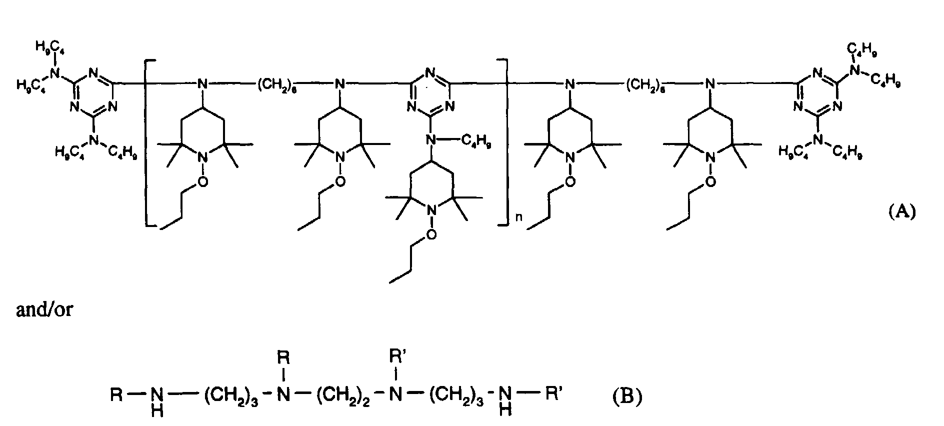 where R is 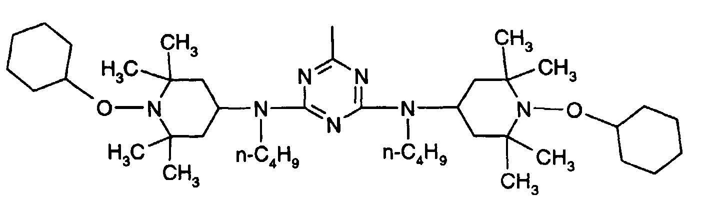 and one of the two residues R' is R and the other is H
are especially effective towards stabilizing organic materials subject to degradation induced by light, heat or oxidation.

## Description

Certain high molecular weight hindered hydrocarbyloxyamine stabilizers are found to be especially efficacious towards stabilizing organic material subject to degradation induced by light, heat or oxidation.

Disclosed are stabilized compositions comprising
(a) an organic material subject to degradation induced by light, heat or oxidation and
(b) a high molecular weight hindered hydrocarbyloxyamine stabilizer of formula (A).

The high molecular weight hindered hydrocarbyloxyamine stabilizer of the formula (A), CAS # 247243-62-5, is the NO-n-propyl derivative of the block oligomer Chimassorb® 2020 (CAS # 192268-64-7, Ciba Specialty Chemicals Corp.):

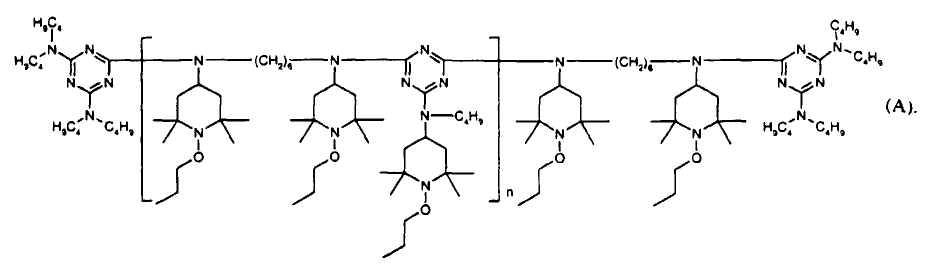

The high molecular weight hindered hydrocarbyloxyamine stabilizer of formula (A) is disclosed in GB 2334717.

The stabilized compositions may further comprise ultraviolet (UV) light absorbers, for example the following UV absorbers:
1.) 2-(2-Hydroxyphenyl)-2H-benzotriazoles, for example known commercial hydroxyphenyl-2H-benzotriazoles and benzotriazoles as disclosed in, United States Patent Nos. 3,004,896; 3,055,896; 3,072,585; 3,074,910; 3,189,615; 3,218,332; 3,230,194; 4,127,586; 4,226,763; 4,275,004; 4,278,589; 4,315,848; 4,347,180; 4,383,863; 4,675,352; 4,681,905, 4,853,471; 5,268,450; 5,278,314; 5,280,124; 5,319,091; 5,410,071; 5,436,349; 5,516,914; 5,554,760; 5,563,242; 5,574,166; 5,607,987 and 5,977,219, such as
1.1) 2-(2-hydroxy-5-methylphenyl)-2H-benzotriazole
1.2) 2-(3,5-di-t-butyl-2-hydroxyphenyl)-2H-benzotriazole
1.3) 2-(2-hydroxy-5-t-butylphenyl)-2H-benzotriazole
1.4) 2-(2-hydroxy-5-t-octylphenyl)-2H-benzotriazole
1.5) 5-chloro-2-(3,5-di-t-butyl-2-hydroxyphenyl)-2H-benzotriazole
1.6) 5-chloro-2-(3-t-butyl-2-hydroxy-5-methylphenyl)-2H-benzotriazole
1.7) 2-(3-sec-butyl-5-t-butyl-2-hydroxyphenyl)-2H-benzotriazole
1.8) 2-(2-hydroxy-4-octyloxyphenyl)-2H-benzotriazole
1.9) 2-(3,5-di-t-amyl-2-hydroxyphenyl)-2H-benzotriazole
1.10) 2-(3,5-bis-α-cumyl-2-hydroxyphenyl)-2H-benzotriazole
1.11) 2-(3-t-butyl-2-hydroxy-5-(2-(ω-hydroxy-octa-(ethyleneoxy)carbonyl-ethyl)-, phenyl)-2H-benzotriazole
1.12) 2-(3-dodecyl-2-hydroxy-5-methylphenyl)-2H-benzotriazole
1.13) 2-(3-t-butyl-2-hydroxy-5-(2-octyloxycarbonyl)ethylphenyl)-2H-benzotriazole
1.14) dodecylated 2-(2-hydroxy-5-methylphenyl)-2H-benzotriazole
1.15) 2-(3-t-butyl-2-hydroxy-5-(2-octyloxycarbonylethyl)phenyl)-5-chloro-2H-benzotriazole
1.16) 2-(3-tert-butyl-5-(2-(2-ethylhexyloxy)-carbonylethyl)-2-hydroxyphenyl)-5-chloro-2H-benzotriazole
1.17) 2-(3-t-butyl-2-hydroxy-5-(2-methoxycarbonylethyl)phenyl)-5-chloro-2H-benzotriazole
1.18) 2-(3-t-butyl-2-hydroxy-5-(2-methoxycarbonylethyl)phenyl-2H-benzotriazole
1.19) 2-(3-t-butyl-5-(2-(2-ethylhexyloxy)carbonylethyl)-2-hydroxyphenyl)-2H-benzotriazole
1.20) 2-(3-t-butyl-2-hydroxy-5-(2-isooctyloxycarbonylethyl)phenyl-2H-benzotriazole
1.21) 2,2'-methylene-bis(4-t-octyl-6-2H-benzotriazol-2-yl-phenol)
1.22) 2-(2-hydroxy-3-α-cumyl-5-t-octylphenyl)-2H-benzotriazole
1.23) 2-(2-hydroxy-3-t-octyl-5-α-cumylphenyl)-2H-benzotriazole
1.24) 5-fluoro-2-(2-hydroxy-3,5-di-α-cumylphenyl)-2H-benzotriazole
1.25) 5-chloro-2-(2-hydroxy-3,5-di-α-cumylphenyl)-2H-benzotriazole
1.26) 5-chloro-2-(2-hydroxy-3-α-cumyl-5-t-octylphenyl)-2H-benzotriazole
1.25) 2-(3-t-butyl-2-hydroxy-5-(2-isooctyloxycarbonylethyl)phenyl)-5-chloro-2H-benzotriazole
1.26) 5-trifluoromethyl-2-(2-hydroxy-3-α-cumyl-5-t-octylphenyl)-2H-benzotriazole
1.27) 5-trifluoromethyl-2-(2-hydroxy-5-t-octylphenyl)-2H-benzotriazole
1.28) 5-trifluoromethyl-2-(2-hydroxy-3,5-di-t-octylphenyl)-2H-benzotriazole
1.29) methyl 3-(5-trifluoromethyl-2H-benzotriazol-2-yl)-5-t-butyl-4-hydroxy hydrocinnamate
1.30) 5-butylsulfonyl-2-(2-hydroxy-3α-cumyl-5-t-octylphenyl)-2H-benzotriazole
1.31) 5-trifluoromethyl-2(2-hydroxy-3-α-cumyl-5-t-butylphenyl)-2H-benzotriazole
1.32) 5-trifluoromethyl-2-(2-hydroxy-3,5-di-t-butylphenyl)-2H-benzotriazole
1.33) 5-trifluoromethyl-2-(2-hydroxy-3,5-di-α-cumylphenyl)-2H-benzotriazole
1.34) 5-butylsulfonyl-2-(2-hydroxy-3,5-di-t-butylphenyl)-2H-benzotriazole and
1.35) 5-phenylsulfonyl-2-(2-hydroxy-3,5-di-t-butylphenyl)-2H-benzotriazole.

2.) Tris-aryl-o-hydroxyphenyl-s-triazines, for example known commercial tris-aryl-o-hydroxyphenyl-s-triazines and triazines as disclosed in, WO 96/28431, EP 434608, EP 941989, GB 2,317,893, United States Patent Nos. 3,843,371; 4,619,956; 4,740,542; 5,096,489; 5,106,891; 5,298,067; 5,300,414; 5,354,794; 5,461,151; 5,476,937; 5,489,503; 5,543,518; 5,556,973; 5,597,854; 5,681,955; 5,726,309; 5,942,626; 5,959,008; 5,998,116 and 6,013,704, for example
2.1) 4,6-bis-(2,4-dimethylphenyl)-2-(2-hydroxy-4-octyloxyphenyl)-s-triazine, Cyasorb® 1164, Cytec Corp.
2.2) 4,6-bis-(2,4-dimethylphenyl)-2-(2,4-dihydroxyphenyl)-s-triazine
2.3) 2,4-bis(2,4-dihydroxyphenyl)-6-(4-chlorophenyl)-s-triazine
2.4) 2,4-bis[2-hydroxy-4-(2-hydroxyethoxy)phenyl]-6-(4-chlorophenyl)-s-triazine
2.5) 2,4-bis[2-hydroxy-4-(2-hydroxy-4-(2-hydroxyethoxy)phenyl]-6-(2,4-dimethylphenyl)-s-triazine
2.6) 2,4-bis[2-hydroxy-4-(2-hydroxyethoxy)phenyl]-6-(4-bromophenyl)-s-triazine
2.7) 2,4-bis[2-hydroxy-4-(2-acetoxyethoxy)phenyl]-6-(4-chlorophenyl)-s-triazine
2.8) 2,4-bis(2,4-dihydroxyphenyl)-6-(2,4-dimethylphenyl)-s-triazine
2.9) 2,4-bis(4-biphenylyl)-6-(2-hydroxy-4-octyloxycarbonylethylideneoxyphenyl)-s-triazine
2.10) 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine
2.11) 2,4-bis(2,4-dimethylphenyl)-6-[2-hydroxy-4-(3-benzyloxy-2-hydroxypropyloxy) phenyl]-s-triazine
2.12) 2,4-bis(2-hydroxy-4-n-butyloxyphenyl)-6-(2,4-di-n-butyloxyphenyl)-s-triazine
2.13) 2,4-bis(2,4-dimethylphenyl)-6-[2-hydroxy-4-(3-nonyloxy *-2-hydroxypropyloxy)-5-α-cumylphenyl]-s-triazine (* denotes a mixture of octyloxy, nonyloxy and decyloxy groups)
2.14) methylenebis-{2,4-bis(2,4-dimethylphenyl)-6-[2-hydroxy-4-(3-butyloxy-2-hydroxypropoxy)phenyl]-s-triazine}, methylene bridged dimer mixture bridged in the 3:5', 5:5' and 3:3' positions in a 5:4:1 ratio
2.15) 2,4,6-tris(2-hydroxy-4-isooctyloxycarbonylisopropylideneoxyphenyl)-s-triazine
2.16) 2,4-bis(2,4-dimethylphenyl)-6-(2-hydroxy-4-hexyloxy-5-α-cumylphenyl)-s-triazine
2.17) 2-(2,4,6-trimethylphenyl)-4,6-bis[2-hydroxy-4-(3-butyloxy-2-hydroxypropyloxy) phenyl]-s-triazine
2.18) 2,4,6-tris[2-hydroxy-4-(3-sec-butyloxy-2-hydroxypropyloxy)phenyl]-s-triazine
2.19) mixture of 4,6-bis-(2,4-dimethylphenyl)-2-(2-hydroxy-4-(3-dodecyloxy-2-hydroxypropoxy)-phenyl)-s-triazine and 4,6-bis-(2,4-dimethylphenyl)-2-(2-hydroxy-4-(3-tridecyloxy-2-hydroxypropoxy)-phenyl)-s-triazine, Tinuvin® 400, Ciba Specialty Chemicals Corp.
2.20) 4,6-bis-(2,4-dimethylphenyl)-2-(2-hydroxy-4-(3-(2-ethylhexyloxy)-2-hydroxypropoxy)-phenyl)-s-triazine
2.21) 4,6-diphenyl-2-(4-hexyloxy-2-hydroxyphenyl)-s-triazine 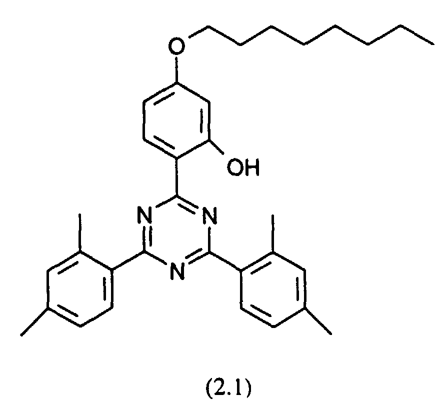 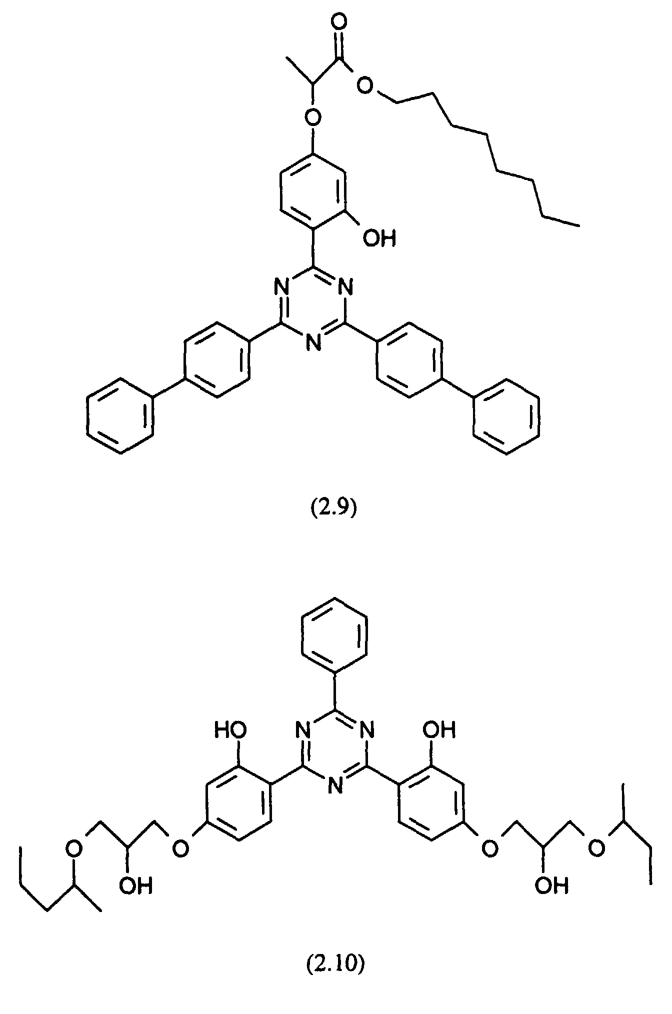 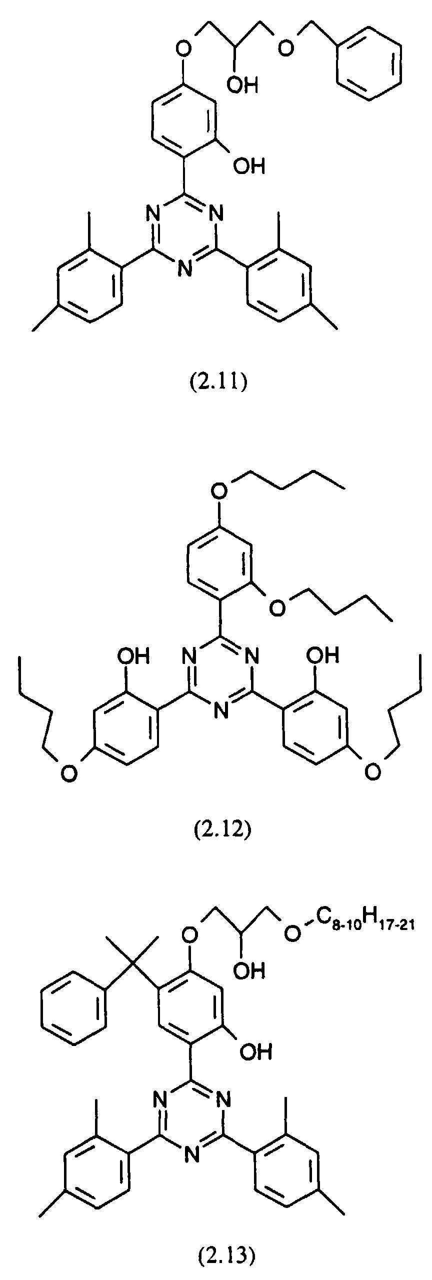 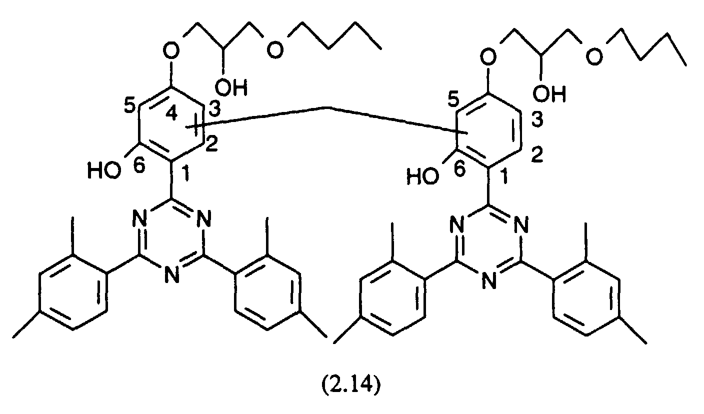
methylene bridged dimer mixture bridged in the 3:5', 5:5' and 3:3' positions in a 5:4:1 ratio 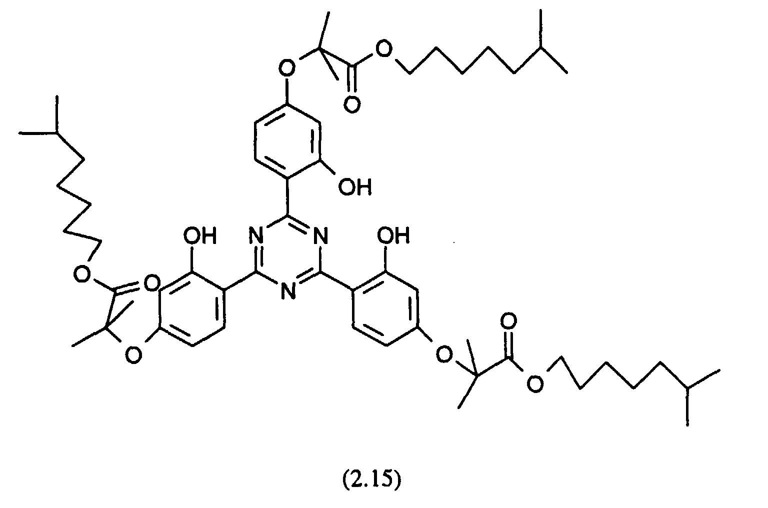 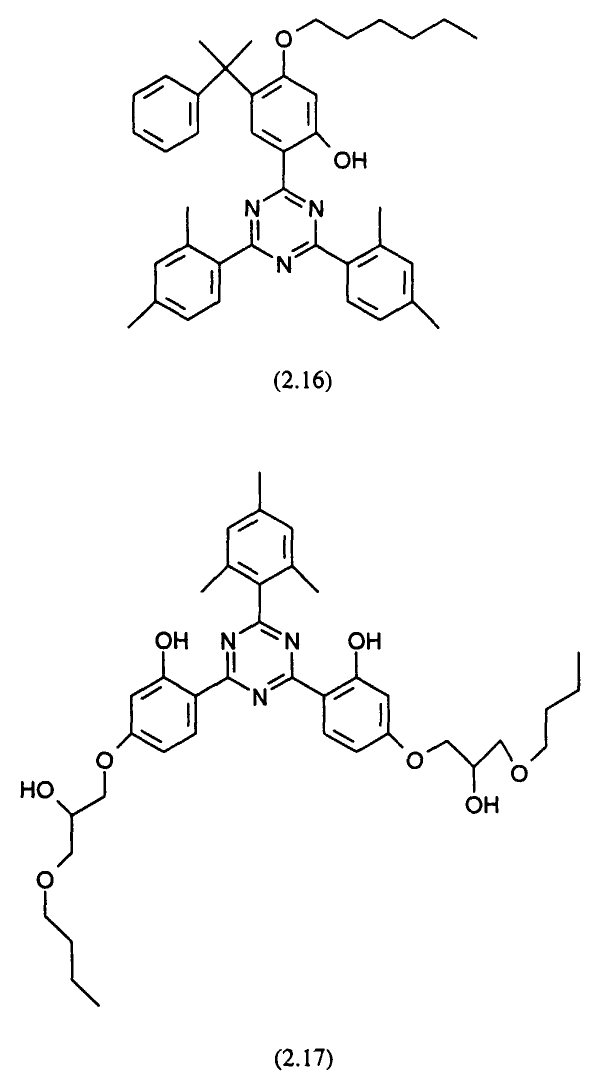 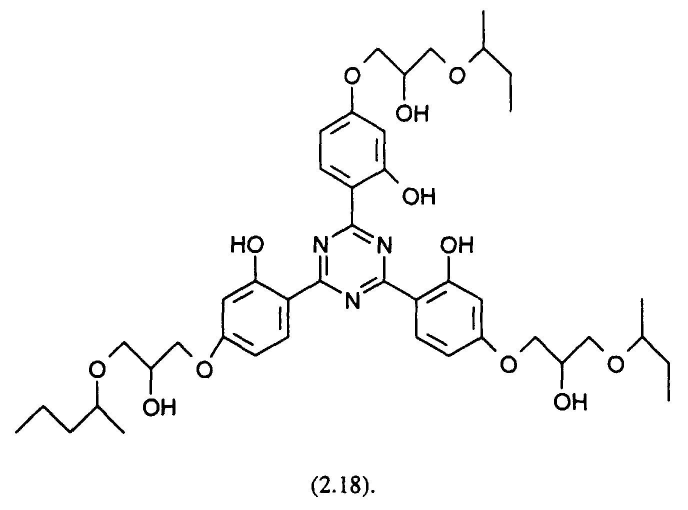
3.) 2-Hydroxy-benzophenones, for example, the 4-hydroxy-, 4-methoxy-, 4-octyloxy, 4-decyloxy-, 4-dodecyloxy-, 4-benzyloxy, 4,2',4'-trihydroxy- and 2'-hydroxy-4,4'-dimethoxy derivatives.
4.) Esters of optionally substituted benzoic acids for example, phenyl salicylate, 4-tert-butylphenyl salicylate, octylphenyl salicylate, dibenzoylresorcinol, bis-(4-tert-butylbenzoyl)-resorcinol, benzoylresorcinol, 3,5-di-tert-butyl-4-hydroxybenzoic acid 2,4-di-tert-butylphenyl ester and 3,5-di-tert-butyl-4-hydroxybenzoic acid hexadecyl ester.
5.) Acrylates and malonates, for example, α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(β-carbomethoxy-β-cyanovinyl)-2-methyl-indoline, Sanduvor® PR25, dimethyl p-methoxybenzylidenemalonate (CAS# 7443-25-6), and Sanduvor® PR31, di-(1,2,2,6,6-pentamethylpiperidin-4-yl) p-methoxybenzylidenemalonate (CAS #147783-69-5).
6.) Oxalic acid diamides, for example, 4,4'-di-octyloxy-oxanilide, 2,2'-di-octyloxy-5,5'-di-tert-butyl-oxanilide, 2,2'-di-dodecyloxy-5,5'-di-tert-butyl-oxanilide, 2-ethoxy-2'-ethyl-oxanilide, N,N'-bis (3-dimethylaminopropyl)-oxalamide, 2-ethoxy-5-tert-butyl-2'-ethyloxanilide and its mixture with 2-ethoxy-2'-ethyl-5,4'-di-tert-butyloxanilide and mixtures of ortho- and para-methoxy- as well as of o- and p-ethoxy-disubstituted oxanilides.
The stabilized compositions may also contain light stabilizers of the class of:
7.) Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
The stabilized compositions may further comprise, if desired, other stabilizers of the following classes:
8.) Antioxidants
8.1) Alkylated monophenols, for example,
2,6-di-tert-butyl-4-methylphenol
2-tert-butyl-4,6-dimethylphenol
2,6-di-tert-butyl-4-ethylphenol
2,6-di-tert-butyl-4-n-butylphenol
2,6-di-tert-butyl-4-i-butylphenol
2,6-di-cyclopentyl-4-methylphenol
2-(α-methylcyclohexyl)-4,6-dimethylphenol
2,6-di-octadecyl-4-methylphenol
2,4,6-tri-cyclohexylphenol
2,6-di-tert-butyl-4-methoxymethylphenol

8.2) Alkylated hydroquinones, for example,
2,6-di-tert-butyl-4-methoxyphenol
2,5-di-tert-butyl-hydroquinone
2,5-di-tert-amyl-hydroquinone
2,6-diphenyl-4-octadecyloxyphenol

8.3) Hydroxylated thiodiphenyl ethers, for example,
2,2'-thio-bis-(6-tert-butyl-4-methylphenol)
2,2'-thio-bis-(4-octylphenol)
4,4'-thio-bis-(6-tert-butyl-3-methylphenol)
4,4'-thio-bis-(6-tert-butyl-2-methylphenol)

8.4) Alkylidene-bisphenols, for example,
2,2'-methylene-bis-(6-tert-butyl-4-methylphenol)
2,2'-methylene-bis-(6-tert-butyl-4-ethylphenol)
2,2'-methylene-bis-[4-methyl-6-(α-methylcyclohexyl)-phenol]
2,2'-methylene-bis-(4-methyl-6-cyclohexylphenol)
2,2'-methylene-bis-(6-nonyl-4-methylphenol)
2,2'-methylene-bis-[6-(α-methylbenzyl)-4-nonylphenol]
2,2'-methylene-bis-[6-(α,α-dimethylbenzyl)-4-nonylphenol]

2,2'-methylene-bis-(4,6-di-tert-butylphenol)
2,2'-ethylidene-bis-(4,6-di-tert-butylphenol)
2,2'-ethylidene-bis-(6-tert-butyl-4-isobutylphenol)
4,4'-methylene-bis-(2,6-di-tert-butylphenol)
4,4'-methylene-bis-(6-tert-butyl-2-methylphenol)
1,1-bis-(5-tert-butyl-4-hydroxy-2-methylphenyl)-butane
2,6-di-(3-tert-butyl-5-methyl-2-hydroxybenzyl)-4-methylphenol
1,1,3-tris-(5-tert-butyl-4-hydroxy-2-methylphenyl)-butane
1,1-bis-(5-tert-butyl-4-hydroxy-2-methylphenyl)-3-n-dodecylmercaptobutane ethyleneglycol bis-[3,3-bis-(3'-tert-butyl-4'-hydroxyphenyl)-butyrate]
di-(3-tert-butyl-4-hydroxy-5-methylphenyl)-dicyclopentadiene
di-[2-(3'-tert-butyl-2'-hydroxy-5'-methyl-benzyl)-6-tert-butyl-4-methylphenyl] terephthalate.

8.5) Benzyl compounds, for example,
1,3,5-tri-(3,5-di-tert-butyl-4-hydroxybenzyl)-2,4,6-trimethylbenzene di-(3,5-di-tert-butyl-4-hydroxybenzyl) sulfide
3,5-di-tert-butyl-4-hydroxybenzyl-mercapto-acetic acid isooctyl ester bis-(4-tert-butyl-3-hydroxy-2,6-dimethylbenzyl)dithiol terephthalate
1,3,5-tris-(3,5-di-tert-butyl-4-hydroxybenzyl) isocyanurate
1,3,5-tris-(4-tert-butyl-3-hydroxy-2,6-dimethylbenzyl) isocyanurate
3,5-di-tert-butyl-4-hydroxybenzyl-phosphoric acid dioctadecyl ester
3,5-di-tert-butyl-4-hydroxybenzyl-phosphoric acid monoethyl ester, calcium-salt

8.6) Acylaminophenols, for example,
4-hydroxy-lauric acid anilide
4-hydroxy-stearic acid anilide
2,4-bis-octylmercapto-6-(3,5-tert-butyl-4-hydroxyanilino)-s-triazine octyl-N-(3,5-di-tert-butyl-4-hydroxyphenyl)-carbamate

8.7) Esters of β-(3,5-di-tert-butyl-4-hydroxyphenyl)-propionic acid with monohydric or polyhydric alcohols, for example,

| | |
|---|---|
| methanol | diethylene glycol |
| octadecanol | triethylene glycol |
| 1,6-hexanediol | pentaerythritol |
| neopentyl glycol | tris-hydroxyethyl isocyanurate |
| thiodiethylene glycol | di-hydroxyethyl oxalic acid diamide |
| triethanolamine | triisopropanolamine |

8.8) Esters of β-(5-tert-butyl-4-hydroxy-3-methylphenyl)-propionic acid with monohydric or polyhydric alcohols, for example,

| | |
|---|---|
| methanol | diethylene glycol |
| octadecanol | triethylene glycol |
| 1,6-hexanediol | pentaerythritol |
| neopentyl glycol | tris-hydroxyethyl isocyanurate |
| thiodiethylene glycol | di-hydroxyethyl oxalic acid diamide |
| triethanolamine | triisopropanolamine |

8.9) Amides of β-(3,5-di-tert-butyl-4-hydroxyphenyl)-propionic acid for example,
N,N'-di-(3,5-di-tert-butyl-4-hydroxyphenylpropionyl)-hexamethylenediamine
N,N'-di-(3,5-di-tert-butyl-4-hydroxyphenylpropionyl)-trimethylenediamine
N,N'-di-(3,5-di-tert-butyl-4-hydroxyphenylpropionyl)-hydrazine.

9.) Phosphites and phosphonites, for example, triphenyl phosphite, diphenylalkyl phosphites, phenyldialkyl phosphites, tri-(nonylphenyl) phosphite, trilauryl phosphite, trioctadecyl phosphite, di-stearyl-pentaerythritol diphosphite, tris-(2,4-di-tert-butylphenyl) phosphite, di-isodecylpentaerythritol diphosphite, di-(2,4,6-tri-tert-butylphenyl)-pentaerythritol diphosphite, di-(2,4-di-tert-butyl-6-methylphenyl)-pentaerythritol diphosphite, di-(2,4-di-tert-butylphenyl)pentaerythritol diphosphite, tristearyl-sorbitol triphosphite, tetrakis-(2,4-di-tert-butylphenyl) 4,4'-diphenylylenediphosphonite.
10.) Compounds which destroy peroxide, for example, esters of β-thiodipropionic acid, for example the lauryl, stearyl, myristyl or tridecyl esters, mercapto-benzimidazole or the zinc salt of 2-mercaptobenzimidazole, zinc dibutyl-dithiocarbamate, dioctadecyl disulfide, pentaerythritol tetrakis-(β-dodecylmercapto)-propionate.
11.) Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
12.) Nitrones, for example, N-benzyl-alpha-phenyl nitrone, N-ethyl-alpha-methyl nitrone, N-octyl-alpha-heptyl nitrone, N-lauryl-alpha-undecyl nitrone, N-tetradecyl-alpha-tridecyl nitrone, N-hexadecyl-alpha-pentadecyl nitrone, N-octadecyl-alpha-heptadecylnitrone, N-hexadecyl-alpha-heptadecyl nitrone, N-octadecyl-alpha-pentadecyl nitrone, N-heptadecyl-alpha-heptadecyl nitrone, N-octadecyl-alpha-hexadecyl nitrone, nitrone derived from N,N-dialkylhydroxylamine derived from hydrogenated tallow amine.
13.) Amine oxides, for example amine oxide derivatives as disclosed in U.S. Patent Nos. 5,844,029 and 5,880,191, didecyl methyl amine oxide, tridecyl amine oxide, tridodecyl amine oxide and trihexadecyl amine oxide.
14.) Polyamide stabilizers, for example copper salts in combination with iodides and/or phosphorus compounds and salts of divalent manganese.
15.) Basic co-stabilizers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.
16.) Nucleating agents, for example, inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers (ionomers).
17.) Fillers and reinforcing agents, for example, calcium carbonate, silicates, glass fibers, asbestos, talc, kaolin, mica, barium sulfate, metal oxides and hydroxides, carbon black, graphite, wood flour and flours or fibers of other natural products, synthetic fibers.
18.) Other additives, for example, plasticizers, lubricants, emulsifiers, pigments, rheology additives, catalysts, flow-control agents, optical brighteners, clarifiers such as substituted and unsubstituted bisbenzylidene sorbitols, flameproofing agents, anti-static agents, benzoxazinone UV absorbers, blowing agents and thiosynergists such as dilauryl thiodipropionate or distearyl thiodipropionate.
19.) Benzofuranones and indolinones, for example those disclosed in U.S. Patent Nos. 4,325,863, 4,338,244 or 5,175,312, or 3-[4-(2-acetoxyethoxy)phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one, 3-(3,4-dimethylphenyl)-5,7-di-tert-butyl-benzofuran-2-one, Irganox® HP-136, Ciba Specialty Chemicals Corp., and 3-(2,3-dimethylphenyl)-5,7-di-tert-butyl-benzofuran-2-one.
20.) Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
The stabilized compositions may also comprise further hindered amines, for example, one or more of the following compounds of sections 21.) and 22.). Blends of hindered amine stabilizers are disclosed for example in EP 947546. The hindered amine of formula (A) may be blended with one or more appropriate additional hindered amines as per the disclosure of EP 947546, substituting the compound of formula (A) for the component (α) of the EP disclosure.
21.) Sterically hindered amine stabilizers
21.1) 4-hydroxy-2,2,6,6-tetramethylpiperidine
21.2) 1-allyl-4-hydroxy-2,2,6,6-tetramethylpiperidine
21.3) 1-benzyl-4-hydroxy-2,2,6,6-tetramethylpiperidine
21.4) 1-(4-tert-butyl-2-butenyl)-4-hydroxy-2,2,6,6-tetramethylpiperidine
21.5) 4-stearoyloxy-2,2,6,6-tetramethylpiperidine
21.6) 1-ethyl-4-salicyloyloxy-2,2,6,6-tetramethylpiperidine
21.7) 4-methacryloyloxy-1,2,2,6,6-pentamethylpiperidine
21.8) 1,2,2,6,6-pentamethylpiperidin-4-yl β-(3,5-di-tert-butyl-4-hydroxyphenyl)propionate
21.9) di(1-benzyl-2,2,6,6-tetramethylpiperidin-4-yl) maleate
21.10) di(2,2,6,6-tetramethylpiperidin-4-yl) succinate
21.11) di(2,2,6,6-tetramethylpiperidin-4-yl) glutarate
21.12) di(2,2,6,6-tetramethylpiperidin-4-yl) adipate
21.13) di(2,2,6,6-tetramethylpiperidin-4-yl) sebacate
21.14) di(1,2,2,6,6-pentamethylpiperidin-4-yl) sebacate
21.15) di(1,2,3,6-tetramethyl-2,6-diethyl-piperidin-4-yl) sebacate
21.16) di(1-allyl-2,2,6,6-tetramethylpiperidin-4-yl) phthalate
21.17) 1-hydroxy-4-β-cyanoethoxy-2,2,6,6-tetramethylpiperidine
21.18) 1-acetyl-2,2,6,6-tetramethylpiperidin-4-yl acetate
21.19) tri(2,2,6,6-tetramethylpiperidin-4-yl) trimellitate
21.20) 1-acryloyl-4-benzyloxy-2,2,6,6-tetramethylpiperidine
21.21) di(2,2,6,6-tetramethylpiperidin-4-yl) diethylmalonate
21.22) di(1,2,2,6,6-pentamethylpiperidin-4-yl) dibutylmalonate
21.23) di(1,2,2,6,6-pentamethylpiperidin-4-yl) butyl(3,5-di-tert-butyl-4-hydroxybenzyl) malonate
21.24) di(1-octyloxy-2,2,6,6-tetramethylpiperidin-4-yl) sebacate
21.25) di(1-cyclohexyloxy-2,2,6,6-tetramethylpiperidin-4-yl) sebacate
21.26) hexane-1',6'-bis(4-carbamoyloxy-1-n-butyl-2,2,6,6-tetramethylpiperidine)
21.27) toluene-2',4'-bis-(4-carbamoyloxy-1-n-propyl-2,2,6,6-tetramethylpiperidine)
21.28) dimethylbis(2,2,6,6-tetramethylpiperidin-4-oxy)silane
21.29) phenyltris(2,2,6,6-tetramethylpiperidin-4-oxy)silane
21.30) tris(1-propyl-2,2,6,6-tetramethylpiperidin-4-yl) phosphite
21.30-a) tris(1-methyl-2,2,6,6-tetramethylpiperidin-4-yl) phosphite
21.31) tris(1-propyl-2,2,6,6-tetramethylpiperidin-4-yl) phosphate
21.32) phenyl bis(1,2,2,6,6-pentamethylpiperidin-4-yl) phosphonate
21.33) 4-hydroxy-1,2,2,6,6-pentamethylpiperidine
21.34) 4-hydroxy-N-hydroxyethyl-2,2,6,6-tetramethylpiperidine
21.35) 4-hydroxy-N-(2-hydroxypropyl)-2,2,6,6-tetramethylpiperidine
21.36) 1-glycidyl-4-hydroxy-2,2,6,6-tetramethylpiperidine
21.36-a-1) 1,2,3,4-tetrakis[2,2,6.6-tetramethylpiperidin-4-yloxycarbonyl]butane
21.36-a-2) bis[2,2,6,6-terramethylpiperidin-4-yloxycarbonyl]-bis[tridecyloxycarbonyl]butane
21.36-b-1) 1 ,2,3,4-tetrakis[1,2,2,6,6-pentamethylpiperidin-4-yloxycarbonyl]butane
21.36-b-2) bis[1,2,2,6,6-pentamethylpiperidin-4-yloxycarbonyl]-bis[tridecyloxycarbonyl]butane
21.36-c) 2,2,6,6-tetramethylpiperidin-4-yloxycarbonyl(C₁₅-C₁₇alkane) 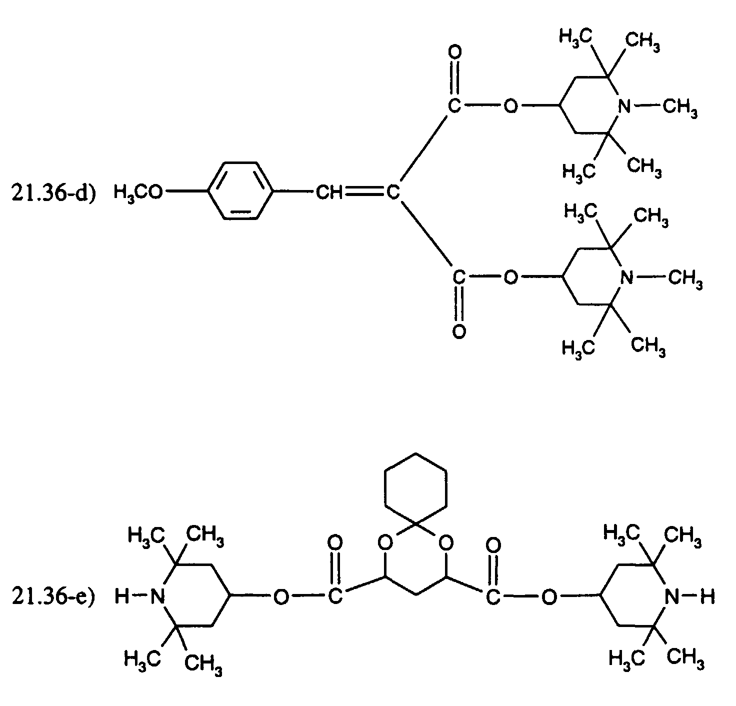
21.37) N,N'-bis(2,2,6,6-tetramethylpiperidin-4-yl)hexamethylene-1,6-diamine
21.38) N,N'-bis(2,2,6,6-tetramethylpiperidin-4-yl)hexamethylene-1,6-diacetamide
21.39) bis(2,2,6,6-tetramethylpiperidin-4-yl)amine
21.40) 4-benzoylamino-2,2,6,6-tetramethylpiperidine
21.41) N,N'-bis(2,2,6,6-tetramethylpiperidin-4-yl)-N,N'-dibutyladipamide
21.42) N,N'-bis(2,2,6,6-tetramethylpiperidin-4-yl)-N,N'-dicyclohexyl-2-hydroxypropylene-1,3-diamine
21.43) N,N'-bis(2,2,6,6-tetramethylpiperidin-4-yl)-p-xylylenediamine
21.44) N,N'-bis(2,2,6,6-tetramethylpiperidin-4-yl)succinamide
21.45) bis(2,2,6,6-tetramethylpiperidin-4-yl) N-(2,2,6,6-tetramethylpiperidin-4-yl)-β-aminodipropionate 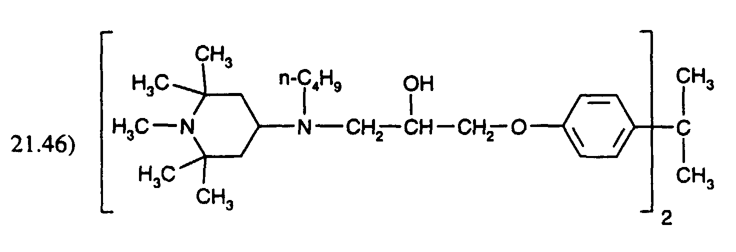
21.47) 4-(bis-2-hydroxyethylamino)-1,2,2,6,6-pentamethylpiperidine
21.48) 4-(3-methyl-4-hydroxy-5-tert-butyl-benzamido)-2,2,6,6-tetramethylpiperidine
21.49) 4-methacrylamido-1,2,2,6,6-pentamethylpiperidine 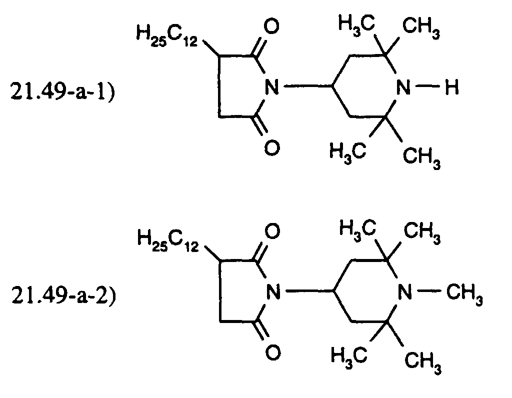
21.49-b) N,N',N''-tris[2,2,6,6-tetramethylpiperidin-4-ylamino(2-hydroxypropylene)]isocyanurate
21.49-c) 2-(2,2,6,6-tetramethylpiperidin-4-ylamino)-2-(2,2,6,6-tetramethylpiperidin-4-yl-aminocarbonyl)propane
21.49-d) 1,6-bis[N-(2,2,6,6-tetramethylpiperidin-4-yl)formylamino]hexane
21.49-e) 1-(2,2,6,6-tetramethylpiperidin-4-ylamino)-2-(2,2,6,6-tetramethylpiperidin-4-yl-aminocarbonyl)ethane
21.50) 9-aza-8,8,10,10-tetramethyl-1,5-dioxaspiro[5.5]undecane
21.51) 9-aza-8,8,10,10-tetramethyl-3-ethyl-1,5-dioxaspiro[5.5]undecane
21.52) 8-aza-2,7,7,8,9,9-hexamethyl-1,4-dioxaspiro[4.5]decane
21.53) 9-aza-3-hydroxymethyl-3-ethyl-8,8,9,10,10-pentamethyl-1,5-dioxaspiro[5.5]undecane
21.54) 9-aza-3-ethyl-3-acetoxymethyl-9-acetyl-8,8,10,10-tetramethyl-1,5-dioxaspiro [5.5]-undecane
21.55) 2,2,6,6-tetramethylpiperidine-4-spiro-2'-(1',3'-dioxane)-5'-spiro-5''-(1'',3''-dioxane)-2''-spiro-4'''-(2''',2''',6''',6'''-tetramethylpiperidine)
21.56) 3-benzyl-1,3,8-triaza-7,7,9,9-tetramethylspiro[4.5]decane-2,4-dione
21.57) 3-n-octyl-1,3,8-triaza-7,7,9,9-tetramethylspiro[4.5]decane-2,4-dione
21.58) 3-allyl-1,3,8-triaza-1,7,7,9,9-pentamethylspiro[4.5]decane-2,4-dione
21.59) 3-glycidyl-1,3,8-triaza-7,7,8,9,9-pentamethylspiro[4.5]decane-2,4-dione
21.60) 1,3,7,7,8,9,9-heptamethyl-1,3,8-triazaspiro[4.5]decane-2,4-dione
21.61) 2-isopropyl-7,7,9,9-tetramethyl-1-oxa-3,8-diaza-4-oxospiro[4.5]decane
21.62) 2,2-dibutyl-7,7,9,9-tetramethyl-1-oxa-3,8-diaza-4-oxospiro[4.5]decane
21.63) 2,2,4,4-tetramethyl-7-oxa-3,20-diaza-21-oxodispiro[5.1.11.2]heneicosane
21.64) 2-butyl-7,7,9,9-tetramethyl-1-oxa-4,8-diaza-3-oxospiro[4.5]decane
21.65) 8-acetyl-3-dodecyl-1,3,8-triaza-7,7,9,9-tetramethylspiro[4.5]decane-2,4-dione 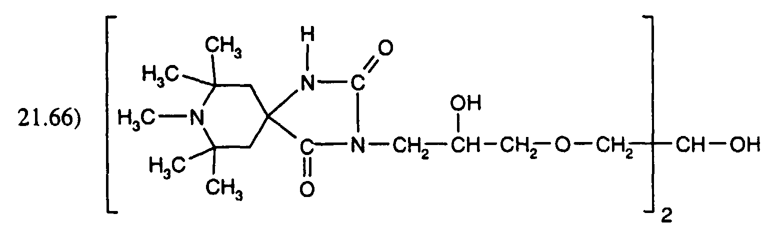 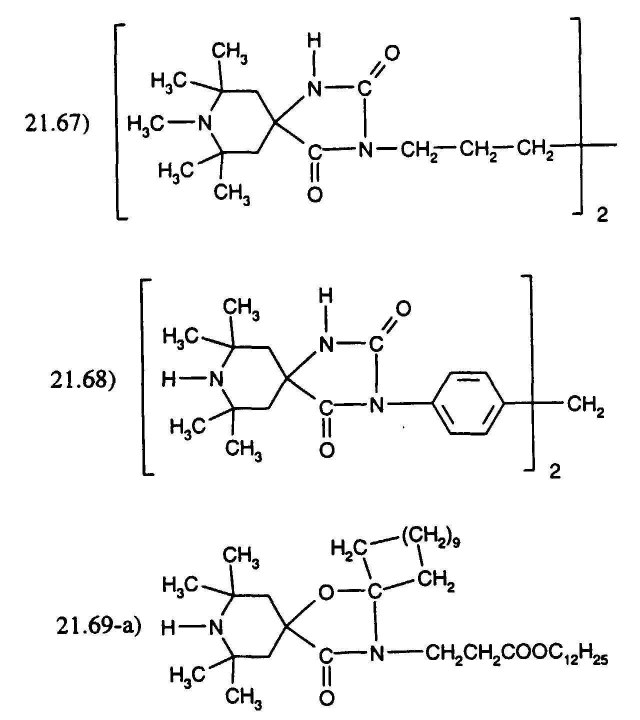
_{21.69-b) mixture of 60 % by weight of} 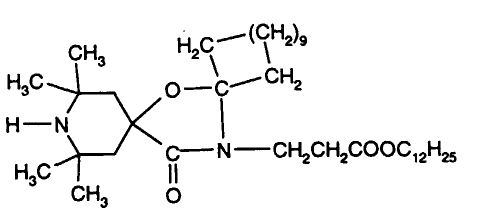 and 40% by weight of 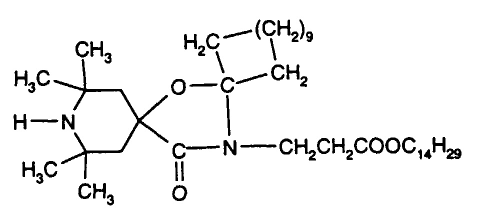 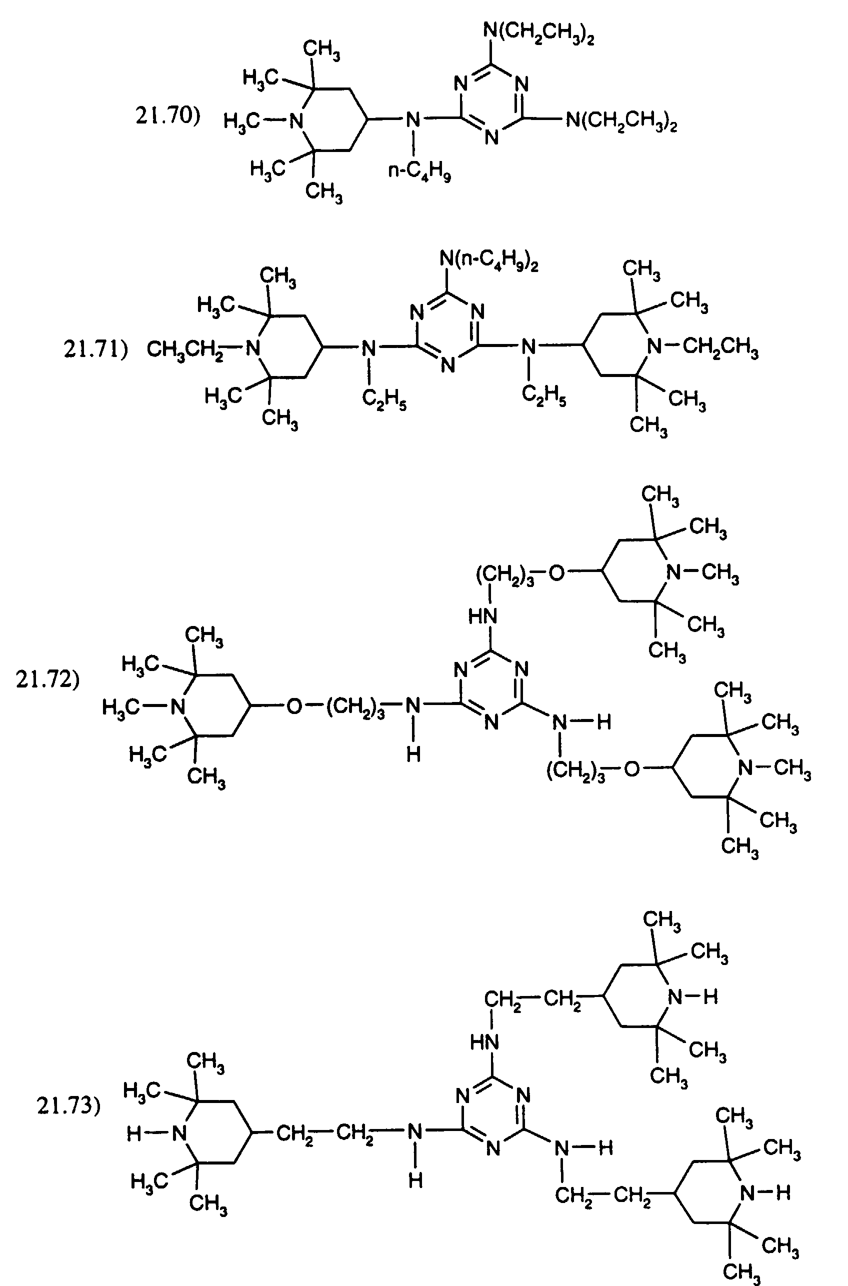 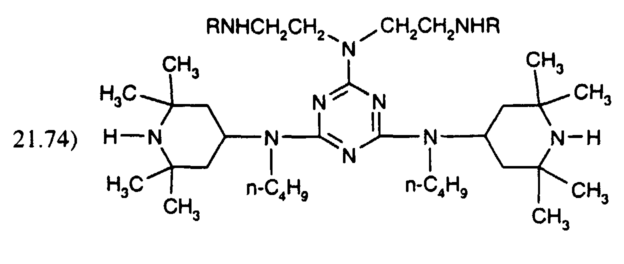
where R is 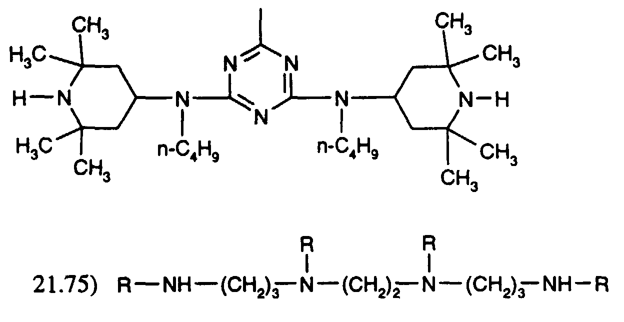 where R has the same meaning as in compound 21.74 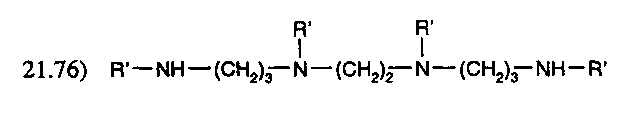 where R' is 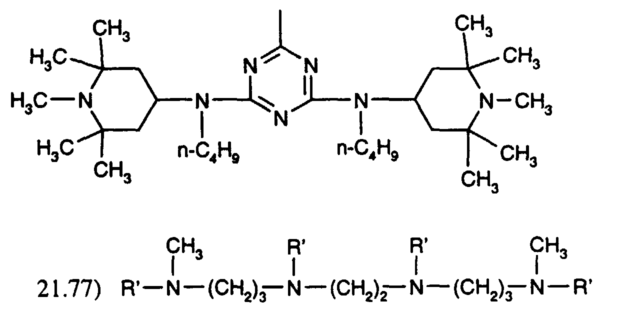 where R' has the same meaning as in compound (21.76) 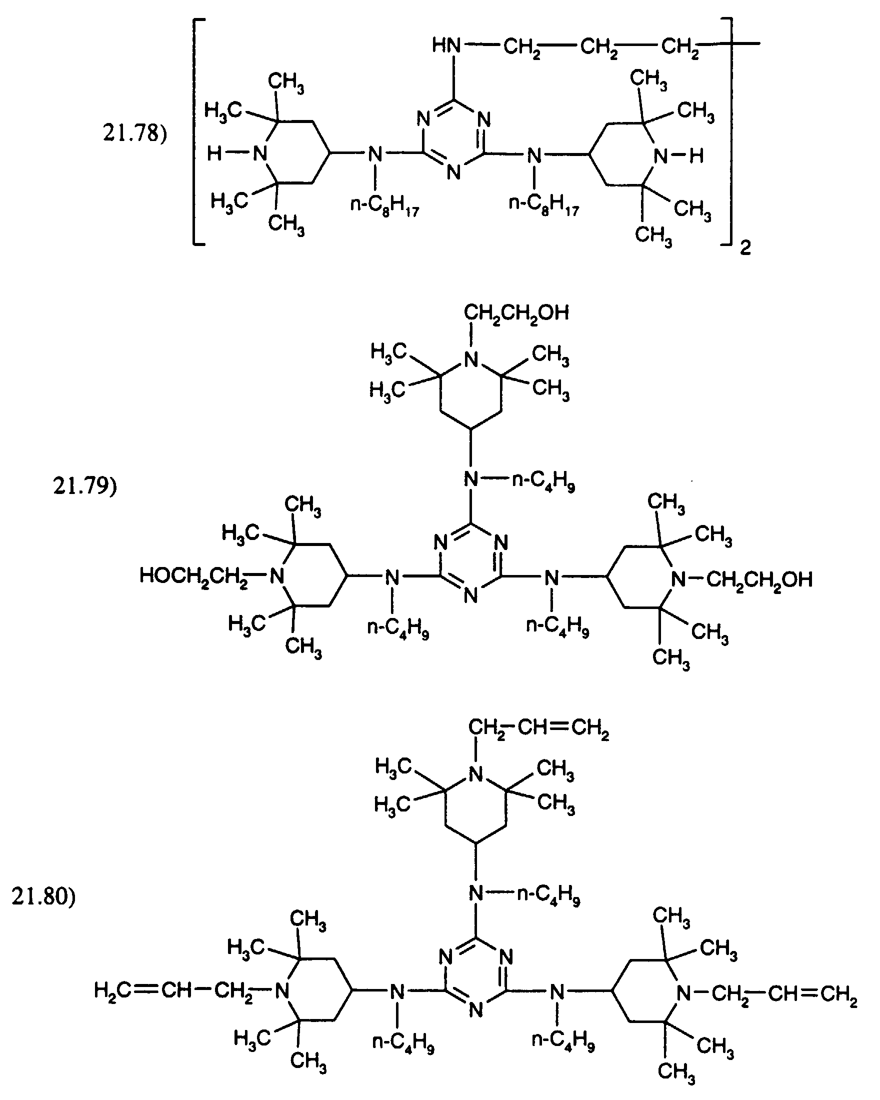 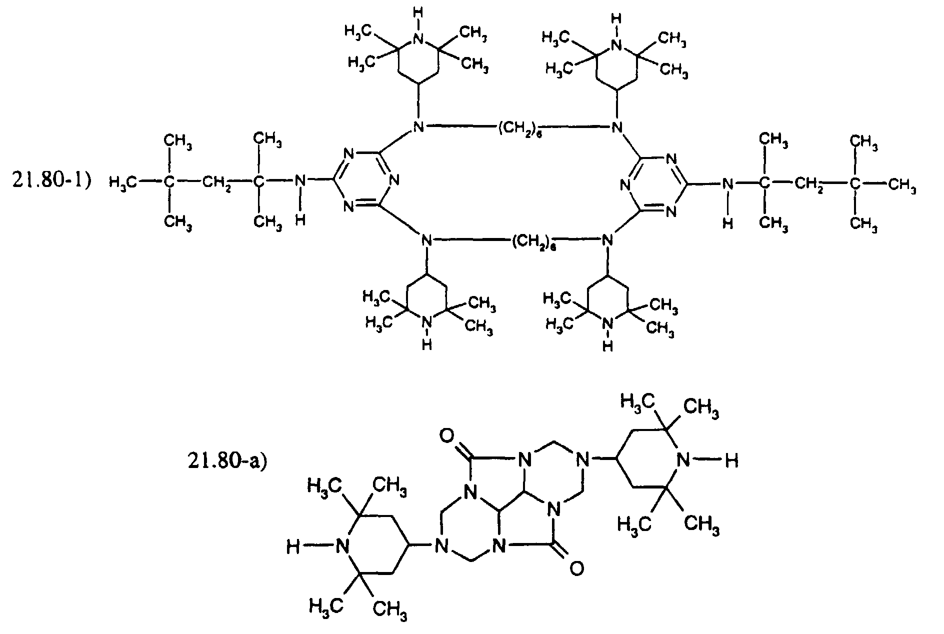
In the following compounds (21.81) to (21.83), (21.84-1), (21.84-2) and (21.85) to (21.91), (21.91-1), (21.92-1), (21.92-2), (21.93) and (21.94), m₁ to m₁₄ is a number from 2 to about 200, preferably 2 to 100, for example 2 to 50, 2 to 40 or 3 to 40 or 4 to 10. 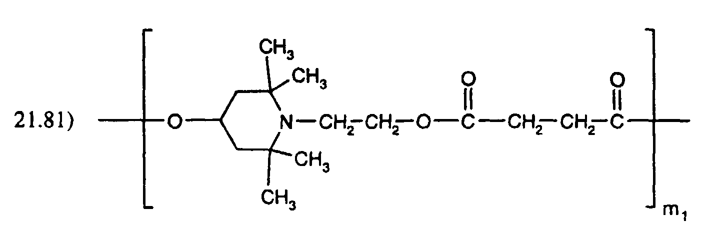 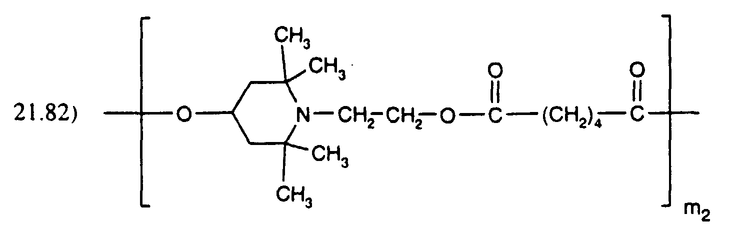
In the compounds (21.81) and (21.82), the end group bonded to the -O- can be, for example, hydrogen or a group -CO-(CH₂)₂-COO-Y or -CO-(CH₂)₄-COO-Y, respectively, with Y being hydrogen or C₁-C₄alkyl and the end group bonded to the diacyl can be, for example, -O-Y or a group 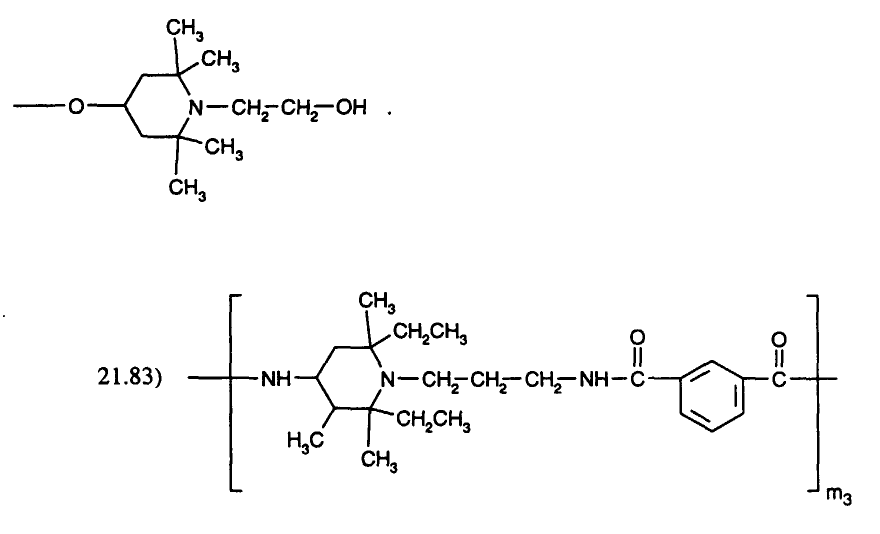
In the compound (21.83), the end group bonded to the amino residue can be, for example, a group 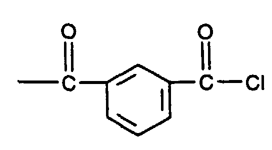 and the end group bonded to the diacyl residue can be, for example, Cl. 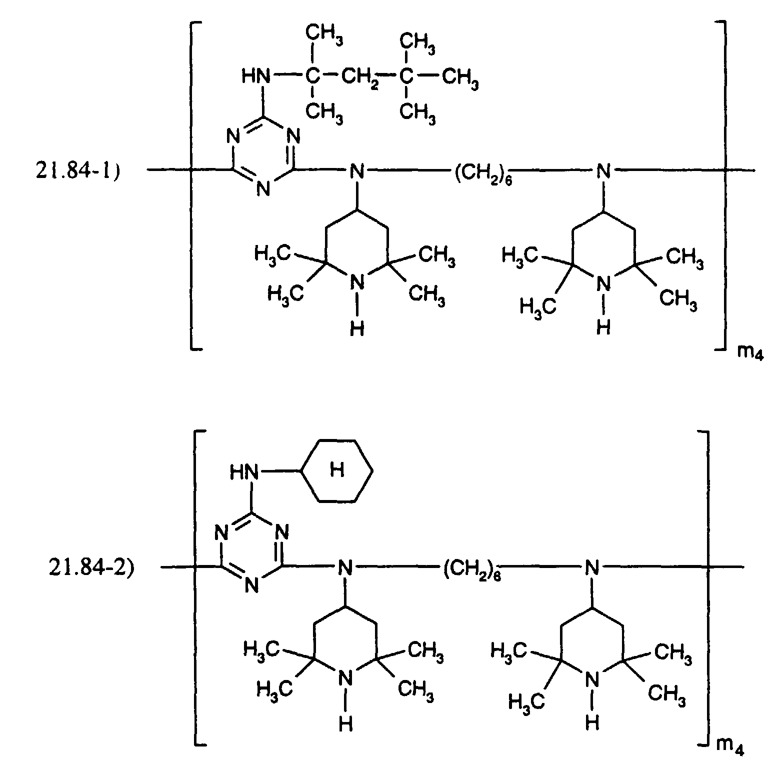
In the compounds (21.84-1) and (21.84-2), the end group bonded to the triazine residue can be, for example, chlorine or a group 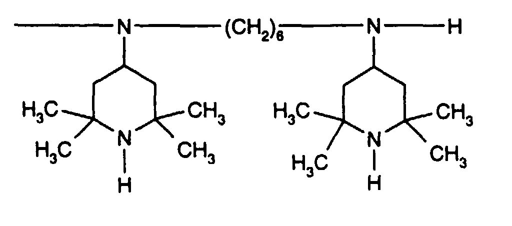 and the end group bonded to the diamino group can be, for example, hydrogen or a group 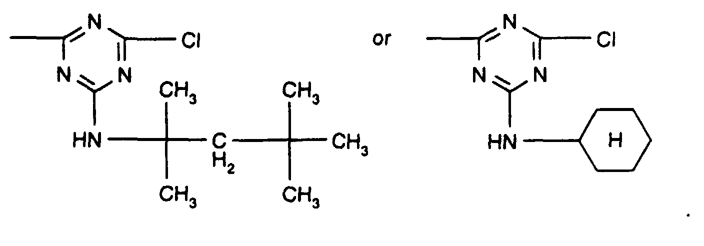
It may be convenient to replace the chlorine attached to the triazine by e.g. -OH or an amino group. Suitable amino groups are typically: pyrrolidin-1-yl, morpholino, -NH₂,-N(C₁-C₈alkyl)₂ and -NY'(C₁-C₈alkyl) wherein Y' is hydrogen or a group of the formula 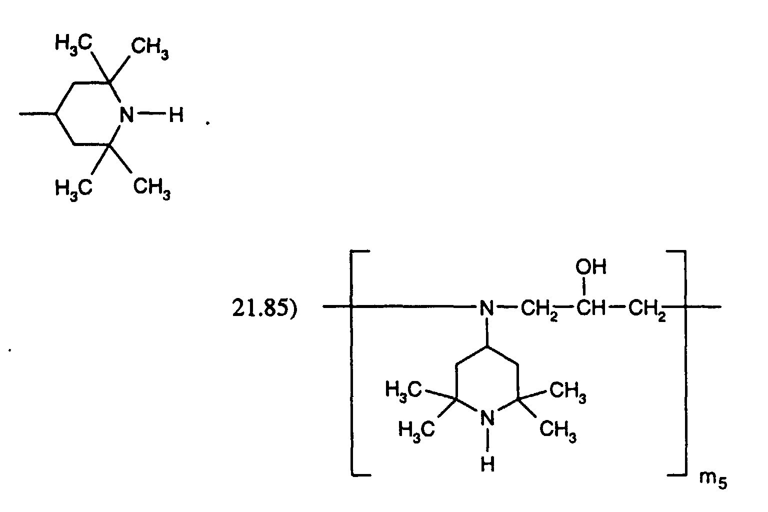
In the compound (21.85), the end group bonded to the 2,2,6,6-tetramethylpiperidin-4-ylamino residue can be, for example, hydrogen and the end group bonded to the 2-hydroxypropylene residue can be, for example, 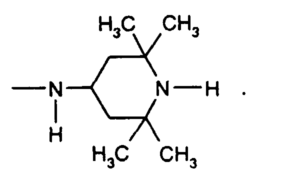 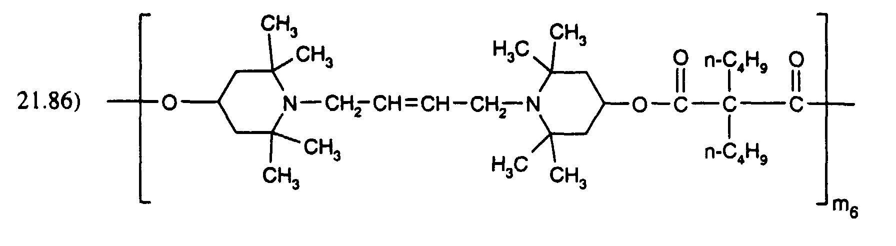 In the compound (21.86), the end group bonded to the -O- can be, for example, hydrogen or 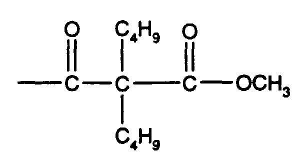 and the end group bonded to the diacyl residue can be, for example, -OCH₃ or Cl. 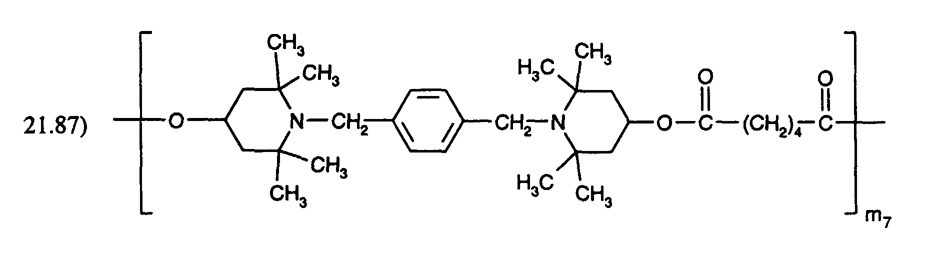
In the compound (21.87), the end group bonded to the -O- can be, for example, hydrogen or 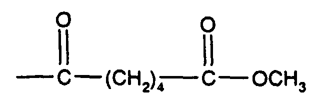 and the end group bonded to the diacyl radical can be, for example, -OCH₃ or Cl. 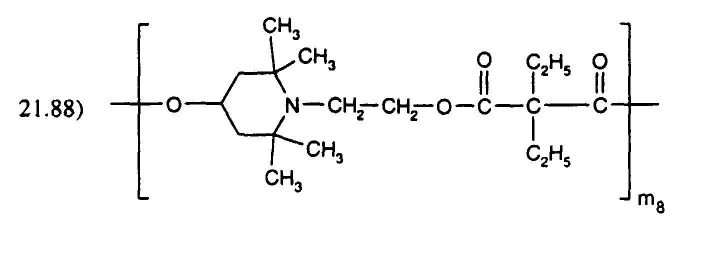
In the compound (21.88), the end group bonded to the -O- can be, for example, hydrogen or 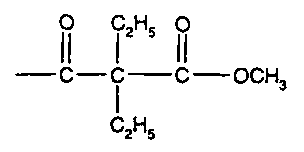 and the end group bonded to the diacyl radical can be, for example, -OCH₃ or Cl. 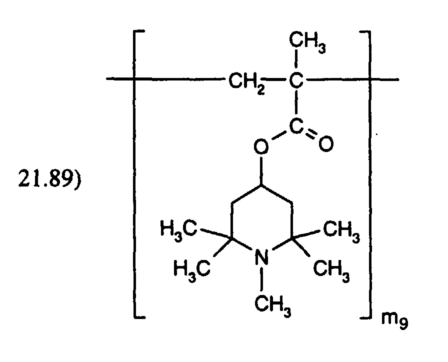
In the compound (21.89), the end group bonded to the -CH₂- can be, for example, hydrogen and the end group bonded to the ester residue can be, for example, 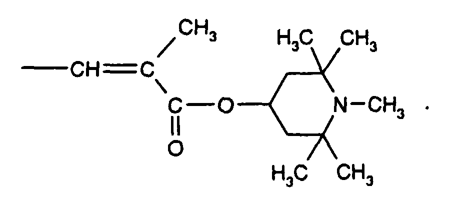 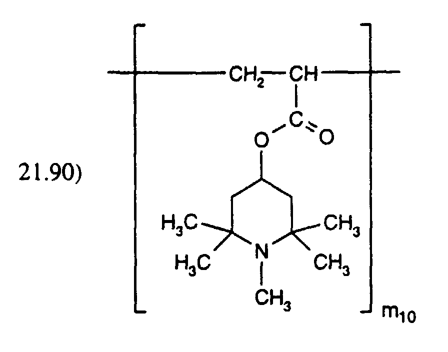
In the compound (21.90), the end group bonded to the -CH₂- can be, for example, hydrogen and the end group bonded to the ester residue can be, for example, 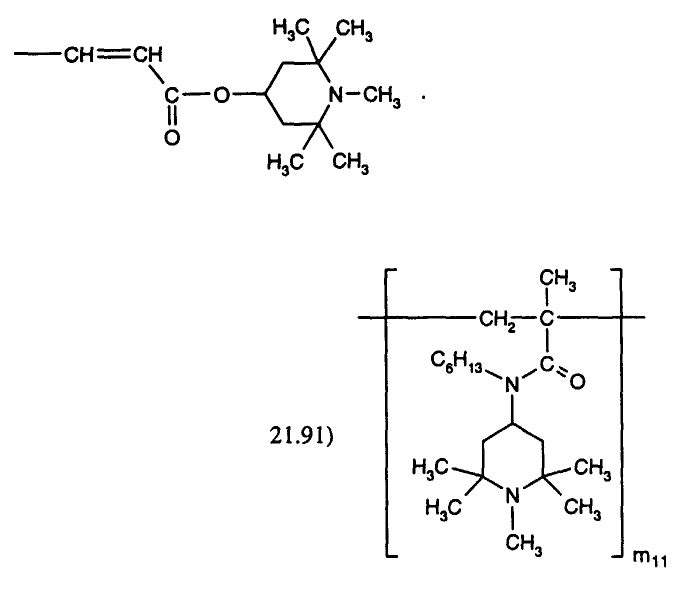
In the compound (21.91), the end group bonded to the -CH₂- can be, for example. hydrogen and the end group bonded to the amide residue can be, for example, 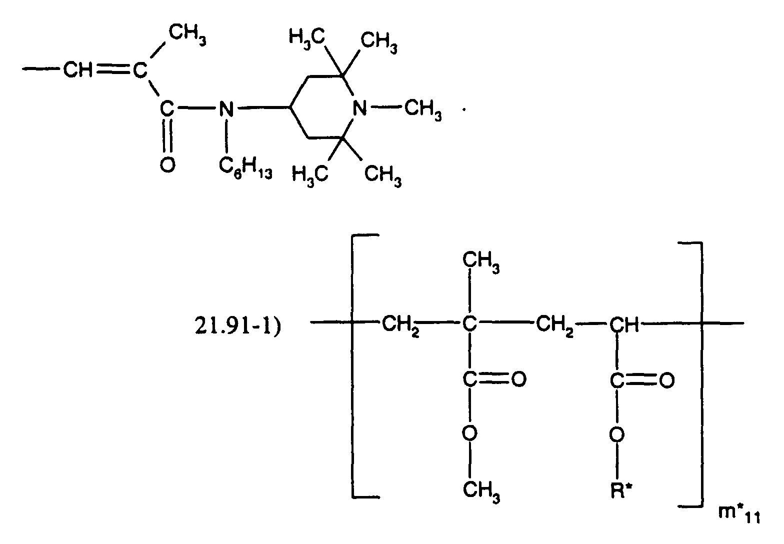 wherein m₁₁* is as defined for m₁₁, the radicals R* independently of one another are ethyl or 2,2,6,6-tetramethylpiperidin-4-yl, with the proviso that at least 50 % of the radicals R* are 2,2,6,6-tetramethylpiperidin-4-yl and the remaining radicals R* are ethyl. In the compound (21.91-1), the terminal groups are for example hydrogen. 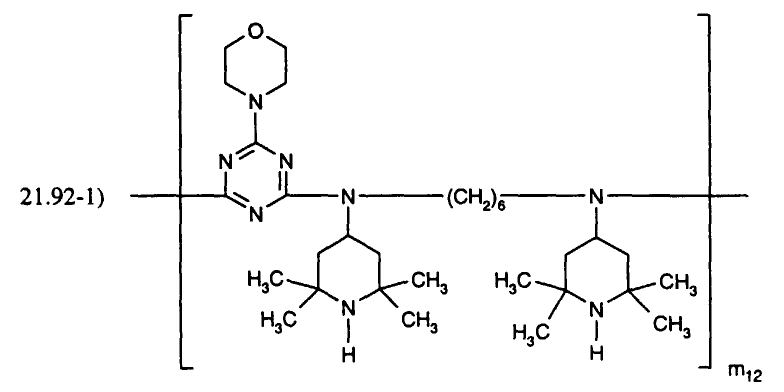 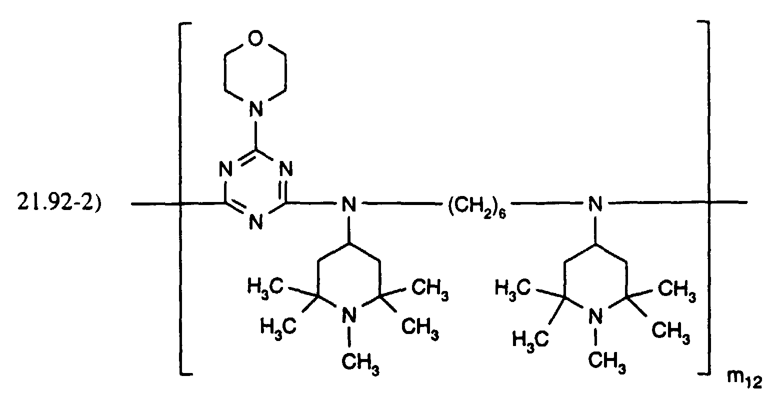
In the compounds (21.92-1) and (21.92-2), the end group bonded to the triazine residue can be, for example, chlorine or a group 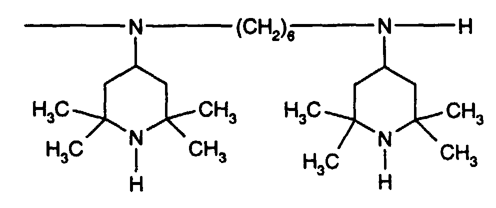 in the compound (21.92-1), and
a group 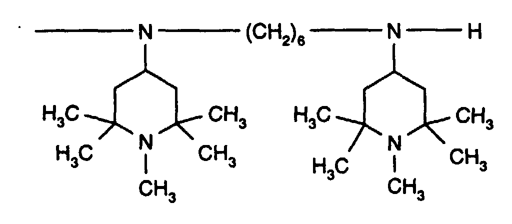 in the compound (21.92-2),
and the end group bonded to the diamino residue can be, for example, hydrogen or a group 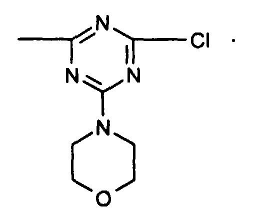
It may be convenient to replace the chlorine attached to the triazine by e.g. -OH or an amino group. Suitable amino groups are typically: pyrrolidin-1-yl, morpholino, -NH₂, -N(C₁-C₈alkyl)₂ and -NY'(C₁-C₈alkyl) wherein Y' is hydrogen or a group of the formula 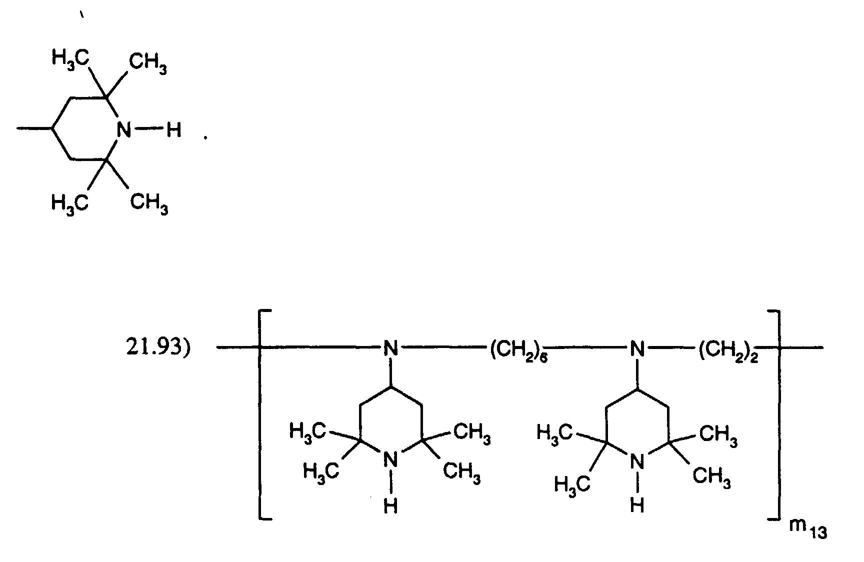
In the compound (21.93), the end group bonded to the diamino residue can be, for example, hydrogen and the end group bonded to the -CH₂CH₂- residue can be, for example, 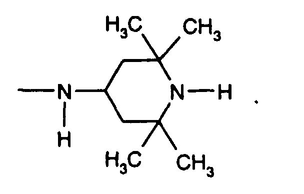 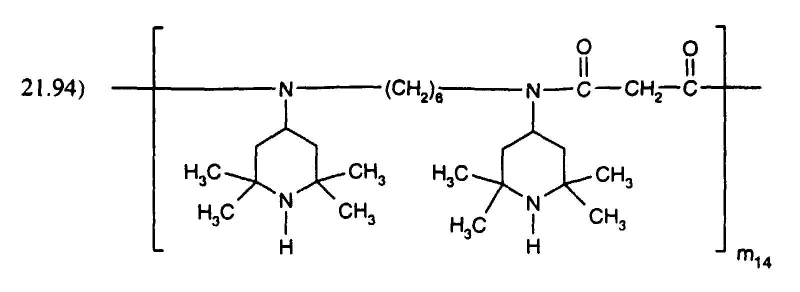
In the compound (21.94), the end group bonded to the diamino residue can be, for example, hydrogen and the end group bonded to the diacyl residue can be, for example, Cl. 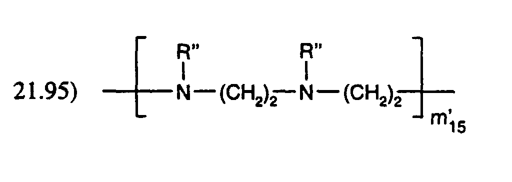
in which R'' is a group of the formula 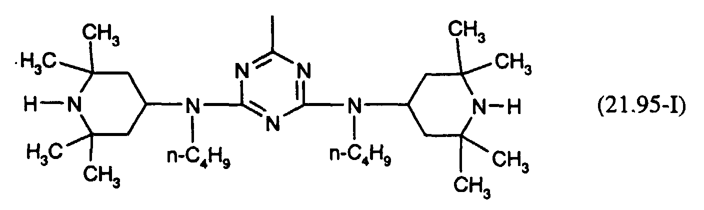 or the chain branching 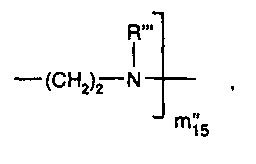
R''' is a group of the formula (95-I), and
m'₁₅ and m''₁₅ are each a number from 0 to 200, preferably 0 to 100, in particular 0 to 50, with the proviso that m'₁₅ + m''₁₅ is a number from 2 to 200, preferably 2 to 100, in particular 2 to 50. In the compound 95, the end group bonded to the diamino residue can be, for example, hydrogen and the end group bonded to the -CH₂CH₂- group can be, for example, halogen, in particular Cl or Br.

21.96) the compound of the formula (21.96-I) or (21.96-II) 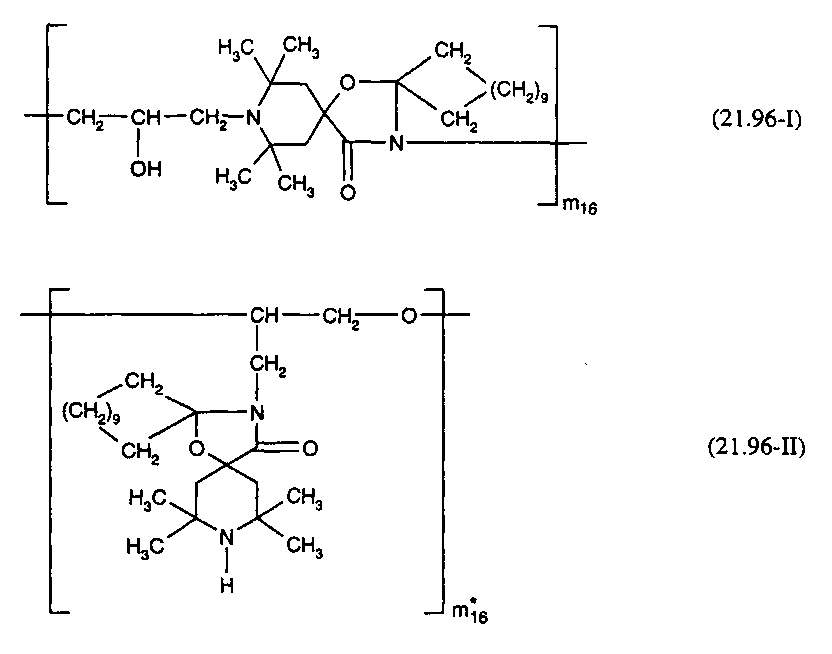 wherein m₁₆ and m₁₆^{*} are a number from 2 to 50.
During the preparation, the compounds of the formulae (21.96-I) and (21.96-II) can be obtained together as a mixture and therefore, can also be employed as such. The (21.96-I):(21.96-II) ratio is, for example, from 20:1 to 1:20 or from 1:10 to 10:1.
In the compounds of the formula (21.96-I), the terminal group bonded to the nitrogen can be, for example, hydrogen and the terminal group bonded to the 2-hydroxypropylene radical can be, for example, a 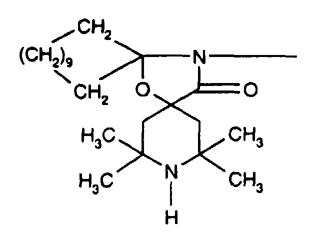 group.
In the compounds of the formula (21.96-II), the terminal group bonded to the dimethylene radical can be, for example, -OH, and the terminal group bonded to the oxygen can be, for example, hydrogen. The terminal groups can also be polyether radicals. 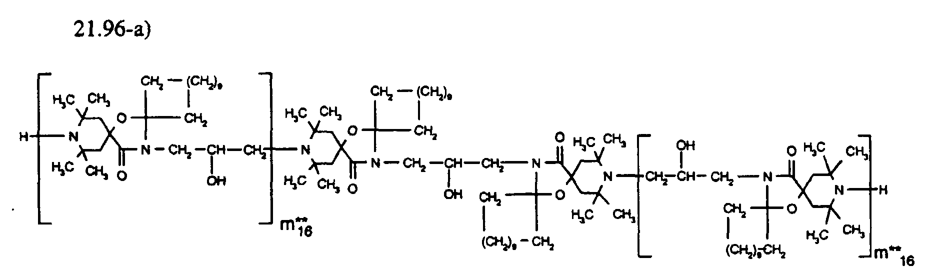 wherein the variables m₁₆** are independently of one another as defined for m₁₆. 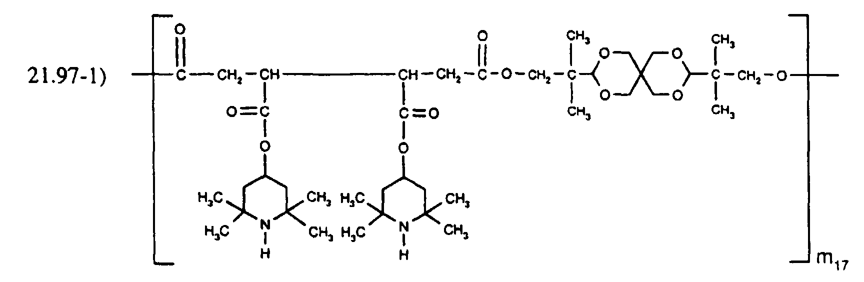 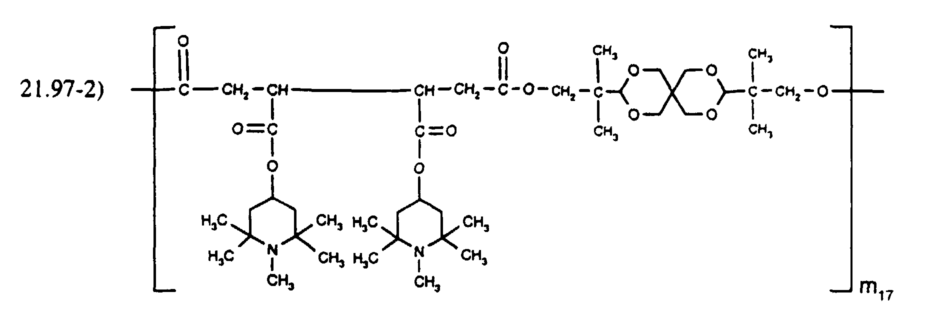
In the compounds (21.97-1) and (21.97-2) the mean value of m₁₇ is 2.5 and the end group bonded to the >C=O group can be, for example, 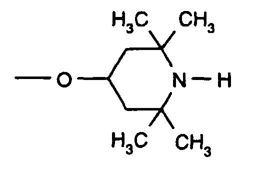 in the compound (21.97-1) and 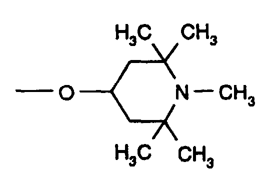 in the compound 97-2); and the end group bonded to the oxygen can be, for example 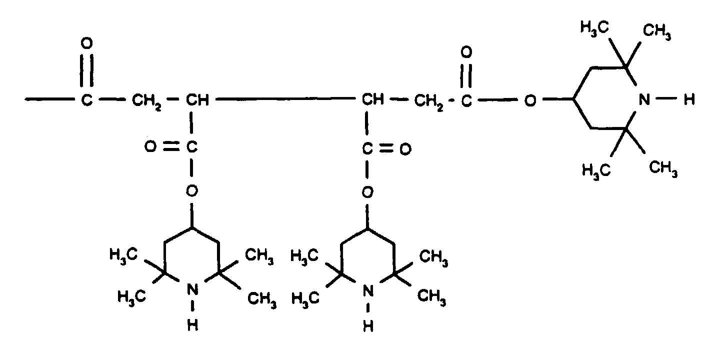 in compound (21.97-1) and 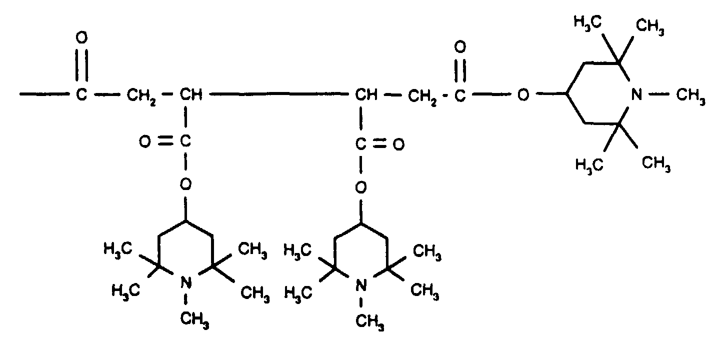 in compound 21.97-2). 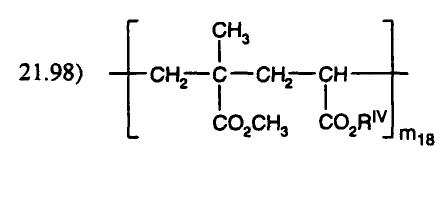 wherein approximately one third of the radicals R^{IV} are -C₂H₅ and the others are a 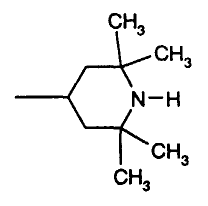 group and m₁₈ is a number in the range from 2 to 200, preferably 2 to 100, in particular 2 to 50.
In the compound (21.98), the end group bonded to the -CH₂- residue can be, for example, hydrogen and the end group bonded to the -CH(CO₂R^{IV})- residue can be, for example, -CH=CH-COOR^{IV}. 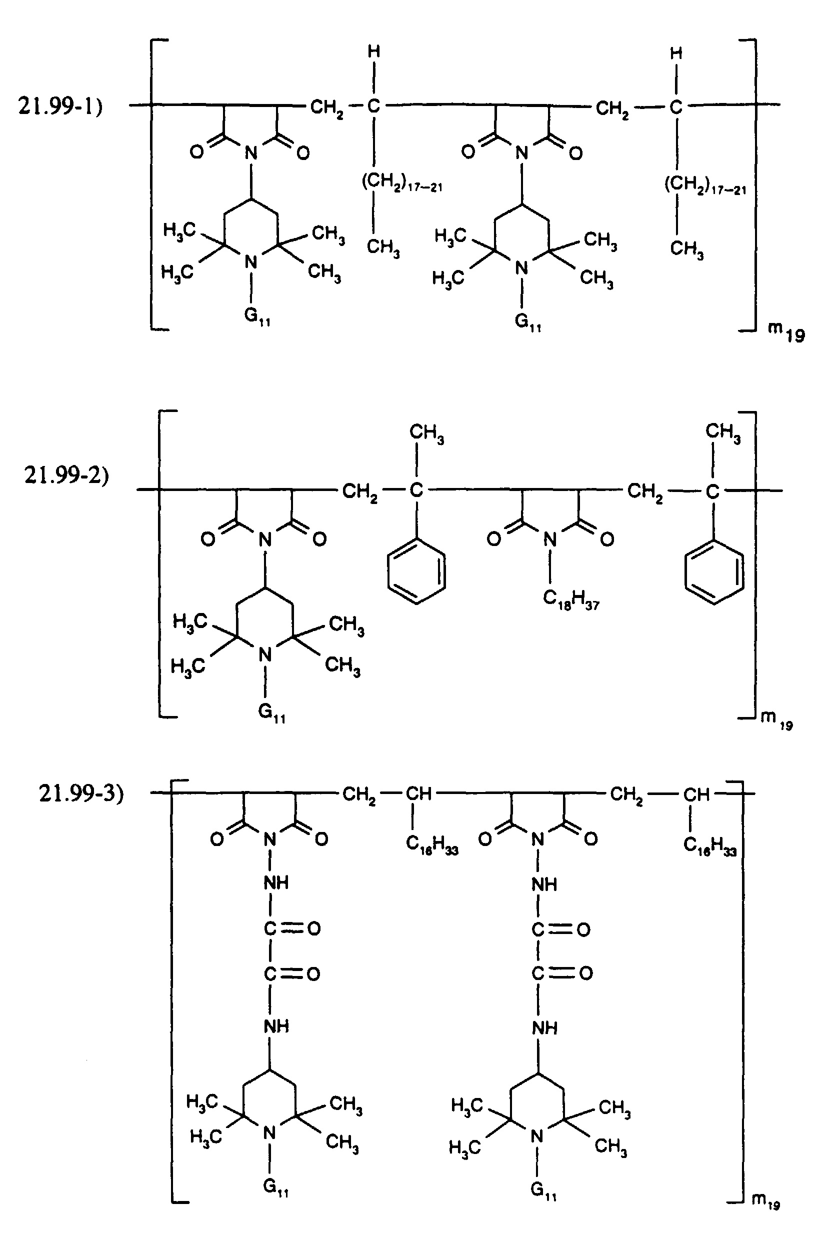
In the compounds (21.99-1), (21.99-2) and (21.99-3), G₁₁ is hydrogen or methyl, and m₁₉ is a number from 1 to 25.
In the compounds (21.99-1), (21.99-2) or (21.99-3), the end group bonded to the 2,5-dioxopyrrolidine ring can be, for example, hydrogen, and the other end group can be, for example, a group of the formula 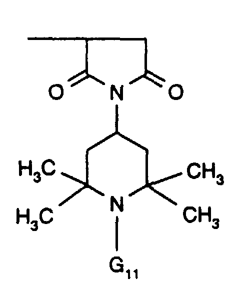 in the compounds (21.99-1) and (21.99-2), and a group of the formula 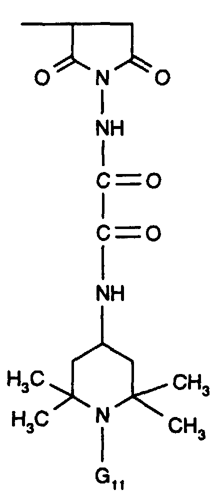 in compound (21.99-3).
21.100) A product obtainable by reacting a product, obtained by reaction of a polyamine of the formula (21.100a) with cyanuric chloride, with a compound of the formula (21.100b) 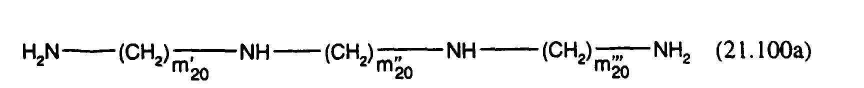 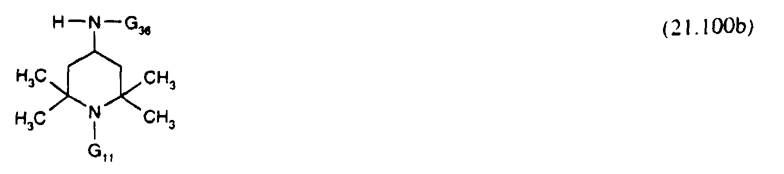 in which m'₂₀, m''₂₀ and m'''₂₀, independently of one another, are a number from 2 to 12, G₃₆ is hydrogen, C₁-C₁₂alkyl, C₅-C₁₂cycloalkyl, phenyl or C₇-C₉phenylalkyl, and G₁₁ is hydrogen or methyl. The product with G₁₁ being hydrogen has the Chemical Abstracts-CAS No. 136 504-96-6.
In general, the above reaction product can be represented for example by a compound of the formula (21.100-1), (21.100-2) or (21.100-3). It can also be in the form of a mixture of these three compounds. 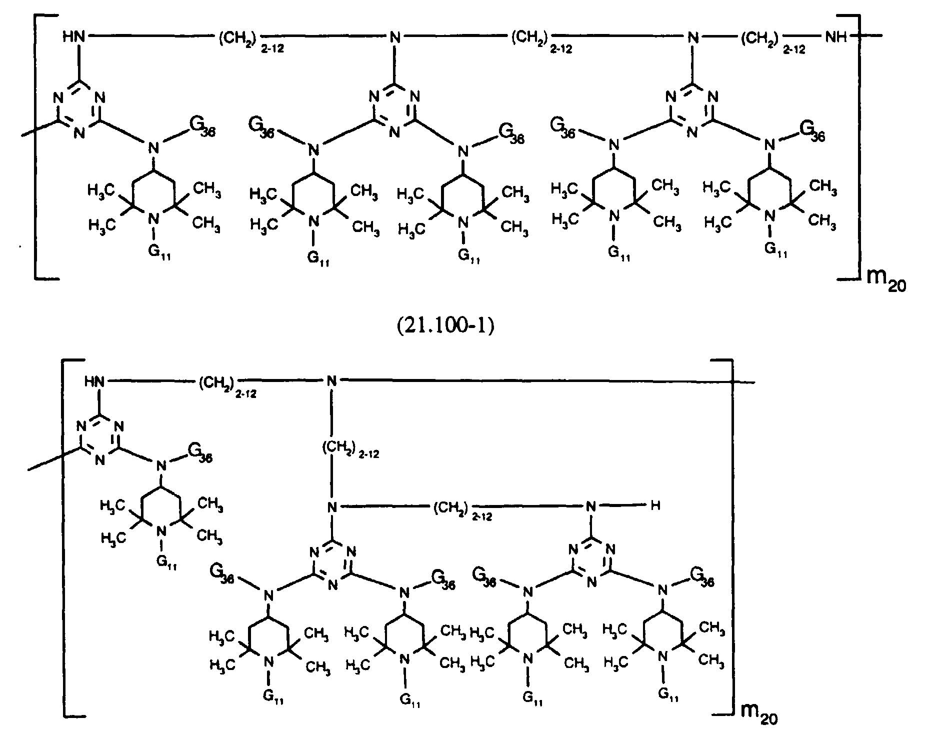 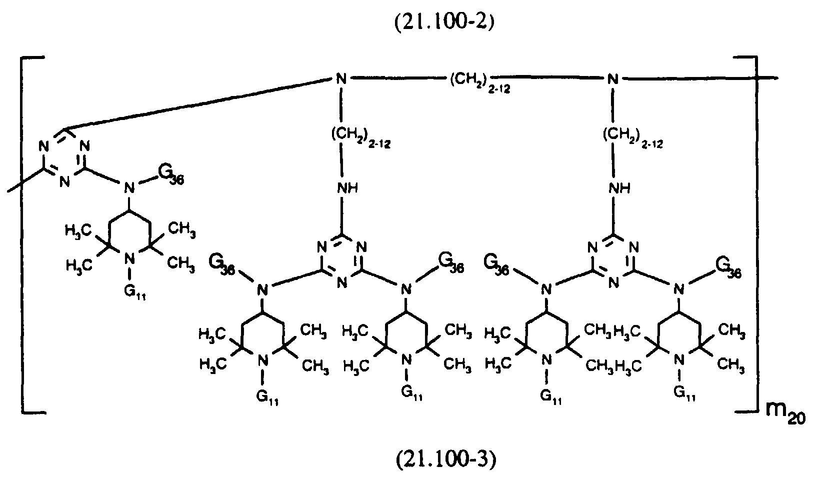
A preferred meaning of the formula (21.100-1) is 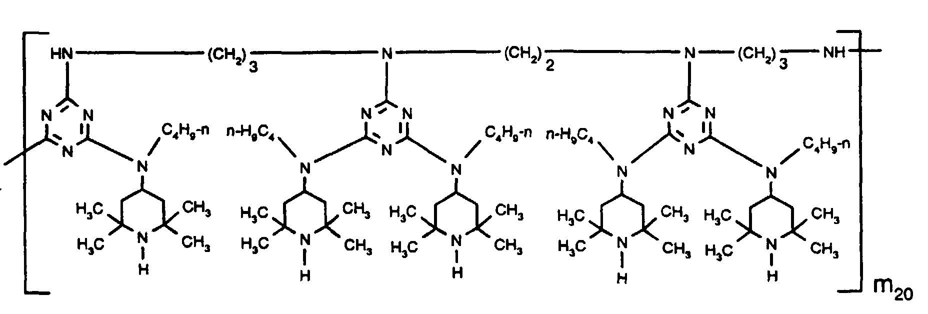
A preferred meaning of the formula (21.100-2) is 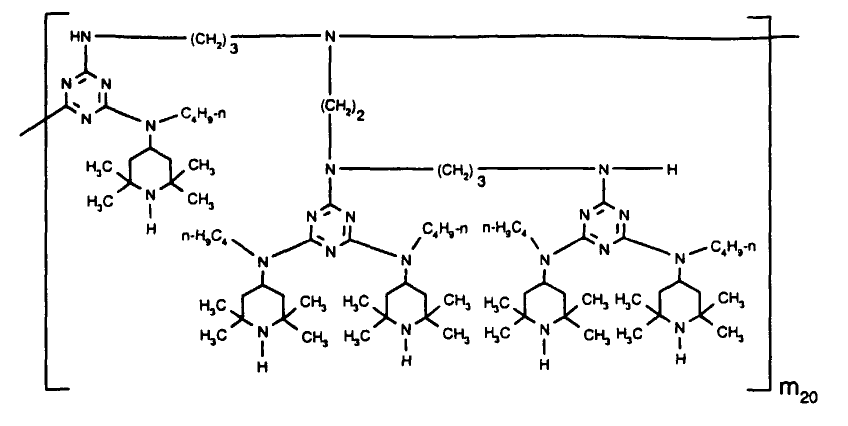
A preferred meaning of the formula (21.100-3) is 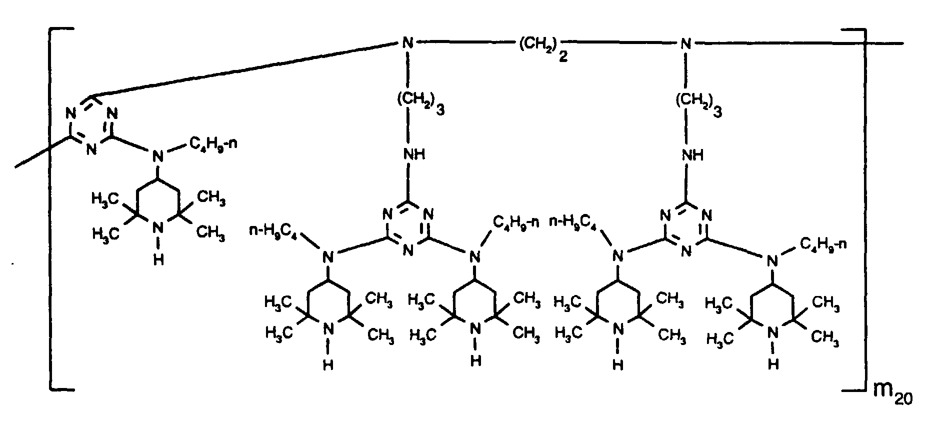
In the above formulae (21.100-1) to (21.100-3), m₂₀ is e.g. 1 to 20, preferably 2 to 20. 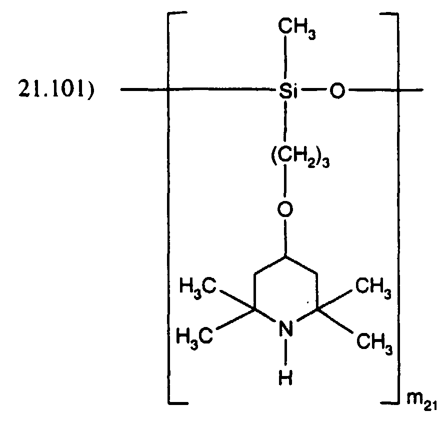 with m₂₁ being a number from 1 to 20.
In the compound (21.101), the terminal group bonded to the silicon atom can be, for example, (CH₃)₃Si-O-, and the terminal group bonded to the oxygen can be, for example,-Si(CH₃)₃.
The compounds (21.101) can also be in the form of cyclic compounds if m₂₁ is a number from 3 to 10, i.e. the free valences shown in the structural formula then form a direct bond. 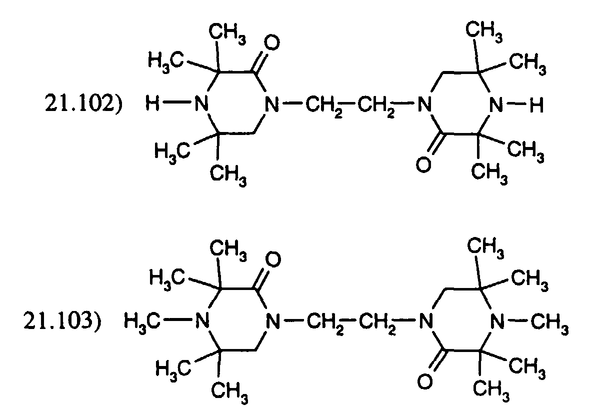 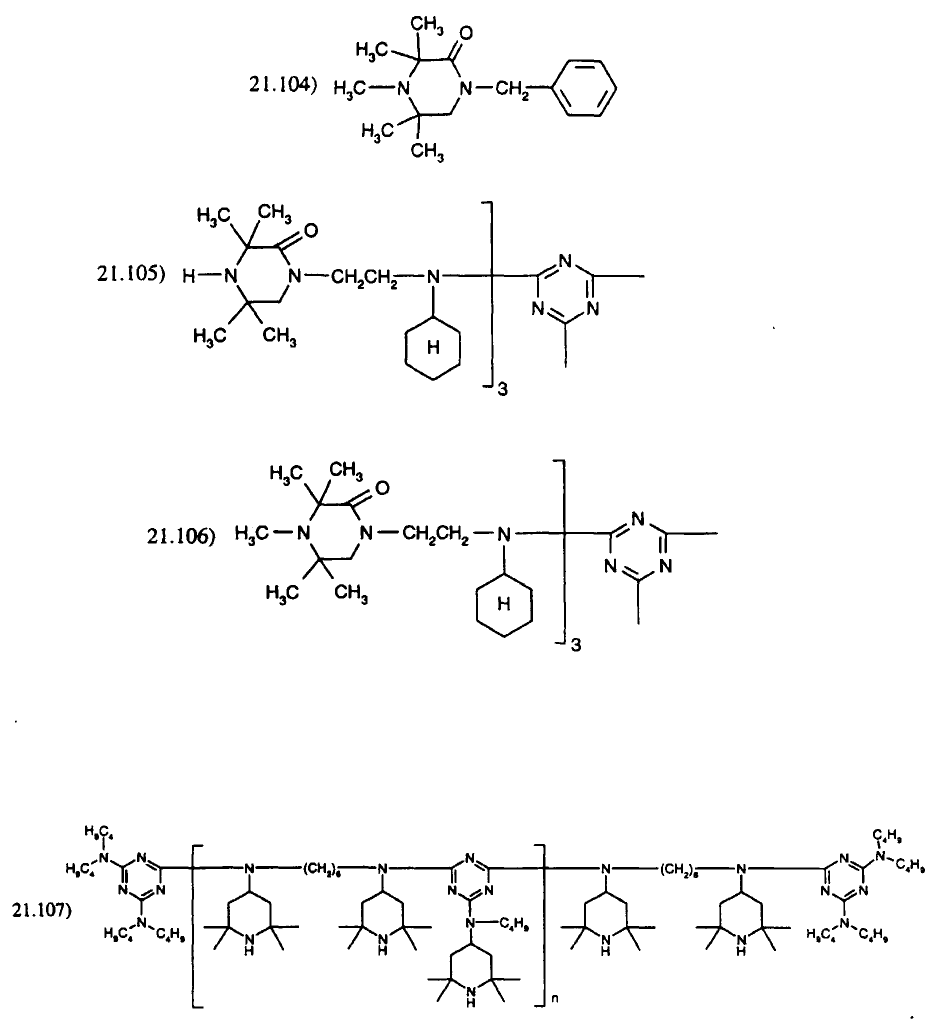
The sterically hindered amine of section 21.) can also be one of the compounds described in GB-A-2,301,106 as component I-a), I-b), I-c), I-d), I-e), I-f), I-g), I-h), I-i), I-j), I-k) or I-l), in particular the light stabilizer 1-a-1, 1-a-2, 1-b-1, 1-c-1, 1-c-2, 1-d-1, 1-d-3, 1-e-1, 1-f-1, 1-g-1, 1-g-2 or 1-k-1 listed on pages 68 to 73 of said GB-A-2,301,106.
The sterically hindered amine of section 21.) may also be one of the compounds described in EP 782994, for example compounds as described in claims 10 or 38 or in Examples 1-12 or D-1 to D-5 therein.
Blends of the high molecular weight hindered hydrocarbyloxyamine of formula (A) with commercially available hindered amines are particularly useful as stabilizers for organic materials, especially polyolefins. For example blends of a compound of formula (A) with each of the following:

| | | |
|---|---|---|
| TINUVIN® 770 | TINUVIN® 123 | TINUVIN® 765 |
| TINUVIN® 440 | TINUVIN® 144 | CHIMASSORB® 966 |
| DASTIB® 845 | DIACETAM® 5 | GOODRITE® UV 3034 |
| GOODRITE® UV 3150 | GOODRITE® UV 3159 | CYASORB® UV 3581 |
| CYASORB® UV 3604 | HOSTAVIN® N 20 | HOSTAVIN® N 24 |
| MARK® LA 52 | MARK® LA 57 | MARK® LA 62 |
| MARK® LA 67 | SUMISORB® TM 61 | UVINUL® 4049 |
| UVINUL® 4050 H | SANDUVOR® 3050 | SANDUVOR® PR-31 |
| UVASIL® 299 LM | UVASIL® 2000 LM | TINUVIN® 622 |
| CHIMASSORB® 944 | CHIMASSORB® 119 | CYASORB® UV 3346 |
| CYASORB® UV 3529 | DASTIB® 1082 | FERRO® AM 806 |
| LUCHEM® HA-B18 | HOSTAVIN® N 30 | MARK® LA 63 |
| MARK® LA 68 | UVINUL® 5050 H | UVASIL® 299 HM |
| UVASIL® 2000 HM | UVASORB® HA 88 | CHIMASSORB® 2020 |
| LICHTSCHUTZSTOFF® UV 31 | | |

Particularly preferred are the mixtures with TINUVIN® 770, CYASORB® UV 3581, HOSTAVIN® N 20, MARK® LA 57, UVINUL® 4050 H, SANDUVOR® 3050, UVASIL® 299 LM, UVASIL® 2000 LM, TINUVIN® 622, CMIMASSORB® 944, CYASORB^{®} UV 3346, HOSTAVIN® N 30, UVASIL® 299 HM, UVASIL® 2000 HM, UVASORB® HA 88 and CHIMASSORB® 2020.
22.) Sterically hindered amines substituted on the N-atom by a hydroxy-substituted alkoxy group, for example compounds such as 1-(2-hydroxy-2-methylpropoxy)-4-octadecanoyloxy-2,2,6,6-tetramethylpiperidine, 1-(2-hydroxy-2-methylpropoxy)-4-hydroxy-2,2,6,6-tetranethyl-piperidine, 1-(2-hydroxy-2-methylpropoxy)-4-oxo-2,2,6,6-tetramethylpiperidine, bis(1-(2-hydroxy-2-methylpropoxy)-2,2,6,6-tetramethylpiperidin-4-yl) sebacate, bis(1-(2-hydroxy-2-methylpropoxy)-2,2,6,6-tetramethylpiperidin-4-yl) adipate, bis(1-(2-hydroxy-2-methylpropoxy)-2,2,6,6-tetramethylpiperidin-4-yl) succinate, bis(1-(2-hydroxy-2-methylpropoxy)-2,2,6,6-tetramethylpiperidin-4-yl) glutarate and 2,4-bis {N-[1-(2-hydroxy-2-methylpropoxy)-2,2,6,6-tetramethylpiperidin-4-yl]-N-butylamino}-6-(2-hydroxyethylamino)-s-triazine.

The weight ratio of the hindered hydrocarbyloxyamine of component (b) to the additional hindered amine of sections 21.) or 22.) is preferably 20:1 to 1:20, for example 10:1 to 1:10, 5:1 to 1:5, 3:1 to 1:3 or 2:1 to 1:2, in particular 1:1.

Preferably, the organic material of component (a) is a natural, semi-synthetic or synthetic polymer, especially a thermoplastic polymer.

Most preferably, the polymer is a polyolefin, for example a thermoplastic polyolefin useful in automotive coatings and applications or a urethane based automotive coating.

The present compounds of component (b) exhibit superior hydrolytic stability, handling and storage stability as well as good resistance to extractability when present in a stabilized composition.

In general polymers which can be stabilized include:
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optimally can be crosslinked), for example high density polyethylene (HDPE), low density polyethylene (LDPE), linear low density polyethylene (LLDPE), branched low density polyethylene (BLDPE).
   Polyolefins, i.e. the polymers of monoolefins exemplified in the preceding paragraph, preferably polyethylene and polypropylene, can be prepared by different, and especially by the following, methods:
   a) radical polymerization (normally under high pressure and at elevated temperature).
   b) catalytic polymerization using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either p- or s-coordinated. These metal complexes may be in the free form or fixed on substrates, typically on activated magnesium chloride, titanium(III) chloride, alumina or silicon oxide. These catalysts may be soluble or insoluble in the polymerization medium. The catalysts can be used by themselves in the polymerization or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid co polymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrenebutadiene/alkyl acrylate, styrene/butadiene/alkyl methacrylate, styrene/maleic anhydride, styrene/ acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/ styrene.
7. Graft copolymers of styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl arylates or polyalkyl methacrylates, styrene and acrylonitrile on acrylatebutadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bis-glycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate and polyhydroxybenzoates, as well as block copolyether esters derived from hydroxyl-terminated polyethers: and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, polyisocyanates or epoxy resins.
26. Crosslinked epoxy resins derived from polyepoxides, for example from bis glycidyl ethers or from cycloaliphatic diepoxides.
27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
28. Blends of the aforementioned polymers (polyblends), for example PP/EPDM, Polyamide/-EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.
31. Polysiloxanes such as the soft, hydrophilic polysiloxanes described, for example, in U.S. Patent No. 4,259,467; and the hard polyorganosiloxanes described, for example, in U.S. Patent No. 4,355,147.
32. Polyketimines in combination with unsaturated acrylic polyacetoacetate resins or with unsaturated acrylic resins. The unsaturated acrylic resins include the urethane acrylates, polyether acrylates, vinyl or acryl copolymers with pendant unsaturated groups and the acrylated melamines. The polyketimines are prepared from polyamines and ketones in the presence of an acid catalyst.
33. Radiation curable compositions containing ethylenically unsaturated monomers or oligomers and a polyunsaturated aliphatic oligomer.
34. Epoxymelamine resins such as light-stable epoxy resins crosslinked by an epoxy functional coetherified high solids melamine resin such as LSE-4103 (Monsanto).

The stabilizer(s) of component (b) and optional further stabilizers are preferably present in the material to be stabilized in an amount of 0.01 to 10% by weight, relative to the material to be stabilized. An amount of 0.01 to 5% by weight or 0.05 to 2% by weight, in particular 0.05 to 0.5% by weight is especially preferred.

The stabilizer(s) of component (b) and optional further stabilizers may be added to the material to be stabilized of component (a), e.g. the polyolefin, individually or mixed with one another. If desired, the individual components of a stabilizer mixture can be mixed with one another in the melt (melt blending) before incorporation into the material to be stabilized.

The incorporation of component (b) and optional further additives into the material to be stabilized is carried out by known methods such as dry mixing in the form of a powder, or wet mixing in the form of solutions or suspensions. Component (b) and optional further additives may be incorporated, for example, before or after molding or also by applying the dissolved or dispersed stabilizer mixture to the material to be stabilized, with or without subsequent evaporation of the solvent. The stabilizer(s) of component (b) and optional further additives can also be added to the material to be stabilized in the form of a masterbatch which contains these components in a concentration of, for example, about 2.5 % to about 25 % by weight; in such operations, the polymer can be used in the form of powder, granules, solutions, suspensions or in the form of latices.

Component (b) and optional further additives can also be added before, during or after polymerization or crosslinking.

Component (b) and optional further additives can be incorporated into the material to be stabilized in pure form or encapsulated in waxes, oils or polymers.

Component (b) and optional further additives can also be sprayed onto the material to be stabilized. They are able to dilute other additives (for example the conventional additives indicated above) or their melts so that they can be sprayed also together with these additives onto the material to be stabilized. Addition by spraying during the deactivation of the polymerization catalysts is particularly advantageous, it being possible to carry out spraying using, for example, the steam used for deactivation.

In the case of spherically polymerized polyolefins it may, for example, be advantageous to apply components (b) and optionally together with other additives, by spraying.

The compositions comprising a high molecular weight sterically hindered hydrocarbyloxyamine of formula (A) are useful for many applications including the following:

| | |
|---|---|
| Thermoplastic olefins | Paintable thermoplastic olefins |
| Polypropylene molded articles | Polypropylene fiber |
| Polyethylene film | Polyethylene film for greenhouse |
| Polyethylene agricultural mulch film | Polypropylene fiber with brominated flame retardants |
| Molded polypropylene with brominated flame retardants | |
| | Molded thermoplastic olefin with brominated flame retardants |
| Polethylene film with brominated flame retardants | |
| | Thermoplastic elastomers with other costabilizers |
| Grease-filled wire and cable insulation | |
| | Gamma-irradiated polyolefins |
| Coatings over plastic substrates | Polycarbonate blends, e.g. PC/ABS, PC/PA |
| Polyolefin tanks or containers containing chemicals | |
| | Polyethylene gas pipes |
| Polypropylene non-woven fabric for agricultural applications, e.g. shade cloth | Polyolefin films with an antifog agent |
| | Polyolefin films with IR thermal fillers such as hydrotalcites, e.g. DHT4A |
| Polyolefin films with an antistatic agent | |
| Polypropylene tape or slit film | Polypropylene non-woven fabrics |
| Polyethylene non-woven fabrics | Flame-resistant molded polypropylene articles |
| Flame-resistant polypropylene fiber | |
| | Flame-resistant molded thermoplastic olefins |
| Flame-resistant polethylene film | |
| Automotive coatings | Two-component polyester urethane coatings |
| Two-component acrylic urethane coatings | |
| | Water-borne wood varnishes |
| Pigmented Automotive OEM coatings | |
| | High solids acid catalyzed thermoset acrylic resin enamels |
| White polyester/melamine based oil-free alkyd coil coatings | |
| | Tung oil phenolic varnishes |
| Aromatic urethane varnishes | |
| | Acrylic alkyd refinish enamels |
| Medium oil alkyd enamels | |
| | Electrocoat compositions |
| Abrasion resistant coating compositions | |
| | Coatings over polycarbonate |
| Chromogenic photographic layers | |
| | Glycidyl methacrylate-based powder clearcoats |
| Oil modified urethane alkyds for wood applications | |
| | Pre-formed films for lamination to plastic substrates |
| Polyolefin articles in contact with chlorinated water, e.g. polyethylene or polypropylene pressure pipes, optionally containing acid scavengers and/or benzofuranones | |

The materials containing the stabilizer mixtures described herein can be used for the production of moldings, rotomolded articles, injection molded articles, blow molded articles, films, tapes, mono-filaments, fibers, surface coatings and the like.

In the above compositions and application fields, the compound of formula (A) may be fully or partially replaced by the compound mixture of formula (B): 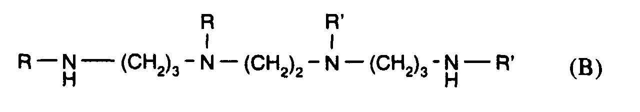 where R is 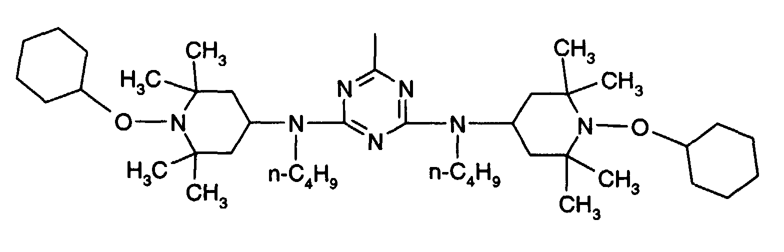 and one of the 2 R' is R and the other is H.

The compound mixture of formula (B), CAS # 191680-81-6, is disclosed in U.S. Patent No. 5,844,026.

Thus, formulations or applications using the compound of formula (B) instead of the compound of formula (A) as component (b) are a further subject of the present disclosure.

Likewise, formulations or applications using a mixture of compounds of formulae (A) and (B) instead of the compound of formula (A) as component (b) are also a further subject of the present disclosure.

The stabilized compositions disclosed herein are further illustrated by the following examples:

### Example 1

### Stabilization of Thermoplastic Olefins

Molded test specimens are prepared by injection molding thermoplastic olefin (TPO) pellets containing pigments, a phosphite, a phenolic antioxidant or hydroxylamine, a metal stearate, ultraviolet light absorbers or a hindered amine stabilizer or a mixture of UV absorber and hindered amine stabilizer.

Pigmented TPO pellets are prepared from pure pigment or pigment concentrate, coadditives and commercially available TPO by mixing the components in a Superior/MPM 1" single screw extruder with a general all-purpose screw (24:1 L/D) at 400°F (200°C), cooled in a water bath and pelletized. The resulting pellets are molded into 60 mil (0.006 inch), 2"x2" plaques at about 375°F (190°C) on a BOY 30M Injection Molding Machine.

Pigmented TPO formulation composed of polypropylene blended with a rubber modifier where the rubber modifier is an in-situ reacted copolymer or blended product containing copolymers of propylene and ethylene with or without a ternary component such as ethylidene norbornene are stabilized with a base stabilization system consisting of an N,N-dialkylhydroxylamine or a hindered phenolic antioxidant with or without an organophosphorus compound.

All additive and pigment concentrations in the final formulation are expressed as weight percent based on the resin.

Formulations contain thermoplastic olefin pellets and one or more of the following components:
0.0 to 2.0% pigment,
0.0 to 50.0% talc,
0.0 to 0.1% phosphite,
0.0 to 1.25% phenolic antioxidant,
0.0 to 0.1% hydroxylamine
0.05 to 0.10 calcium stearate,
0.0 to 1.25% UV absorber
0.0 to 1.25% hindered amine stabilizer.

The components are dry-blended in a tumble dryer prior to extrusion and molding.

Test plaques are mounted in metal frames and exposed in an Atlas Ci65 Xenon Arc Weather-Ometer at 70°C black panel temperature, 0.55 W/m² at 340 nanometers and 50% relative humidity with intermittent light/dark cycles and water spray (Society of Automotive Engineers - SAE J 1960 Test Procedure). Specimens are tested at approximately 625 kilojoule intervals by performing color measurements on an Applied Color Systems spectrophotometer by reflectance mode according to ASTM D 2244-79. Data collected include delta E, L*, a* and b* values. Gloss measurements are conducted on a BYK-Gardner Haze/Gloss Meter at 60° according to ASTM D 523.

### UV Exposure Testing

Test specimens exposed to UV radiation exhibit exceptional resistance to photodegradation when stabilized with light stabilizer systems comprising a combination of 2-(2-hydroxy-3,5-di-tert-amylphenyl)-2H-benzotriazole (TINUVIN®328, Ciba), a compound of formula (A) or (B) and optionally an additional hindered amine such as N,N',N'',N'''-tetrakis[4,6-bis(butyl-(1,2,2,6,6-pentamethylpiperidin-4-yl)amino)-s-triazin-2-yl]-1,10-diamino-4,7-diazadecane (CHIMASSORB® 119, Ciba) or bis(2,2,6,6-tetramethylpiperidyl) sebacate (Tinuvin® 770). The control sample consists of a stabilizer formulation commonly used in the industry to impart UV stability. All of the samples contain a pigment, Pigment Red 177, and talc.

The test plaques described earlier contain the following (all concentrations are weight percent based on resin):
Polymer substrate is commercially available polyolefin blend POLYTROPE® TPP 518-01 supplied by A. Schulman Inc. Akron, Ohio)
Color package is 0.025% Red 3B -Pigment Red 177, C.I. #65300.

Each plaque contains:
0.2% TINUVIN® 328;
0.1% calcium stearate; and
15% talc.

The Control plaques additionally contain
0.1% IRGANOX® B225 (50:50 blend of IRGANOX® 1010, Ciba (neopentanetetrayl tetrakis(4-hydroxy-3,5-di-tert-butylhydrocinnamate) and IRGAFOS® 168, Ciba [tris-(2,4-di-tert-butylphenyl) phosphite;
0.2% TINUVIN® 770, Ciba [bis(2,2,6,6-tetramethylpiperidin-4-yl) sebacate];
0.2% CHIMASSORB® 944, Ciba [polycondensation product of 4,4'-hexamethylene-bis(amino-2,2,6,6-tetramethylpiperidine) and 2,4-dichloro-6-tert-octylamino-s-triazine].

The five test plaques each contain 0.05% N,N,-dialkylhydroxylamine;
NOR1 additionally contains
   0.2% of CHIMASSORB® 119; and
   0.2% of TINUVIN® 123, Ciba, [bis(1-octyloxy-2,2,6,6-tetramethylpiperidin-4-yl) sebacate].
NOR2 additionally contains
   0.2% of CHIMASSORB® 119; and
   0.2% of the compound of formula (A)
NOR3 additionally contains
   0.2% of CHIMASSORB® 119; and
   0.2% of the compound of formula (B)
NOR4 additionally contains
   0.4 % of the compound of formula (A)
NOR5 additionally contains
   0.4 % of the compound of formula (B).

The test plaques NOR2-NOR5, containing the present hindered amines of formula (A) or (B), show improved gloss retention compared to the plaques with the less effective control system and the plaques containing the related hindered amine compound, TINUVIN® 123, present in test plaques NOR1. Resistance to color change upon UV exposure is also enhanced.

Polymer blends containing an unsaturated ternary component, such as EPDM blends, are especially benefited with the more efficient instant light stabilizer systems described above.

In all cases, the light stabilized formulations show much greater resistance to photodegradation than unstabilized specimens which fail quickly under the UV exposure conditions outlined above.

### Example 2

### Paintable TPO

Molded test specimens are prepared by injection molding thermoplastic olefin (TPO) pellets containing the instant compounds, pigments and other coadditives as described in Example 1.

The light stable formulations are painted with one-pack paint systems and tested for TPO/paint interactions. Before painting, the test specimens are first washed in accordance with GM998-4801 and dried for 15 minutes at 200°F (94°C). Adhesion promoter is applied to the dry film thickness of 0.2-0.4 mils. The samples are dried for five minutes before a 1K basecoat is applied to a film thickness of 1.2-1.4 mils. The painted panels are dried for three minutes, a clearcoat is then applied to a dry film thickness of 1.2-1.5 mils followed by ten minutes flash drying and a 30 minute oven bake at 250°F (121°C).

Paint adhesion is measured by Aggressive Adhesion Testing (proprietary test procedure conducted at Technical Finishing, Inc.) and Taber Scuff. Painted panels which retain greater than 80% of the paint finish are considered acceptable. After Aggressive Adhesion Testing, samples with less than 5% paint loss are deemed acceptable.

The control formulation contains 0.2% of bis(2,2,6,6-tetramethylpiperidin-4-yl) sebacate (TINUVIN® 770), 0.2% CHIMASSORB® 944, 0.2% TINUVIN® 328, 500 ppm calcium stearate and 750 ppm N,N-dialkylhydroxylamine in reactor-grade TPO.

Formulations A and B each contain 0.2% CHIMASSORB® 119,0.2% TINUVIN® 328, 500 ppm calcium stearate and 750 ppm N,N-dialkylhydroxylamine in reactor-grade TPO.

Formulations A and B also contain 0.2% of one of the compounds of formulae (A) and (B) respectively.

Formulations C and D each contain 0.2% TINUVIN® 328, 500 ppm calcium stearate and 750 ppm N,N-dialkylhydroxylamine in reactor-grade TPO.

Formulations C and D also contain 0.4% of one of the compounds of formulae (A) and (B) respectively.

Formulations A-D are superior to the control formulation as measured by the Taber Scuff and Aggressive Adhesion Tests.

### Example 3

### Paintable TPO

Molded test specimens are prepared by injection molding thermoplastic olefin (TPO) pellets containing the instant compounds, pigments and other coadditives as described in Example 2.

The test specimens are painted with one-pack paint systems and tested for TPO/paint interactions. Before painting, the test specimens are first wiped with iso-propanol and air blasted to remove any dust. After a five minute flash, these specimens are coated with the adhesion promoter, then the base coat, and then optionally a clear coat. Typical film thickness of these various coatings are 0.1-0.3 mils for the adhesion promoter, 0.6-0.8 mils for the base coat, and 1.2-1.5 mils for the clear coat. After painting, the specimens are cured in an over at 120°C for 30 minutes.

Samples are tested to evaluate the TPO/paint interactions as follows: In the initial adhesion test, a clear cellophane adhesive tape is used to pull on a 3 mm cross hatched paint surface or; in the humidity test, the painted plaques are exposed for 240 hours at 38°C in an atmosphere having 98% relative humidity. The blister rating is tested by visual observation according to ASTM D 714.

The samples containing the present compounds of formulae (A) and (B) exhibit good TPO/paint interaction properties as determined by the criteria above.

### Example 4

### Coatings over Plastic Substrates

A major application for hindered amines is in the protection of automotive topcoats applied over plastic substrates. However, many low molecular weight, non-reactable light stabilizers migrate into the plastic substrate during drying and cure. As a consequence, a significant portion of the light stabilizer may be lost from the topcoat into the substrate and hence be ineffective in protecting said topcoat.

The extent of migration of hindered amine stabilizers during application and cure of the coating is determined by comparing the concentration of hindered amine in the cured clearcoat applied over a plastic substrate versus the same clearcoat applied over a non-permeable substrate such as glass or steel.

Hindered amine stabilizers under test are incorporated into a flexible thermoset acrylic/melamine clear coating appropriate for use on automotive plastic substrates. The hindered amine is incorporated at a level of 1.5% by weight based on total resins solids.

Each coating formulation is applied by an automatic spray apparatus onto automotive grade RIM (Reacting Injection Molded) substrate and TPO (thermoplastic polyolefin). Both substrates are in the form of 4" x 12" plaques. Each coating is applied to achieve a dry film thickness of approximately 2.0 mils (50 microns). The coatings are cured by baking at 250°F (121°C) for 20 minutes.

Triplicate samples of each cured coating formulation are removed from each substrate and cryo-ground to a fine powder. A known amount of each sample is extracted in refluxing toluene overnight. The hindered amine present is analyzed quantitatively by dilution to a known volume and analyzed by HPLC or SFC chromatography. Calibration curves for each test stabilizer compound are developed. The hindered amine content of each extracted coating is determined by this method.

When the hindered amine is a high molecular weight hindered hydrocarbyloxyamine selected from the present formulae (A) and (B), a higher percent recovery of the hindered amine compound from the clearcoat over a plastic substrate is found indicating that much less of the present hindered amines of component (b) migrate into the plastic substrate; thereby allowing for better stabilization of the clear topcoat over such plastic substrates.

### Example 5

### Stabilization of Polypropylene Molded Articles

Molded test specimens are prepared by injection molding polypropylene pellets containing pigments, a phosphite, a phenolic antioxidant or hydroxylamine, a metal stearate, ultraviolet light absorbers or hindered amine stabilizers or a mixture of UV absorbers and hindered amine stabilizers.

Pigmented polypropylene pellets are prepared from pure pigment or pigment concentrates, stabilizers, co-additives and commercially available polypropylene by mixing the components in a Superior/MPM 1" single screw extruder with a general all-purpose screw (24:1 L/D) at 475°F (250°C), cooled in a water bath and pelletized. The resulting pellets are molded into 60 mil (0.06 inch thick) 2"x2" plaques at about 475°F (250°C) on a BOY 30M Injection Molding Machine.

Pigmented polypropylene formulations composed of polypropylene homopolymer or polypropylene copolymer are stabilized with a base stabilization system consisting of an N,N-dialkylhydroxylamine or a hindered phenolic antioxidant with or without an organophosphorus compound.

All additive and pigment concentrations in the final formulations are expressed as weight percent based on the resin.

Formulations contained polypropylene pellets and one or more of the following components;
0.0% - 2.0% pigment,
0.0% - 50.0% talc,
0.0% - 50.0% calcium carbonate,
0.0% - 0.1% phosphite,
0.0% - 1.25% phenolic antioxidant,
0.0% - 0.1% hydroxylamine,
0.05% - 0.10% calcium stearate,
0.0% - 1.25% UV absorber,
0.0% -1.25% hindered amine stabilizer.

The components are dry blended in a tumble dryer prior to extrusion and molding.

Test plaques are mounted in metal frames and exposed in an Atlas Ci65 Xenon Arc Weather-Ometer at 70°C black panel temperature, 0.55 W/m² at 340 nanometers and 50% relative humidity with intermittent light/dark cycles and water spray (Society of Automotive Engineers - SAE J 1960 Test Procedure). Specimens are tested at approximately 625 kilojoule intervals by performing color measurements on an Applied Color Systems spectrophotometer by reflectance mode according to ASTM D 2244-79. Data collected included delta E, L^{*}, a* and b* values. Gloss measurements are conducted on a BYK-GARDNER Haze/Gloss Meter at 60° according to ASTM D523.

### UV Exposure Testing

Test specimens exposed to UV radiation exhibit exceptional resistance to photodegradation when stabilized with light stabilizer systems comprised of a combination of Tinuvin® 328, a hindered amine stabilizer from sections 21.) or 22.) above and a compound of formula (A) or (B). Test specimens also exhibit exceptional resistance to photodegradation when no additional hindered amine or UV absorber is present and the only light stabilizer is a compound of formula (A) or (B) or a combination thereof. The control sample consists of a stabilizer formulation commonly used in the industry to impart UV stability, a mixture of Tinuvin® 328 and a hindered amine stabilizer. All of the samples contain Pigment Red 177.

Each test sample contains a compound of formula (A) or (B), and optionally a further hindered amine stabilizer from sections 21.) or 22.) above, for example 1-(2-Hydroxy-2-methylpropoxy)-4-octadecanoyloxy-2,2,6,6-tetramethylpiperidine, bis-(1-octyloxy-2,2,6,6-tetramethylpiperidin-4-yl) sebacate (Tinuvin® 123) and bis-(1-cyclohexyloxy-2,2,6,6-tetramethylpiperidin-4-yl) succinate.

All formulations are base stabilized with 0.05% dialklyhydroxylamine in the final resin formulation.

Polymer substrate is a commercially available polypropylene homopolymer - Profax 6501 (commercial supplier Montell Polyolefins).

Color package is 0.25% Red 3B - Pigment Red 177, C.I. # 65300 in the final resin formulation.

Test formulations optionally contain a hydroxyphenyl benzotriazole UV absorber, for example Tinuvin® 328, 2-(2-hydroxy-3,5-di-tert-amylphenyl)-2H-benzotriazole.

Each formulation contains 0.1% calcium stearate.

Samples are 60 mil thick 2" x 2" injection molded plaques.

UV exposures conducted under SAE J 1960 - Exterior Automotive conditions.

All additive and pigment concentrations in the final formulations are expressed as weight percent on the resin.

The formulations containing a hindered hydrocarbyloxyamine of formula (A) or (B) exhibit improved gloss retention and resistance to color change when compared to the control formulation.

In all cases, the light stabilized formulations show much greater resistance to photodegradation than unstabilized specimens which fail quickly under the UV exposure conditions outlined above.

### Example 6

### Polypropylene Fiber

Fiber samples are prepared by extruding fiber-grade polypropylene with a present hindered amine of formula (A) or (B), coadditives and pigments. Typical formulations contain the hindered amines at levels from 0.05 to 2.0%, a metal stearate such as calcium stearate at 0.05 to 0.5%, pigments from 0 to 5%, UV absorbers at levels of 0.05 to 2.0%, phosphites at 0 to 0.1%, phenolic antioxidants at 0 to 1.25%, N,N-dialkylhydroxylamines at 0 to 0.1 % and optionally other hindered amines at levels of 0 to 2.0%. All additive and pigment concentrations in the final formulations are given as weight percent based on the resin.

Pigment concentrates are prepared from pure pigment and polypropylene (PROFAX®, Montell) by mixing the two components in a high shear mixer in a ratio of 25 % pigment and 75 % resin, pressing the resulting resin/pigment mixture on a Wabash Compression molder (Model # 30-1515-4T3) into a tin sheet and dividing the sheet into fine chips for dispersion in polypropylene at reduced concentrations. Alternatively, pigment concentrates are obtained as pigment dispersions in a suitable carrier resin for subsequent blending in fiber at reduced concentrations.

Formulations containing polypropylene, 0.05-0.1% phosphite, 0-1.25% phenolic antioxidant, 0-0.1% dialkylhydroxylamine, 0.05-0.1% calcium stearate, 0-1.25% UV absorber, 0-1.25% hindered amine are dry blended in a tumble dryer, extruded on a Superior/MPM 1" single screw extruder with a general all-purpose screw (24:1 L/D) at 475°F (246°C), cooled in a water bath and pelletized. The resulting pellets are spun into fiber at about 475°F (246°C) on a HILLS Research Fiber Extruder (Model # REM-3P-24) fitted with a 41 hole, delta configuration spinneret. The spun tow is stretched at a draw ratio of 3.2:1 producing a final denier of 615/41.

Fiber samples are knitted into socks on a Lawson-Hemphill Fiber Analysis Knitter, cut into appropriate lengths and exposed in an Atlas Ci65 Xenon Arc Weather-Ometer at 89°C black panel temperature, 0.55 W/m² at 340 nanometers and 50% relative humidity (Society of Automotive Engineers - SAE J 1885 Test Procedure).

Fiber samples are tested by performing color measurements on an Applied Color Systems spectrophotometer by reflectance mode according to ASTM D 2244-79. Identical, but separate, fiber samples are examined for catastrophic failure and the time to failure is recorded.

The samples containing a present compound of formula (A) or (B) exhibit good stabilization performance against the deleterious effects of UV light.

### Example 7

### Polypropylene Fiber

Other socks of propylene fiber as prepared in Example 6 are exposed in a Blue M forced draft oven at 120°C. Failure is determined by the criterion set forth in Example 6. The longer it takes for the catastrophic failure to occur, the more effective is the stabilizing system.

The socks containing a present compound of formula (A) or (B) exhibit good thermal stabilization efficacy.

### Example 8

### UV Stabilization and Water Carry Over Effects in Polypropylene Tapes

1 to 5 g of a hindered hydrocarbyloxyamine of formula (A) or (B), 1 g of tris(2,4-di-ter-butylphenyl) phosphite, 0.5 g of pentaerythritol tetrakis (3-(3,5-di-tert-butyl-4-hydroxyphenyl)propionate) and 1 g of calcium stearate are mixed in a turbomixer with 1000 g of polypropylene powder having a melt index of 2.1 (measured at 230 °C and 2.16 Kg). The final concentration of hindered amine is 0.1% to 0.5% in the PP.

The mixture is extruded at 200-220°C to give polymer granules which are subsequently converted to stretched tapes of 50 microns thickness and 2.5 mm width, using a semi industrial type of apparatus (Leonard-Sumirago(VA)-Italy) and working under the following conditions:
- Extruder temperature: : 210 - 230 °C
- Head temperature: : 240 - 260 °C
- Stretch ratio: : 1 : 6

The tapes thus prepared are mounted on a white card and expose in Weather-Ometer 65 WR (ASTM D 2565-85) with a black panel temperature of 63°C.

The residual tensile strength is measured, by means of a constant velocity tensometer, on a sample taken after various light exposure times; from this, the exposure time (in hours) required to halve the initial tensile strength (T₅₀) is measured.

The tapes containing a present hindered amine of formula (A) or (B) exhibit excellent UV light stability.

Water carry-over is expressed as the rate at which a film or stretched tape can be extruded before water from the water cooling bath is carried along with the film. The higher the water carry-over value, the faster and more economically a film or stretched cape can be processed. It is well known in the art that additives can have an effect on water carry-over. Films containing a present hindered amine of formula (A) or (B) exhibit high production rates.

### Example 9

### Polyethylene Film

Film grade polyethylene is dry blended with approximately 10% by weight of a test additive of formula (A) or (B), and then melt compounded at 200°C into "Masterbatch" pellets. The fully formulated "Masterbatch" pellets are dry blended with polyethylene resin to get the desired final stabilizer concentrations. Typical formulations contain a present compound of formula (A) or (B) at levels from 0.05% to 2.0%, a metal stearate such as calcium stearate at 0.05% to 0.5%, a phosphite at 0% to 0.1%, a phenolic antioxidant at 0% to 1.25%, an N,N-dialkylhydroxylamine at 0% to 0.1% and optionally a hindered amine at 0% to 2.0%. The stabilized fully formulated resin is then blown at 200°C into a 150 micron thick film on a DOLCI film line.

The blown films are exposed in an Atlas Xenon-Arc Weather-Ometer according to ASTM G26 at 63°C bpt, 0.35 W/m² at 340 nm with no spray cycle. Films are tested periodically for any change in elongation using an Instron 112 tensile tester. Failure in this test is determined by observation of the loss of % elongation in the film. The longer it takes for this loss to occur, the more effective is the stabilizer system.

The films containing a present compound of formula (A) or (B) exhibit good light stabilizing efficacy as shown in the following table.

| Compound | Time to 50% Residual Elongation |
|---|---|
| Compound (A) | 7100 hr. |
| Compound (B) | 6500 hr. |
| Chimassorb® 119 | 6200 hr. |

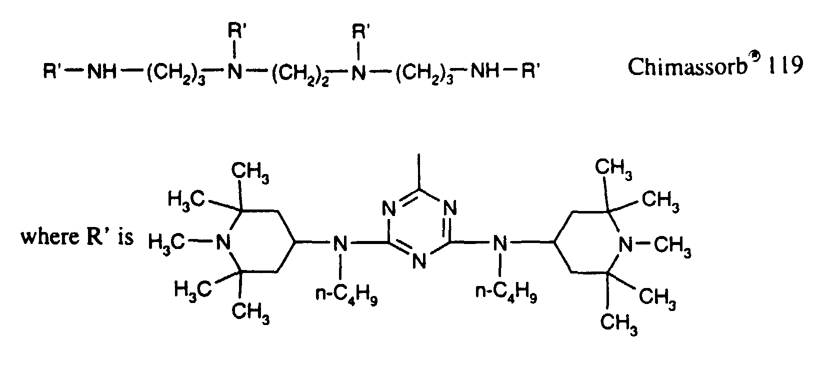

### Example 10

### Polyethylene Film for Greenhouse

Film grade polyethylene is dry blended with 10% loading of a test additive of formula (A) or (B), as described in Example 9, and then melt compounded at 200°C into fully formulated master batch pellets. The master batch pellets are dry blended with the polyethylene resin to get the final stabilizer concentration. The fully formulated resin is then blown at 200°C into a 150 micron thick film using a DOLCI film line.

The resulting films are exposed on a greenhouse on galvanized iron backing. Treatment includes applications of pesticides on a regular basis (i.e. sodium N-methyldithiocarbamate, VAPAM® every six months and SESMETRIN® every month). Performance is measured by monitoring the percent residual elongation. Failure is defined as the time to a 50% loss of original elongation.

The films containing a present compound of formula (A) or (B) show good resistance to pesticides.

The films may further contain commercially available antifog agents such as Atmer® 103, a sorbitan ester, or Atmer® 502, an ethoxylated ether. Such films exhibit good UV light stability and good antifog resistance.

The films may further contain antistatic agents such as glycerol monostearate (GMS) or ethoxylated fatty amines. Such films exhibit good UV light stability and good antistatic properties.

The films may further contain IR thermal fillers such as hydrotalcites, e.g. DHT4A.

### Example 11

### Polyethylene Mulch Film

Master batch pellets prepared as described in Example 9 are dry blended into polyethylene resin to get the final stabilizer concentration. The fully formulated resin is then blown at 200°C into a 25 micron thick film using a DOLCI film line.

The resulting films are exposed on a soil to simulate agricultural mulch film conditions. Treatment includes exposure to methyl bromide fumigant for three days at 60 g/m³. Performance is measured by monitoring the time to physical embrittlement.

The films containing a present compound of formula (A) or (B) show good resistance to fumigants.

### Example 12

### Polyethylene Film for Greenhouse

Greenhouse film samples are prepared as described in Example 10, and in addition to a present compound of formula (A) or (B), also contain a metal stearate and a metal oxide. Typical formulations contain from 0.05 to 2% by weight of a hindered hydrocarbyloxyamine of formula (A) or (B), 0.05 to 0.5% of a metal stearate such as calcium stearate, and 0.05 to 0.5% of a metal oxide such as zinc oxide, magnesium oxide or calcium oxide.

Effectiveness is monitored as described in Example 10. The films containing a present compound of formula (A) or (B) exhibit good light stability.

### Example 13

### Thermoplastic Elastomers

Resin materials of the general class known as thermoplastic elastomers, examples of which include, copolymers of styrene with butadiene or isoprene and/or ethylene-cobutylene such as SBS, SEBS and SIS, are dry blended with a present compound of formula (A) or (B) and melt compounded into pellets. Typical formulations contain the instant compounds at levels from 0.05% to 2.0%, a metal stearate such as calcium stearate at 0.05% to 0.5%, pigments from 0% to 5%, UV absorbers at levels of 0.05% to 2.0%, phosphites at 0.0% - 0.1%, phenolic antioxidants at 0.0% - 1.25%, N,N-dialkylhydroxylamine at 0.0% - 0.1%, and optionally other hindered amine stabilizers at levels of 0.0% to 2.0%.

The pelletized fully formulated resin is then processed into a useful article such as blown or cast extrusion into film; injection molded into a molded article; thermoformed into molded articles; extruded into wire and cable housing; or rotational molded into hollow articles.

The materials containing a present compound of formula (A) or (B) exhibit stability against deleterious effects of UV light and thermal exposure.

### Example 14

### Polyolefin Articles in Contact with Pool Chemicals (Chlorine)

Film grade polyethylene is dry blended with 10% loading of a test additive of formula (A) or (B), as described in Example 9, and then melt compounded at 200°C into fully formulated master batch pellets. The master batch pellets are dry blended with the polyethylene resin to get the final stabilizer concentration. The fully formulated resin is then blown at 200°C into a 150 micron thick film using a DOLCI film line.

The resulting films are exposed for 4 hours to 20 liters of a aqueous solution containing 22.5ppm Chlorine. The chlorine was made available via Leslies Fast Dissolving Super Shock - Super Chlorinator (Shock and Algae control) from OLIN Pool Products, Norwalk CT. This Super Shock is 78% Calcium Hypochlorite was used accordingly to make the 22.5ppm Cl available. After the 4 hours of the chlorine exposure the samples were rinsed in Distilled water 3 times, and air dried to prepare them for accelerated weathering. A duplicate sample was exposed to distilled water without the Chlorine. All the dipped samples are exposed for 250 hour intervals in a Weather-O-meter 65 WR (ASTM D 2565-85 -dry) with a black panel temperature of 63°C. After each 250 hour interval of accelerated weathering, the samples were again exposed to the aqueous exposure as above. Failure is defined as the time to a 50% loss of original elongation. This test is designed to simulate exposure to pool chemicals as would be experienced by pool covers.

The films containing a present compound of formula (A) or (B) show good resistance to pool chemicals containing chlorine.

Other polyolefin articles, such as pool hoses, exposed to pool chemicals containing a present compound of formula (A) or (B) show good resistance to pool chemicals containing chlorine.

### Example 15

### Stabilization of Polyolefins in Grease Filled Cable Construction

100 parts high density polyethylene are dry blended with 0.4 parts of Irganox® MD 1024 (1,2-bis(3,5-di-tert-butyl-4-hydroxyhydrocinnamoyl)hydrazine) and 0.2 parts of one of the hindered amine derivatives listed in Table 1 below. The mixtures are melt compounded into pellets at 230° C in a Superior/MPM extruder using a 24:1 L/D screw with Maddock mixing head at 60 rpm.

The pelletized polyethylene containing the stabilizer mixtures are compression molded at 400° F into 10 mil (0.01 inch) thick films with Mylar backing. "Initial oxidation induction time" (OIT) is measured on these test films.

The sample films are then submersed in Witcogel®, available from Witco, a typical hydrocarbon cable filler grease used in telecom cables. The Witco filling compound contains 0.6 % Irganox® 1035, thiodiethylene bis[3-(3,5-di-tert-butyl-4-hydroxyphenyl)propionate]. The sample films submersed in the filling compound are exposed in an air oven at 70° C for 14 days. The samples are then wiped clean of the cable filler grease. "Aged oxidation induction time" is measured on these samples.

OIT testing is accomplished using a differential scanning calorimeter as per ASTM standard test method D3895. The test conditions are: Uncrimped aluminum pan; no screen; heat up to 200° C under nitrogen, followed by a switch to a 100 milliliter/minute flow of oxygen. Oxidation induction time (OIT) is the time interval between the start of oxygen flow and the exothermic decomposition of the test specimen. OIT is reported in minutes; under the conditions of this test the longer the OIT the more effective the stabilizer mixture is at delaying the onset of oxidative degradation. Relative performance of stabilizer mixtures in grease filled cable applications can be predicted by comparing the initial OIT values, the aged OIT values and the differences between the initial OIT and aged OIT values.

**Table 1**

| Hindered Amine | Initial OIT (minutes) | Aged OIT (minutes) |
|---|---|---|
| Tinuvin® 622 | 136 | 75 |
| Hindered Amine of formula (B) | 208 | 136 |

The stabilizer mixture of the N-alkoxy hindered amine of formula (B) with the metal deactivator Irganox® MD 1024 (1,2-bis(3,5-di-tert-butyl-4-hydroxyhydrocinnamoyl)hydrazine) outperforms the state of the art stabilizer mixture of Tinuvin® 622/Irganox® MD 1024 in initial and aged OIT. Tinuvin® and Irganox® are trademarks of Ciba Specialty Chemicals Corporation.

When a hindered amine of formula (A) is substituted for the compound of formula (B) in the above test, the stabilizer mixture of a compound of formula (A) with Irganox® MD 1024 outperforms the state of the art stabilizer mixture of Tinuvin® 622/Irganox® MD 1024.

### Example 16

Retention of Physical Properties and Color Control of Gamma Irradiated Polypropylene

Unipol®, Union Carbide Corporation, gas phase polypropylene random copolymer with an initial melt flow rate of ca. 2 dg/min is *via* addition of a dialkylperoxide. controlled rheology modified to have a target melt flow rate of ca. 25 dg/min, an appropriate melt flow rate for injection molding. A clarifier is added at ca. 2200 ppm to enhance the transparency of the molded articles.

The formulations contain either a binary stabilizer system of a hindered hydrocarbyloxyamine of formula (A) or (B)and an organophosphorus compound, a binary system of a hindered hydrocarbyloxyamine of formula (A) or (B) and one or more compounds selected from the group of hydroxylamine stabilizers, benzofuranone stabilizers and amine oxide stabilizers, or a ternary system of a hindered hydrocarbyloxyamine of formula (A) or (B),one or more compounds selected from the group of hydroxylamine stabilizers, benzofuranone stabilizers and amine oxide stabilizers and an organophosphorus compound.

The hindered hydrocarbyloxyamines of formula (A) and (B)are typically present from about 0.1 % to about 1 % by weight, the hydroxylamines, benzofuranones and/or amine oxides are typically present from about 0.01 % to about 0.5 % by weight, and the organic phosphorus compounds are typically present from 0.05 % to about 0.5 % by weight, based on the overall formulation.

The formulations are prepared by dry blending the appropriate additives with the polymer in a Turbula® blender for twenty minutes followed by melt compounding on a single screw extruder at 500°F (260°C) using a polyolefin screw fitted with a Maddock mixing section. Each formulation also contains 750 ppm calcium stearate, 250 ppm of the dialkylperoxide 2,5-bis(tert-butylperoxyl)-2,5-dimethylhexane (90 % tech. grade) and 2200 ppm of the Clarifier-1 (Millad® 3988). Each 2 kg batch is split into 1 kg lots, where 1 kg is multiple pass extruded and the other is injection molded into Type IV tensile bars. The Type IV tensile bars, and a set of 125 mil plaques are split into three sets and treated with gamma irradiation from a ⁶⁰Co radiation source at 0, 30 and 60 Kilograys (or 0, 3 and 6 megarads) of exposure. The tensile bars are evaluated for retention of tensile strength and % elongation (at yield, at break) as a function of irradiation dose. The plaques are evaluated for changes in transparency or discoloration as a function of irradiation dose. The irradiated tensile bars, as well as the 125 mil plaques are then oven aged at 60°C. Color and haze development are measured weekly up to 4 weeks on the 125 mil plaques.

A typical organophosphorus stabilizer employed is Irgafos® 168, tris(2,4-di-tert-butylphenyl) phosphite, Ultranox® 626, bis(2,4-di-tert-butylphenyl) pentaerythritol diphosphite, Irgafos® P-EPQ, tetrakis (2,4-di-tert-butylphenyl) 4,4'-biphenylene-diphosphonite or Ultranox® 641, 2,4,6-tri-t-butylphenyl-(2-ethyl-2-propylpropylidene) phosphite. The amine oxide may be Genox™ EP, a di(C₁₆-C₁₈)alkyl methyl amine oxide, CAS# 204933-93-7. The hydroxylamine stabilizer is for example Irgastab® FS-042, an N,N-di(alkyl)hydroxylamine produced by the direct oxidation of N,N-di(hydrogenated tallow)amine. The benzofuranone stabilizer may be Irganox® HP-136, 3-(3,4-dimethylphenyl)-5,7-di-tert-butyl-benzofuran-2-one. Irgafos®, Irgastab® and Irganox® are trademarks of Ciba Specialty Chemicals Corp. Genox^{™} and Ultranox® are trademarks of GE Chemicals.

The formulations including a present compound of formula (A) or (B) show superior physical property and color retention.

### Example 17

### Retention of Physical Properties and Color Control of Gamma Irradiated HDPE

Solution phase Ziegler/Natta high density polyethylene copolymer (d = 0.945 g/cm³) with a nominal melt flow rate of ca. 17 dg/min (2.16 kg @ 190°C) samples are prepared with the additives by adding a 5 % additive concentrate to the "additive free" pelleted base resin in a Turbula® blender for twenty minutes followed by melt compounding on a single screw extruder at 450°F (232°C) using a polyolefin screw fitted with a Maddock mixing section. The formulations contain the same additives at the levels described in Example 16. Each formulation contains 500 ppm of calcium stearate as an acid scavenger. Each 2 kg batch is split into 1 kg lots and 1 kg is multiple pass extruded and the other is injection molded into Type IV tensile bars or compression molded into 125 mil plaques.

The Type IV tensile bars, 125 mil plaques and 1^{st} pass extrusion pellets are split into three sets and treated with gamma irradiation from a ⁶⁰Co radiation source at 0, 30 and 60 Kilograys (or 0, 3 and 6 megarads) of exposure. The tensile bars are evaluated for retention of tensile strength and % elongation (at yield, at break), the plaques are evaluated for discoloration, and the pellets are tested for retention of melt flow rate, all as a function of irradiation dose. The irradiated tensile bars, as well as the 125 mil plaques, are oven aged at 60°C. Color development, tensile strength and % elongation are measured during oven aging at 60°C.

The formulations containing a hindered hydrocarbyloxyamine of formula (A) or (B) show superior physical property and color retention.

### Example 18

### Retention of Physical Properties and Color Control of Gamma Irradiated Polypropylene Homopolymer for Fiber

Polypropylene homopolymer, Ti/Al catalyst, bulk phase process, with a nominal melt flow index of ca. 15 dg/min at 2.16 kg/230° C is extruded into fibers at 525° F and a draw ratio of 3.5:1 and 15 Denier per filament. The fibers are knitted into socks. Samples are also compression molded into plaques. The individual formulations each contain a 1:1 blend of calcium stearate/dihydrotalcite at a total level of 500 ppm as an acid scavenger. Formulations are otherwise prepared as per Example 16.

The fibers, socks and plaques are treated with gamma irradiation from a ⁶⁰Co radiation source at 0, 30, and 60 Kilograys (or 0, 3 and 6 megarads) of exposure.

The formulations containing a present hindered hydrocarbyloxyamine of formula (A) or (B) show superior color and/or physical property retention.

### Example 19

### Retention of Physical Properties and Color Control of Gamma Irradiated Liner Low Density Polyethylene for Film

Unipol®, Union Carbide Corporation, gas phase E/H LLDPE copolymer; Ti/Al catalyst; melt index ca. 1 dg/min. at 2.16 kg/190° C is extruded into blown films at 450° F to produce 1.5 mil films. The individual formulations each contain zinc stearate at a total level of 500 ppm as an acid scavenger. Formulations are otherwise prepared as per Example 16.

The films are treated with gamma irradiation from a ⁶⁰Co radiation source at 0, 30 and 60 Kilograys (or 0, 3 and 6 megarads) of exposure.

The films containing the formulations of the present invention show superior physical property and color retention.

### Example 20

### Non-Woven Polypropylene Fiber Agricultural Film

Forming spunbonded fabrics is a conventional process well know in the art. Fiber grade polypropylene is dry blended with 10% loading of the test additive and then melt compounded at 220°C into masterbatch pellets. The master batch pellets are dry blended with polypropylene resin (MFR = 35-50) at a ratio to yield 1.0% additive. Spunbonded fibers are prepared by extrusion of molten polypropylene resin (die temperature = 230°C) as filaments from a plurality of fine circular capillaries of a spinneret. Cooling air is fed into a quenching chamber (2,400 rpm) wherein the filaments are cooled. The cooling air is then sucked through a nozzle, which accelerates the flow of air creating a force which draws the filaments. The drawn filaments are then passed through a diffusor and deposited on a conveyor belt (33 m/min) to form a non woven fabric.

Forming meltblown fabrics is a conventional process well know in the art. Polypropylene is dry blended with 10% loading of a test additive of formula (A) or (B) and then melt compounded at 220°C into masterbatch pellets. The master batch pellets are dry blended with polypropylene resin (MFR 1200) at a ratio to yield 1.0% additive. Meltblown fibers are prepared by extrusion of molten polypropylene resin as filaments from a plurality of fine circular capillaries of a spinneret. A high-velocity heated air stream attenuates the filaments of molten polypropylene to reduce their diameter. There after the meltblown fibers are carried by the high-velocity heated air stream and are deposited on a collection surface to form a web of randomly dispersed meltblown fibers. Thermal bonding of the web to retain integrity and strength occurs as a separate downstream operation.

The nonwoven fabrics containing a present compound of formula (A) or (B) show good UV stability in agricultural applications such as direct covers, small tunnel covers, and shade cloths and also show good stability after exposure to agricultural chemicals such as pesticides and herbicides.

### Example 21

### Preparation of Polyolefin Hollow Articles by the Rotomolding Process

100 parts medium density polyethylene, copolymerized with hexene (Novapol® TR-0735, nominal melt index 6.8 g/10 min., density 0.935 g/cm³) are dry blended with 0.050 parts of calcium stearate and a combination of additional stabilizers (see below). The mixtures are melt compounded into pellets at 232°C in a Superior/MPM extruder using a 24:1 L/D screw with Maddock mixing head at 100 rpm.

The compounded pellets are ground to a uniform particle size (150-500 µm) prior to the rotational molding process. This grinding step increases the surface area of the particles leading to a faster heat absorption, and thus reducing overall energy consumption.

The rotational molding process is performed in a laboratory scale equipment FSP M20 "Clamshell". The ground resin is placed in a cast aluminum mold, which is rotated biaxially in a gas fired oven. Hot air is circulated by blowers in the chamber while the temperature is increased to 288°C within 4 minutes. This temperature is maintained for a specific time (see Tables below). Subsequently, the oven is opened and while still rotating, the mold is cooled with forced air circulation for 7 minutes, followed by water spray mist for 7 minutes, and an additional air cooling step for 2 minutes. Throughout the entire heating and cooling cycles, the speed of the major axis is maintained at 6 rpm with a 4.5 : 1 ratio of rotation. After the cooling cycles, the mold is opened and the hollow object removed.

Formulation A is additionally blended with a combination of 0.100 parts of the phosphite process stabilizer Irgafos® 168, 0.050 parts of the hydroxylamine process stabilizer Irgastab® 042 and 0.200 parts of the compound of formula (A).

Formulation B is additionally blended with a combination of 0.100 parts of the phosphonite process stabilizer Irgafos® P-EPQ, 0.050 parts of the hydroxylamine process stabilizer Irgastab® 042 and 0.200 parts of the compound of formula (A).

Formulation C is additionally blended with a combination of 0.100 parts of the phosphite process stabilizer Ultranox® 626, 0.050 parts of the hydroxylamine process stabilizer Irgastab® 042 and 0.200 parts of the compound of formula (A).

Formulations D-F are identical with Formulations A-C, replacing the compound of formula (A) with the compound of formula (B).

Irgafos® 168 is tris-(2,4-di-tert-butylphenyl)phosphite. Ultranox® 626 is bis(2,4-di-tert-butylphenyl) pentaerythritol diphosphite. Irgafos® P-EPQ is tetrakis(2,4-di-tert-butylphenyl)4,4' - biphenylene-diphosphonite. Irgastab® 042 is the N,N-di(alkyl)hydroxylamine produced by the direct oxidation of N,N-di(hydrogenated tallow)amine. Irganox® 1076 is octadecyl 3-(3,5-di-tert-butyl-4-hydroxyphenyl)propionate. Tinuvin®, Irgafos®, Irgastab® and Irganox® are registered trademarks of Ciba Specialty Chemicals Corporation. Ultranox® is a registered trademark of GE Chemicals.

Formulations A-F are rotationally molded into hollow objects according to the general procedure with hold times of 6 to 14 minutes.

Yellowness Index of the outer surface is determined on a DCI SF600 spectrophotometer according to ASTM D 1925. An increase in yellowness corresponds to a positive increase in the Yellowness Index. Formulations A-F are exhibit excellent color stability at these processing conditions.

Low-temperature impact strength testing is performed with an instrumented drop weight (11.34 kg / 50.8 cm) impact apparatus Dynatup® 8250. Test specimens are conditioned in an air circulated freezer for no less than 12 hours at -40°C prior to test.

The impact strength results are reported in % brittleness. Formulations A-F exhibit excellent stability with regard to the failure mode based on low-temperature impact strength testing at these processing conditions.

Formulations A-F also exhibit excellent gas fading resistance. The stabilizer systems described above also exhibit reduced cycle times in the polyolefin rotational molding process compared to the current state of the art systems.

The phosphite Irgafos® 38 may be substituted for the organic phosphorus compounds in the above formulations with excellent results. Irgafos® 38, available from Ciba Specialty Chemicals Corporation, is bis(2,4-di-tert-butyl-6-methylphenyl) ethyl phosphite.

Hollow articles are also prepared replacing Irgastab® 042 of Formulations A-F with the amine oxide Genox^{™} EP. Genox^{™} EP is a di(C₁₆-C₁₃)alkyl methyl amine oxide, CAS# 204933-93-7, available from GE Specialty Chemicals. These formulations also exhibit excellent color stability, mechanical stability and improved cycle times.

### Example 22

Articles, films and fibers prepared according to Examples 1-21 which additionally contain selected organic pigments as well as a present compound of formula (A) or (B) also exhibit stability against the deleterious effects of actinic light and thermal exposure.

### Example 23

Articles, films and fibers prepared according to Examples 1-21 which additionally contain a hindered phenolic antioxidant selected from the group consisting of neopentanetetrayl tetrakis(3,5-di-tert-butyl-4-hydroxyhydrocinnamate, octadecyl 3,5-di-tert-butyl-4-hydroxyhydrocinnamate, 1,3,5-trimethyl-2,4,6-tris(3,5,-di-tert-butyl-4-hydroxybenzyl)benzene, 1,2-bis(3,5-di-tert-butyl-4-hydroxyhydrocinnamoyl)hydrazine, calcium [bis(monoethyl 3,5-ditert-butyl-4-hydroxybenzyl)phosphonate], 1,3,5-tris(3,5-di-tert-butyl-4-hydroxybenzyl) isocyanurate and 1,3,5-tris(3-hydroxy-4-tert-butyl-2,6-dimethylbenzyl) isocyanurate, as well as a present compound of formula (A) or (B) also exhibit stability against the deleterious effects of actinic light and thermal exposure.

### Example 24

Articles, films and fibers prepared according to Examples 1-21 which additionally contain an organophosphorus stabilizer selected from the group consisting of tris(2,4-di-tert-butylphenyl) phosphite, bis(2,4-di-tert-butyl-6-methylphenyl) ethyl phosphite, 2,2',2''-nitrilo [triethyl-tris-(3 3',5,5'-tetra-tert-butyl-1,1'-biphenyl-2,2'-diyl) phosphite], tetrakis(2,4-di-butyl phenyl) 4,4'-biphenylenediphosphonite, tris(nonylphenyl) phosphite, bis(2,4-di-tert-butylphenyl) pentaerythrityl diphosphite, 2,2'-ethylidenebis(2,4-di-tert-butylphenyl) fluorophosphite and 2-butyl-2-ethylpropan-1,3-diyl 2,4,6-tri-tert-butylphenyl phosphite as well as a present compound of formula (A) or (B) also exhibit stability against the deleterious effects of actinic light and thermal exposure.

### Example 25

Articles, films and fibers prepared according to Examples 1-21 which additionally contain a benzofuranone stabilizer which is 5,7-di-tert-butyl-3-(3,4-dimethylphenyl)-2H-benzofuran-2-one, as well as a present compound of formula (A) or (B) also exhibit stability against the deleterious effects of UV light and thermal exposure.

### Example 26

Articles, films and fibers prepared according to Examples 1-21 which additionally contain a dialkylhydroxylamine stabilizer which is an N,N-dialkylhydroxylamine made by the direct oxidation of N,N-di(hydrogenated tallow)amine as well as a present compound of formula (A) or (B) also exhibit stability against the deleterious effects of actinic light and thermal exposure.

### Example 27

Articles, films and fibers prepared according to Examples 1-21 which additionally contain an amine oxide such as Genox™ EP as well as a present compound of formula (A) or (B) also exhibit stability against the deleterious effects of actinic light and thermal exposure. Genox^{™} EP is a di(C₁₆-C₁₈)alkyl methyl amine oxide, CAS# 204933-93-7, available from GE Specialty Chemicals.

### Example 28

Articles, films and fibers prepared according to Examples 1-21 which additionally contain other hindered amine stabilizers selected from the group consisting of bis(2,2,6,6-tetramethylpiperidin-4-yl) sebacate, the polycondensation product of 1-(2-hydroxyethyl)-2,2,6,6-tetramethyl-4-hydroxypiperidine and succinic acid, N,N',N'',N'''-tetrakis[4,6-bis(butyl-1,2,2,6,6-penta methylpiperidin-4-yl)amino-s-triazin-2-yl]-1,10-diamino-4,7-diazadecane, the polycondensation product of 4,4'-hexamethylenebis(amino-2,2,6,6-tetramethylpiperidine) and 2,4-dichloro-6-tert-octylamino-s-triazine, the polycondensation product of 4,4'-hexamethylenebis(amino-2,2.6,6-tetramethylpiperidine) and 2,4-dichloro-6-morpholino-s-triazine, 2,2,6,6-tetramethylpiperidin-4-yl octadecanoate, 3-dodecyl-1-(1-acetyl-2,2,6,6-tetramethylpiperidin-4-yl)-pyrrolidin-2,5-dione, 1,3,5-tris {N-cyclohexyl-N-[2-(2,2,6,6-tetramethylpiperazin-3-on-4-yl)ethyl]amino)-s-triazine, poly[methyl 3-(2,2,6,6-tetramethylpiperidin-4-yloxy)propyl]siloxane, the polycondensation product of 2,4-dichloro-6-(2,2,6,6-tetramethylpiperidin-4-yl)butylamino)-s-triazine and 2,2'ethylene-bis{[2,4-(2,2,6,6-tetramethylpiperidin-4-yl)butylamino-s-triazin-6-yl]amino-trimethyleneamino} as well as a present compound of formula (A) or (B) also exhibit stability against the deleterious effects of actinic light and thermal exposure.

### Example 29

Articles, films and fibers prepared according to Examples 1-21 which additionally contain other N-hydrocarbyloxy substituted hindered amines selected from the group consisting of bis(1-octyloxy-2,2,6,6-tetramethylpiperidin-4-yl) sebacate, bis(1-octyloxy-2,2,6,6-tetramethylpiperidin-4-yl) adipate, bis(1-cyclohexyloxy-2,2,6,6-tetramethylpiperidin-4-yl) adipate, bis(1-cyclohexyloxy-2,2,6,6-tetramethylpiperidin-4-yl) sebacate, and 1-cyclohexyloxy-2,2,6,6-tetramethylpiperidin-4-yl octadecanoate as well as a present compound of formula (A) or (B) also exhibit stability against the deleterious effects of actinic light and thermal exposure.

### Example 30

Articles, films and fibers prepared according to Examples 1-21 which additionally contain a o-hydroxyphenyl-2H-benzotriazole, a hydroxyphenyl benzophenone, a o-hydroxyphenyl-s-triazine or another UV absorber selected from the group consisting of 2-(2-hydroxy-3,5-di-α-cumylphenyl)-2H-benzotriazole, 2-(2-hydroxy-5-methylphenyl)-2H-benzotriazole, 5-chloro-2-(2-hydroxy-3,5-di-tert-butylphenyl)-2H-benzotriazole, 2-(2-hydroxy-3,5-di-tert-amyl-phenyl)-2H-benzotriazole, 2-(2-hydroxy-3-α-cumyl-5-tert-octylphenyl)-2H-benzotriazole, 2,4-di-tert-butylphenyl 3,5-di-tert-butyl-4-hydroxybenzoate, 2-hydroxy-4-n-octyloxybenzophenone, 2-hydroxy-4-methoxybenzophenone, 2-hydroxy-4-dodecyloxybenzophenone, 2,2'-dihydroxy-4,4'-dimethoxybenzophenone, 2,4-bis(2,4-dimethyphenyl)-6-(2-hydroxy-4-octyloxyphenyl)-s-triazine, 2,2'-p-phenylene-bis(3,1-benzoxazin-4-one), Cyasorb® 3638 (CAS# 18600-59-4), Sanduvor® PR25, dimethyl p-methoxybenzylidenemalonate (CAS# 7443-25-6), and Sanduvor® PR31, di-(1,2,2,6,6-pentamethylpiperidin-4-yl) p-methoxybenzylidenemalonate (CAS #147783-69-5) as well as a present compound of formula (A) or (B) also exhibit stability against the deleterious effects of UV light and thermal exposure.

### Example 31

### Stabilization of Recycled Plastics

Articles, films and fibers prepared according to Examples 1-21 which are fabricated using recycled plastics as part of the formulation as well as a present compound of formula (A) or (B) exhibit stability against the deleterious effects of actinic light and thermal exposure.

### Example 32

### Stabilization of Thermoplastic Polyolefins

Molded test specimens are prepared and tested as in Example 1 replacing N,N-dialkylhydroxylamine stabilizer with the amine oxide, Genox™ EP. Light stabilizer formulations comprising a mixture of components outlined in Example 1, an amine oxide and a present compound of formula (A) or (B) exhibit good stabilization performance against deleterious effects of UV light.

### Example 33

### Paintable Thermoplastic Polyolefins

Molded test specimens are prepared as in Example 2 replacing the N,N-dialkylhydroxylamine stabilizer with the amine oxide, Genox™ EP. Formulations comprising a mixture of components outlined in Example 2, an amine oxide and a present compound of formula (A) or (B) exhibit good paint adhesion.

### Example 34

### Stabilization of Polypropylene Fiber

Fiber specimens are prepared and tested as in Example 6 replacing the N,N-dialkylhydroxylamine stabilizer with the amine oxide, Genox™ EP. Light stabilizer formulations comprising a mixture of components outlined in Example 6, an amine oxide and a present compound of formula (A) or (B) exhibit good stabilization performance against deleterious effects of UV light.

### Example 35

### Clear Polycarbonate/ABS Blends

All additives are commercial materials. Titanium dioxide is DuPont Ti-PURE® R-104. Polycarbonate (PC) is LEXAN® 141-111 natural; ABS is Dow MAGNUM® 342EZ. Polymers and additives are extrusion compounded in one pass using a twin screw extruder of screw design 18 mm, co-rotating, non-intermeshing; processing temperature 240°C., with a die melt temperature 260°C. Injection molding of Izod bars (2.5"L x 0.5"W x 0.125"W) is done on a BOY 30 machine, barrel temperature 475-515°F., die temperature 515°F.

Accelerated weathering is performed using an Atlas Ci65A Weather-Ometer ("XAW"). operated in either "Dry XAW" mode (ASTM G26-90 method C) or interior auto ("IAXAW') (black panel temperature 89°C., light/dark cycle 3.8 hr/1.0 hr; irradiance 0.55 watt/m², inner filter-quartz, outer filter-high borate.

Yellowness Index and delta E color are performed as per ASTM D-1925, using a Chroma-Sensor CS-5 Colorimeter, operated at 10 degree, small area view, specular included.

Chip impact is performed per ASTM D4508-90 on a TMI Monitor/Impact Tester using a 30 ft-lb weight. Per ASTM D4508-90 paragraph 4.6, the impact strength results are reported as a complete break, a partial break or a non-break, with a non-break specimen exhibiting the most desired impact retention, and partial break being the next desired impact retention. Data presented are the average of ten replicate samples for each formulation.

Melt rheology is performed using a Kayeness Galaxy V capillary rheometer, equipped with a 1000 pound load cell, a die of orifice radius 0.015 inch and orifice length 1.0000 inch., operated at the stated test temperature. Samples are pre-dried in a vacuum oven under nitrogen atmosphere to an analyzed moisture level of less than 100 ppm prior to rheology testing.

The stabilizers used in the tests below are:
TINUVIN® 234 (Ciba) is 2-(2-hydroxy-3,5-di-α-cumylphenyl)-2H-benzotriazole;
IRGAFOS® 168 (Ciba) is tris(2,4-di-tert-butylphenyl) phosphite.
TINUVIN® 1577 (Ciba) 4,6-diphenyl-2-(4-hexyloxy-2-hydroxyphenyl)-s-triazine

Chip impact bars are prepared and subjected to dry XAW accelerated weathering. The samples are removed at selected intervals for color measurement and then for destructive chip impact testing.

Formulations containing 0.75 weight percent of a present hindered amine of formula (A) or (B) and 0.5 weight percent of Tinuvin® 234 exhibit outstanding color stability and retention of useful mechanical properties as measured by chip impact strength.

All formulations contain 0.1% Irgafos 168; all are 50/50 wt/wt PC and ABS.

### Example 36

### Interior Auto XAW-Clear PC/ABS

Chip impact bars are prepared as per Example 35 and subjected to accelerated weathering under interior auto Xenon Arc Weather-Ometer (IAXAW) conditions. Test samples are removed at intervals for color measurement and then destructive chip impact testing. The IAXAW conditions are more severe than dry Xenon (XAW) conditions due to higher temperature and higher irradiance energy.

Formulations containing 0.75 weight percent of a present hindered amine of formula (A) or (B) in addition to 0.5 weight percent of Tinuvin® 34 exhibit outstanding color stability and retention of useful mechanical properties as measured by chip impact strength. All formulations contain (0.1%) Irgafos 168; all are 50/50 wt/wt PC and ABS.

### Example 37

### Interior Auto XAW-Pigmented PC/ABS

Formulations of a 50/50 wt/wt blend of PC and ABS which contain 1.0 wt. % titanium dioxide (TiO₂), 0.75 weight percent of a hindered amine of formula (A) or (B) and 0.50 weight percent of either TINUVIN® 1577 or TINUVIN® 234 are prepared and tested as per Example 35. The formulations exhibit outstanding resistance to color change (delta E). The chip impact values are favorably high as well. All formulations contain (0.1%) Irgafos 168; all are 50/50 wt/wt PC and ABS.

### Example 38

### Melt Stability of PC/ABS Blends

The retention of molecular weight during processing of a polymer or polymer blend is critical for the successful production of a useful article. Additives which interact adversely with the polymer substrate during processing are of limited or no value to the production of a final useful article. The adverse interactions may be due to various factors, such as a chemical reaction between the additive and the polymer which results in a reduction of polymer molecular weight by chain cleavage. Also, if the additive itself degrades during the required high temperature processing of the polymer, then the degradation products of the additive itself may interact antagonistically with the polymer.

An acceptable hindered amine stabilizer for use in a polycarbonate blend should exhibit minimal deleterious interaction with the polymers during their high temperature processing into useful articles. Hindered amines which are basic (having a pKa value >7 typically) are known to cause degradation of polycarbonates, especially during melt processing of the polymer as taught by G. L. Gaines, Jr. (Polymer Degradation and Stability, 27 13-18 (1990)). Melt rheology testing is an accepted method to assess the stability of a polymer in the melt state (see ASTM D 3835-90) and thus to relate the interaction of additives to changes in molecular weight of the polymers. Polymer molecular weight, and changes in molecular weight, may be expressed in terms of the polymer apparent melt viscosity. A decrease in apparent melt viscosity over time of the test indicates that polymer degradation and molecular weight reduction are occurring whereas an increase in apparent melt viscosity over time indicates polymer degradation may be occurring by a crosslinking or a molecular weight buildup mechanism. It is often convenient to represent this change in melt viscosity as the melt viscosity ratio as taught by A. B. Auerbach et al., Polymer Engineering and Science, 30, 1041-1050(1990). The melt viscosity ratio (MVR) maybe defined as the change in melt viscosity (η) over time, and expressed as the ratio of a melt viscosity at some extended test time (ηₓ), divided by the initial melt viscosity (ηₒ) ultimately expressed as (ηₓ /ηₒ).

Formulations of 50/50 wt/wt PC/ABS samples containing a present hindered amine of formula (A) or (B) alone and polymer samples additionally containing various additives which were incorporated as described for Examples 35 and 36 exhibit low detrimental impact on apparent melt viscosity of formulations.

The PC/ABS blends of Examples 35-38 may be replaced with PC/ASA blends which also exhibit excellent color stability and mechanical stability as measured by impact strength and melt flow stability.

The PC/ABS blends of Examples 35-38 may be replaced with PC/polyester blends such as PC/PET and PC/PBT blends which also exhibit excellent color stability and mechanical stability as measured by impact strength and melt flow stability.

ASA is acrylonitrile-styrene-acrylate, the acrylate is typically butyl acrylate. PET is polyethylene terephthalate. PBT is polybutylene terephthalate. ABS is acrylonitrile-butadiene-styrene.

### Example 39

### Flame-Resistant Polypropylene Fiber

Fiber grade polypropylene, containing 0.05% by weight of calcium stearate and 0.05% of tris(2,4-di-tert-butylphenyl) phosphite and 0.05% of a N,N-dihydroxylamine made by the direct oxidation of N,N-di(hydrogenated tallow)amine is dry blended with a test additive of formula (A) or (B) and then melt compounded at 234°C (450°F) into pellets. The pelletized fully formulated resin is then spun at 246°C (475°F) into fiber using a Hills laboratory model fiber extruder. The spun tow of 41 filaments is stretched at a ratio of 1:3.2 to give a final denier of 615/41.

Socks are knitted from the stabilized polypropylene fiber on a Lawson-Hemphill Analysis Knitter and tested under NFPA 701 vertical burn procedure. The time in seconds for the knitted sock to extinguish after the insult flame is removed is reported as "After Flame". Both the maximum time for any one replicate and the total time for all ten replicates are measured. Efficacy as a flame retardant is demonstrated when low After Flame times are observed relative to a blank sample containing no flame retardant.

While conventional hindered amines have at best essentially a neutral effect on flame retardancy, the instant 1-hydrocarbyloxy (NOR) hindered amines of formulae (A) and (B) are very effective flame retardants. These NOR-hindered amines do not have the detrimental effects associated with inorganic flame retardants.

### Example 40

### Flame-Resistant Polypropylene Molded Articles

Molding grade polypropylene is dry blended with a test additive of formula (A) or (B) and then melt compounded into pellets. The pelletized fully formulated resin is then compression molded into test specimens using a Wabash Compression Molder.

Test plaques are tested under UL-94 Vertical Burn test conditions. The average time in seconds for the test sample to extinguish after the insult flame is removed is reported. Efficacy as a flame retardant is demonstrated when low Flame times are observed relative to the blank sample containing no flame retardant.

All samples containing the instant NOR-hindered amines self-extinguished after application of the first flame. This shows that the instant NOR compounds of formulae (A) and (B) exhibit discernible efficacy as flame retardants. The blank burned completely after application of the first flame.

### Example 41

### Flame-Resistant Polyethylene Film

Film grade polyethylene is dry blended with a test additive of formula (A) or (B) and then melt compounded into pellets. The pelletized fully formulated resin is then blown at 205°C using a MPM Superior Blown film extruder.

The films are tested for flame retardancy under NFPA 701 test conditions. The films containing an instant NOR compound of formula (A) or (B) show flame retardancy.

Film grade polypropylene is handled in a similar fashion and polypropylene films containing the instant NOR compounds also show flame retardancy.

### Example 42

### Two-Component Polyester Urethane Coatings

A hindered amine test stabilizer of formula (A) or (B) are incorporated into a two-component polyester urethane coating based on a commercially available polyester polyol (DESMOPHEN® 670-80) and commercially available isocyanurate (DESMODUR® N-3390) at a level of 2% by weight based on total resin solids. The coating system is catalyzed with 0.015% dibutyl tin dilaurate based on total resin solids.

Each coating formulation is applied by drawdown onto transparent glass slides approximately 4" x 6" to a film thickness of about 2 mils (0.002") in triplicate.

These triplicate glass plates are processed as seen below:
Plate 1 - bake for 30 minutes at 180°F (82°C); age at room temperature; and observe daily.
Plate 2 - allow to air dry (ambient cure); age at room temperature; and observe daily.
Plate 3 - allow to air dry for one day; age in a 120°F (49°C) oven; observe daily and continue aging at 120°F (49°C).

Starting at time zero, all plates are evaluated for visual appearance, noting the development of any cloudiness within the coating and any exudate on the surface of the coating. The results are observed for four days.

The results show that the instant compounds of formulae (A) and (B) have excellent solubility and compatibility with the polyester urethane coating.

Experience teaches that, if the instant compounds are soluble and compatible in this particular clearcoat, they will certainly be compatible and soluble in other resin systems.

### Example 43

### Stabilization of a Two-Component Acrylic Urethane Clearcoat

A hindered amine test stabilizer of formula (A) or (B) is incorporated into a two-component acrylic urethane coating as described in Example 42. The system is catalyzed with 0.02% by weight of dibutyltin dilaurate based on the total resin solids. The stabilizers are added at the appropriate level to the acrylic polyol portion of the two-component coating which is then combined with the isocyanate component immediately prior to application.

Steel panels 3" x 4" primed with an electrocoat primer are then coated with a light blue metallic basecoat, then with the stabilized clearcoat. The basecoat is spray applied to a thickness of 1.0 mil (25 microns) dry film thickness and the stabilized clearcoat is then applied to a thickness of 2.0 mils (50 microns) dry film thickness. The coating is air-dried and aged for two weeks. The panels are then exposed in a Xenon-Arc Weather-Ometer under the following conditions:
Cam 180 cycle: 40 minutes light only; 20 minutes light and front spray; 60 minutes light only; 60 minutes dark and rear spray condensate.
Lamp filters are: quartz inner/borosilicate S outer.
Irradiance: 0.45 watts per square meter.

20° Gloss is measured before exposure and at 500 hour intervals during exposure. Higher gloss retention is desirable.

The data show that the instant compounds of formulae (A) and (B) give excellent 20° Gloss Retention values.

### Example 44

### Stabilization of Waterborne Wood Varnish

Waterborne coatings comprise a significant and increasing proportion of the coatings in use for a wide variety of applications including automotive basecoats, industrial coatings and trade sale coatings. These coatings may be pigmented or transparent. The trends are also towards higher solids formulation which in general depend on light stabilizers to maintain properties on exterior exposure, and towards lower levels of cosolvents. This requires higher solubility of stabilizers in such cosolvents (primarily water) or actual solubility in water.

A test stabilizer of formula (A) or (B) is incorporated into a waterborne dispersion by pre-dissolution in a cosolvent blend. The waterborne dispersion is a commercially available acrylic/urethane hybrid resin. The cosolvent blend is a 1:1 mixture of TEXANOL® (2,2,4-trimethyl-1,3-pentanediol, Texaco) and ARCOSOLVE® TPM (tripropylene glycol methyl ether, Atlantic Richfield).

0.45 gram of the test stabilizer is predissolved in 10 g of the cosolvent blend which is then incorporated into the following composition:

| | ppw |
|---|---|
| FLEXTHANE® 630 (Air Products) | 100.0 |
| Foamaster VF | 0.1 |
| Water | 10.0 |
| TEXANOL/ARCOSOLVE/hindered amine | 10.5 |
| UV absorber (TINUVIN® 1130, Ciba) | 1.2 |
| BYK 346 | 0.5 |
| MICHEMLUBE® 162 | 2.0 |

Each coating is brush applied onto 6" x 6" sections of cedar and pine boards. The weight of the coating applied is regulated by weighing the coating and brush before and after application and ensuring that the same weight of coating is applied to each section.

The coated board sections are allowed to dry at ambient temperature for two weeks, then evaluated for visual appearance, gloss and Hunter L*, a* and b* color. The sections are exposed on racks at a 45° angle in South Florida for six months before being returned and evaluated for visual appearance, gloss, color change and any other signs of degradation or delamination.

The present hindered amine compounds of formulae (A) and (B) provide excellent stabilization efficacy in respect to visual appearance, gloss retention, resistance to color change and to delamination.

### Example 45

### Stabilization of Pigmented Automotive OEM Basecoat

A basecoat pigmented with a mixture of Pigment Red 177 and mica is stabilized with 1% by weight of a hindered amine stabilizer of present formula (A) or (B) based on the total basecoat solids (pigment plus resin). The basecoat is spray applied at a dry film thickness of 1 mil (25 microns) to primed 4" x 12" steel panels, then topcoated with a high solids commercially available automotive clearcoat. The coated panels are cured in an over at 250°F (121°C) for 30 minutes. The panels are then exposed in a Xenon-Arc Weather-Ometer under the following conditions:
Cam 180 cycle: 40 minutes light only; 20 minutes light and front spray; 60 minutes light only; 60 minutes dark and rear spray condensate.
Lamp filters are: quartz inner/borosilicate S outer.
Irradiance: 0.55 watts per square meter.

20° Gloss, Distinctness of Image, Hunter Color Space Values (L*, a*, b* and DE) are measured before exposure and after 3000 hours of exposure.

The present hindered amine compounds of formulae (A) and (B) provide excellent stabilization efficacy to the panels in respect to distinctness of image, gloss retention and resistance to color change.

### Example 46

### Stabilization of High Solids Acid-catalyzed Thermoset Acrylic Resin Enamel

A high solids (50% by weight) thermoset acrylic resin enamel, catalyzed by 0.8% by weight of dodecylbenzenesulfonic acid, based on the film-forming resin is stabilized by the addition of a present compound of formula (A) or (B). The high solids thermoset acrylic resin enamel formulation (Acryloid AT 400 from Rohm and Haas) is based on hydroxyethyl methacrylate, methyl methacrylate, styrene, butyl acrylate and butyl methacrylate and a melamine curing agent.

Pieces of steel sheeting 4" x 12" (9.16 cm x 30.48 cm), coated with a primer based on polyester/epoxy resin, are then coated with a TiO₂-pigmented base coat based on a binder of 70% of monomers such as hydroxyethyl acrylate, styrene, acrylonitrile, butyl acrylate and acrylic acid with 30% of a melamine resin and an acid catalyst and finally with a clear finishing enamel. The base coat is sprayed onto the sheet to a thickness of about 0.8 mil (0.0203 mm) and air dried for three minutes. The clear finishing enamel is then sprayed onto the sheet to a thickness of about 2.0 mil. After 15 minutes air-drying, the coated sheets are baked for 30 minutes at 121°C.

The stabilizers under test are added to the thermoset acrylic resin finishing enamel in a concentration of 1% by weight before the enamel is coated onto the base coat.

The coated sheets, after storage for three weeks in an air-conditioned room (23°C/50% relative humidity), are subjected to weathering for 2000 hours according to SAE J1920 in a Xenon arc Weather-Ometer. In this apparatus, samples are subjected to weathering in repeated cycles of 180 minutes. The effectiveness of the stabilization is measured by the retention of 20° gloss after weathering.

The sheets stabilized by a present compound of formula (A) or (B) exhibit good retention of 20° gloss after weathering under extreme weather conditions.

### Example 47

### Stabilization of High Solids Acid-catalyzed Thermoset Acrylic Resin Enamel

The samples prepared in Example 46 are also evaluated on the basis of Knoop Hardness (ASTM D-1474-68) on baked and overbaked samples; on the distinction of image (DOI); on Hunter Associates Apparatus; on 20° gloss (ASTM D-523-80); and on cracking based on visual observation.

The samples stabilized by a present compound of formula (A) or (B) exhibit a pattern of excellent retention of 20° gloss and DOI, and an absence of severe cracking after exposure.

### Example 48

### Stabilization of High Solids Acid-catalyzed Thermoset Acrylic Resin Enamel

The thermoset acrylic enamel of Example 46 is formulated to include 3% by weight of a benzotriazole UV absorber and 1.5% by weight of a present hindered amine test compound of formula (A) or (B). The enamel is coated over a white base coat or over a silver metallic base coat. Baking is conducted at 121°C normal bake or at 82°C automotive low bake repair temperature.

The coated panels are exposed in a Xenon arc exposure apparatus and 20° gloss and distinction of image (DOI) values are determined.

The samples stabilized by a present compound of formula (A) or (B) exhibit a pattern of excellent retention of 20° gloss and DOI.

### Example 49

### Stabilization of High Solids Acid-catalyzed Thermoset Acrylic Resin Enamel

Two thermoset acrylic enamels are formulated to include 3% by weight of a benzotriazole UV absorber and 1% by weight of a present hindered amine test stabilizer of formula (A) or (B).

The thermoset acrylic enamels are based on a binder of 70% of monomers such as hydroxyethyl acrylate, styrene, acrylonitrile, butyl acrylate and acrylic acid with 30% of a melamine resin and an acid catalyst such as p-toluenesulfonic acid, dinonylnaphthalenedisulfonic acid, dodecylbenzenesulfonic acid or phenyl acid phosphate.

Pieces of steel sheeting 4" x 12" (9.16 cm x 30.48 cm), coated with a primer based on polyester/epoxy resin, are then coated with a base coat and finally with a clear finishing enamel. The base coat is sprayed onto the sheet to a thickness of about 0.8 mil (0.0203 mm) and air dried for three minutes. The clear finishing enamel is then sprayed onto the sheet to a thickness of about 2.0 mil. After 15 minutes air-drying, the coated sheets are baked for 30 minutes at 121°C.

The coated panels are exposed in a Xenon arc exposure apparatus and 20° gloss and distinction of image (DOI) values are determined.

The samples stabilized by a present compound of formula (A) or (B) exhibit a pattern of excellent retention of 20° gloss and DOI.

### Example 50

### White Polyester/Melamine Based Oil-Free Alkyd Coil Coatings

A white polyester/melamine based oil-free alkyd coil coating is utilized in this example. The fully formulated paint is applied over a primed steel sheet using a wire wound rod to give 0.6-0.8 mil dry film. The panels are baked for about 90 seconds at 220°C, removed from the oven and immediately quenched in water. The coated panels are exposed in a Xenon Arc Weather-Ometer, and in South Florida at an angle of 45° S to the sun. 20° gloss values are determined.

The samples stabilized by a present compound of formula (A) or (B) exhibit a pattern of excellent retention of 20° gloss.

### Example 51

### Stabilization of High Solids Acid-catalyzed Thermoset Acrylic Resin Enamel

The thermoset acrylic enamel of Example 46 including 0.8% dodecylbenzenesulfonic acid is formulated to include varying concentrations of benzotriazole or s-triazine UV absorbers and the instant hindered amine test compounds. The enamel is coated over a silver metallic base coat pursuant to the procedure of Example 46 and baking is conducted for 30 minutes at 121°C the normal bake temperature.

The coated panels are exposed in a Xenon arc Weather-Ometer and the time to the 50% loss of 20° gloss is determined.

The samples stabilized by a present compound of formula (A) or (B) and a UV absorber exhibit an excellent retention of 20° gloss and a much longer time till 50% loss in 20° gloss is observed.

### Example 52

### Thermoset Acrylic Melamine Enamel

A thermoset acrylic enamel based on a binder of 70% of monomers such as hydroxyethyl acrylate, styrene, acrylonitrile, butyl acrylate and acrylic acid with 30% of a melamine resin and an acid catalyst such as p-toluenesulfonic acid, dinonylnaphthalenedisulfonic acid or dodecylbenzenesulfonic acid is formulated. Commercially available 9.16 cm x 30.48 cm Uniprime panels are used as the substrate. The panels are coated with a silver metallic base coat and then with a clear finishing enamel. The base coat is stabilized with 1% of a benzotriazole UV absorber and 1% of a present hindered amine test compound of formula (A) or (B) (based on solid resin) and is sprayed onto the panel to a thickness of about 0.6-0.8 mil and air dried for three minutes. The clear coat including the above-noted stabilizers is then sprayed to a thickness of 1.7-2.0 mils and after 10 minutes of air drying, the coated panels are baked for 30 minutes at 121°C. The coated panels are then exposed in a Xenon arc apparatus and the 20° gloss values are determined.

The samples stabilized by a present compound of formula (A) or (B) and a UV absorber exhibit excellent retention of 20° gloss.

### Example 53

### Water-Borne Acrylic Melamine Enamel

A water-borne acrylic melamine enamel is formulated as seen below:

| | Parts Resin Solids |
|---|---|
| Synthacryl VSW 6483 (acrylic dispersion from Hoechst) | 30 |
| Synthacryl VSW 6484 (50% acrylic resin in butyl diglycol, Hoechst) | 42 |
| Maprenal MF 915 (70% melamine resin in isobutanol) | 25 |
| Maprenal MF 927 (melamine resin) | 3 |
| | 100 |

A water-based base coat/clear coat enamel is prepared by spray applying a 0.6-0.8 mil thick film of commercial silver metallic waterborne base coat (from BASF) over an epoxy primed coil coated aluminum panel. This material is baked at 80°C for five minutes and then clear coated with 1.6-1.8 mil of the waterborne enamel. The system is baked at 80°C for ten minutes and then at 140°C for a further 30 minutes. Prior to application of the clear coating, a present test compound of formula (A) or (B) and a further light stabilizer are dissolved in a minimum amount of butyl glycol acetate are added to the paint. The coated panels are exposed in a Xenon arc apparatus for 975 hours. The distinction of image (DOI) retention of the panels is measured.

The samples stabilized by an instant compound of formula (A) or (B) exhibit excellent retention of DOI values.

### Example 54

### Stabilization of Tung Oil Phenolic Varnish

Pieces of 1.27 cm x 20.32 cm x 30.48 cm western red cedar panels having a fine radial cut are used to test a commercially available tung oil phenolic varish (supplied by McCloskey). One half of each panel is coated with two coats of unstabilized varnish. An equal amount of varnish containing 5% by weight (based on resin solids) of a test stabilizer of formula (A) or (B) is applied to the other half of the panel in two coats. After storage for two weeks at ambient temperature, the wood panels are exposed outdoors at an angle of 45° S for a period of eight months. The 60° gloss of each half of the panel is measured at the top, middle and bottom portion of the panel and averaged according to ASTM D 523. Due to the lack of homogeneity of wood substrates, the gloss retention of the same varnish tends to differ slightly from panel to panel. Thus, the application of an unstabilized control varnish to every panel allows for a more meaningful measurement of the improvement in gloss due to the presence of the instant test compound.

The panels stabilized by a present compound of formula (A) or (B) show excellent gloss retention after long exposure.

### Example 55

### Stabilization of an Aromatic Urethane Varnish

A sample of commercial aromatic urethane varnish (Flecto-Varathane #90) is tested by the same method described in Example 54. After outdoor exposure at an angle of 45° S for a period of five months, the 60° gloss retention values of unstabilized and stabilized portions of the panels are determined.

The panels stabilized by a present compound of formula (A) or (B) show excellent gloss retention.

### Example 56

### Stabilization of a White Two-Component Polyester Urethane Gloss Enamel

A white polyester is formulated as shown below:

| | Parts |
|---|---|
| Component I | |
| Desmophen 670-90 (polyester glycol, Mobay) | 132.4 |
| Titanium Dioxide | 198.6 |
| Cellosolve Acetate | 98.9 |

| Sand Mill | |
|---|---|
| Desmophen 670-90 | 94.98 |
| Flow Aid | 0.28 |
| Tertiary Amine | 0.015 |
| Cellosolve Acetate | 332.6 |

| Component II | |
|---|---|
| Desmodur N-100 (polyisocyanate, Mobay) | 93.9 |
| Cellosolve Acetate | 58.7 |

This material is spray applied at a dry film thickness of 1.5-2.0 mil onto Bonderite 40 cold rolled steel panels that have been previously primed wit a commerical epoxy polyamide maintenance primer (Sherwin-Williams Tile Clad II). Prior to application, a present test compound of formula (A) or (B) is added to the paint. After ambient storage for two weeks, three panels of each formulation are exposed outdoors at an angle of 45° S for a period of nine months. Thereafter, 20° gloss retention is determined by ASTM D 523-80 at the top, middle and bottom portions of each panel. Thus, the average values for nine gloss retention measurements for each triplicate set of panels are obtained.

The panels stabilized by a present compound of formula (A) or (B) show excellent gloss retention.

### Example 57

### Stabilization of Acrylic Alkyd Refinish Enamel

A commercially available acrylic alkyd enamel pigmented with non-leafing aluminum pigment and tinted a light blue is stabilized with a benzotriazole UV absorber and an instant hindered amine test compound of formula (A) or (B) and is then spray applied onto Bonderite 40 panels primed with an alkyd primer. After the coating is allowed to cure at room temperature for 14 days, the panels are exposed outdoors at an angle of 45° S for a period of eight months. The 20° gloss of the exposed panels is measured.

The panels stabilized by a present compound of formula (A) or (B) show excellent gloss retention.

### Example 58

### Stabilization of a Medium Oil Alkyd Enamel

A medium oil alkyd enamel pigmented with a non-leafing aluminum pigment and tinted light blue is stabilized with a benzotriazole UV absorber and an instant hindered amine test compound of formula (A) or (B) and is then sprayed applied onto cold rolled steel panels primed with an epoxy primer. After the coating is allowed to cure at room temperature for two weeks, the panels are exposed for accelerated weathering in a Xenon Arc Weather-Ometer for 840 hours. The 20° gloss values of the panels are determined before and after exposure.

The panels stabilized by a present compound of formula (A) or (B) show excellent gloss retention.

### Example 59

### Electrocoat Composition

A typical E-coat composition is prepared by adding the diglyicidyl ether of bisphenol A, polyethylene oxide diol, bisphenol A and xylene to a flask and heating to 135°C. The catalyst dimethylbenzylamine in xylene is added and the temperature maintained at 143°C for two hours. The weight per epoxy (WPE) is measured and a previously prepared crosslinker composed of 2,4-toluenediisocyanate, trimethylolpropane blocked with an alcohol is then added and temperature reduced to 100°C. The remaining epoxy groups are then capped with two different secondary amines, namely diketimine of diethylenetriamine and methylethanolamine, in phenyl cellosolve. The temperature is maintained for one hour at 110°C and the crosslinker hexamethylenediisocyanate blocked with an alcohol is added. The temperature is maintained near 100°C for 30 minutes and the resin mixture is added to deionized water, surfactant and lactic acid to give a resin emulsion.

To this resin emulsion is added an instant hindered amine compound of formula (A) or (B), additional epoxy resin, carbon black, dibutyltin oxide catalyst, titanium dioxide, lead silicate, water and UV absorber. After dispersion using a sand mill to achieve proper fineness, the mixture is incorporated into an electrocoat bath with water for electrocoating onto a metal substrate.

The steel coating electrocoated with the above E-coat resin composition to a thickness of 23-30 mm and cured for 20 minutes at a temperature of 176-201°C. A pigmented resin layer is coated thereover at a thickness of 20-51 mm using an acrylic coating composition in an organic solvent, pigments and a UV absorber. The coated panels are then baked at 121-129°C to cure the pigmented layer.

The panels are then exposed outdoors for four months. The panels containing a present hindered amine compound of formula (A) or (B), particularly when used with a UV absorber, provided excellent resistance to delamination of the E-coat layer from the metal substrate.

### Example 60

### Abrasion-Resistant Coating Compositions

A solution in isopropanol of 50% (by weight) of 1,6-hexanediol, 10% 3-methacryloyloxypropyltrimethoxysilane and 40% colodial silica (in form of a 34% aqueous dispersion) is vacuum stripped to remove volatiles and combined with an instant hindered amine compound of formula (A) or (B), a benzotriazole UV absorber and 2,4,6-trimethylbenzoyldiphenylphosphine photoinitiator. These compositions show no gelation on storage.

The compositions above are applied by roller coating to a 15 mil film of bisphenol A polycarbonate and the coated films are passed under a mercury lamp at 43°C at a line speed of 610 cm/min. The compositions are cured to a colorless and optically clear coatings over the polycarbonate substrate.

The coatings as measured by the Taber Abrasion Test (ASTM D1044) are abrasion resistant.

The test specimens are also subjected to accelerated aging tests using an Atlas Ci35A Xenon Arc Weather-Ometer. The results show that the coatings containing a present hindered amine compound of formula (A) or (B) exhibit excellent resistance to yellowness and haze formation.

### Example 61

### Coating over Polycarbonate

A two-component polyester urethane coating is stabilized by the addition of an instant hindered amine compound of formula (A) or (B). The high-solids polyester polyol (Desmophen 670-80, Bayer) is crosslinked with an isocyanate based resin (Desmodue N-3390, Bayer). The coating is catalyzed with 0.015% by weight of dibutyltin dilaurate catalyst.

Plaques of polycarbonate-based plastic substrate (Xenoy) 4" x 6" are coated with the formulated clear coat at a thickness of approximately 1.5 mils. The coating is spray applied to the substrate and then baked at 82°C for 20 minutes.

After storage for one week at room temperature, each plaque is cut into 2" x 3" strips with five replicates being made for each formulation. Each strip is placed into a 8-oz jar along with 2 mL of distilled water and sealed. All samples are placed in an over at 54°C. A crosshatch adhesion test is performed once a week on at least two of the replicate samples until the sample failed (5% adhesion loss) or until 40 days elapses.

The samples containing a present hindered amine compound of formula (A) or (B) exhibit excellent resistance to delamination.

### Example 62

### Chromogenic Photographic Layers

Chromogenic photographic layers are prepared by hand-coating a gelatin emulsion containing silver bromide, yellow coupler and an additive on a polyethylene-coated paper.

The composition of the layer is as given in following table, amounts are in mg/m²:

| Component | Amount in the layer |
|---|---|
| Gelatine | 5150 |
| AgBr | 520 |
| Yellow coupler | 1.07 mmol/m² |
| Coupler solvent solv1 | 33% of the coupler weight/m² |
| Additive of component (b) | 30% of the coupler weight/m² |
| Hardener ha1 | 300 |
| Surfactant su1 | 340 |

The layers are dried for 7 days in a ventilated cabinet.

The dried samples are exposed to white light through a stepwedge of 0.3 logE exposure steps. They are developed with the P94 process for negative colour paper from Agfa-Gevaert, following the manufacturers' recommendations.

After exposure and processing, the remission density of the yellow dye is measured in the blue channel. The samples are then exposed in an Atlas Weather-Ometer behind a separate UV filter so as to receive 60kJ/cm² light energy. The UV filter consists of an emulsion coated onto a polyester transparent support, such that the layer contains 1g/m² Tinuvin® B976. The temperature is 43°C and the relative humidity 50%. The density loss starting from a blue-density of 1 is determined. Low ΔD number are desired.

Samples including the present compounds of formula (A) or (B) exhibit improved light stability of yellow photographic layers.

### Example 63

### Chromogenic Photographic Layers

Chromogenic photographic layers are prepared by hand-coating agelatine emulsion containing silver bromide, yellow coupler and an additive on a polyethylene-coated paper.

The composition of the layer is as given in following table, amounts are in mg/m²:

| Component | Amount in the layer |
|---|---|
| Gelatine | 5150 |
| AgBr | 520 |
| Yellow coupler | 1.07 mmol/m² |
| Coupler solvent solv1 | 33% of the coupler weight/m² |
| Additive of component (b) | 30% of the coupler weight/m² |
| Hardener ha1 | 300 |
| Surfactant su1 | 340 |

The layers are dried for 7 days in a ventilated cabinet.

The dried samples are exposed to white light through a stepwedge of 0.3 logE exposure steps. They are developed wit the P94 process for negative colour paper from Agfa-Gevaert, following the manufacturers recommendations.

After exposure and processing, the remission density of the yellow dye is measured in the blue channel. The samples are then subjected to storage in a Weiss climatic cabinet for 28 days. The density loss starting from a blue-density of 1 is determined. Low DD numbers are desired.

Samples containing the present additives of formula (A) or (B) also exhibit improved dark stability of yellow photographic layers.

### Example 64

### Stabilization of a Glycidyl Methacrylate-based Powder Clearcoat

One of the major new coating technologies which can be used to meet increasingly stringent VOC solvent emission requirements is the use of powder coatings. Applications requiring the use of light stabilizers include clearcoats for finishing of automotive topcoats, finishing of garden implements, protection of automotive wheel covers. For optimum incorporation and shelf stability, stabilizers used in a powder coating should be moderate-melting (∼100°C) solids, nonvolatile, and heat stable at typical powder coating baking temperatures (140-180°C).

Prior to incorporation of a hindered amine light stabilizer of formula (A) or (B) under test, a premix of commercially available GMA-based powder coating resin, UV absorber, and flow aids is made by extruding together at 145°C. A present hindered amine of formula (A) or (B) is then incorporated into portions of this premix, along with a commercially available 1,12 dodecanoic acid crosslinking resin. The final mix is extruded at 100°C, then the extrudate is milled on an ultracentrifugal mill and powder cyclone, and sieved. The powders are electrostatically sprayed onto a basecoat to a film thickness of 60 microns. The coatings are cured for 30 minutes at 160°C.

The panels are weathered in a Xenon WeatherOmeter, and in Florida at 5° South angle. Gloss and color are measured.

The panels stabilized by a present compound of formula (A) or (B) show excellent gloss retention.

### Example 65

### Stabilization of an Oil Modified Urethane Alkyd for Wood Application

A hindered amine light stabilizer of formula (A) or (B) under test is incorporated into a commercially available solvent-borne urethane alkyd McWhorter 43-4355. A 2-hydroxy benzotriazole UV absorber is also incorporated into all formulations. After mixing, the clear coatings are applied by brushing to white pine boards. Each board is divided into 8 sections separated by a groove 1/8" deep, which is sealed with a film-forming clear varnish and the back and sides are coated with a white chlorinated pool paint. The stabilized coatings are applied in triplicate in three coats to sections of the boards in such a way as to ensure that a control formulation is present on each of the boards for comparison. The wood samples are allowed to dry for 1 week, then placed on exposure in Florida, Australia, and New York.

The panels stabilized by a present compound of formula (A) or (B) show good color retention, cracking resistance, and visual gloss retention.

### Example 66

### Preformed Films for Lamination to Plastic Parts

A present hindered amine of formula (A) or (B) are also effective in protective and decorative films which are preformed, then applied to a substrate via a dry paint transfer process. These films consist of a single decorative layer which is applied to a carrier sheet, then laminated to a self-supporting, thermoformable backing sheet. The carrier sheet is then removed from the opposite side of the film, exposing the decorative layer. The composite film/backing sheet then is thermoformed to a three-dimensional shape. Additionally, these films may also consist of multiple layers, where, for example, a thermoplastic, thermoformable clearcoat is applied to the carrier sheer, then hardened to form an optically clear film. A color coat is then applied to the exposed face of the clearcoat, and hardened, resulting in a clear coat/color coat paint film supported by the carrier. This composite is then laminated to a thermoformable backing sheet, as above. The carrier sheet is removed, as above, and the composite clearcoat/colorcoat/backing is then thermoformed, as above.

The polymeric resins for the above application must be thermoplastic, and may be fluoropolymer/acrylic blends.

### Example 67

Articles, films, fibers, coatings and photographic layers prepared according to Examples 1-66 are repeated employing blends of hindered amine stabilizers of formula (A) or (B) in place of each hindered amine alone. Excellent results are achieved via stabilization with such hindered amine blends.

### Example 68

Light stabilizing action in greenhouse films.

The compound of the formula (A) is mixed via master batch with low density polyethylene (LDPE) blown film grade pellets in a slow mixer.

The master batch is previously prepared by extruding powdered LDPE and 10 % by weight of the compound of the formula (A) (component A) and the relevant concentrations of component B (CHIMASSORB® 119 which has the structure 21.76) shown above).

The mixture is blow extruded at 200°C and films of 200 microns thickness are obtained.

The films are exposed on the south face roof of a greenhouse in Pontecchio Marconi (Bologna-Italy).

Sulphur burning and dusting are applied in the greenhouse.

During the exposure, the performance is periodically evaluated measuring the carbonyl increment by means of a FT-IR spectrophotometer and mechanical properties.

The exposure is measured in kilolangley and/or months (Klys; energy per unit area); 100 Klys corresponds to 1 year of exposure.

| | Concentration of component A | Concentration of component B |
|---|---|---|
| Sample 1 | 0.3 weight % | 0 |
| Sample 2 | 0.175 weight % | 0.175 weight % |

### Example 69

Light stabilizing action in greenhouse films.

The compound of the formula (A) and optionally CHIMASSORB® 119 which has the structure 21.76) shown above are mixed via master batch with LDPE pellets (Riblene® FF 29, supplied by Montell®), characterised by a density of 0.921 g/cm³ and a melt flow index (190°C/2.16Kg) of 0.60 in a slow mixer.

The master batches are previously prepared by extruding, with a twin screw extruder, powdered LDPE with 10 % by weight of the compound of the formula (A) (component A) or with 10% by weight of component B (CHIMASSORB® 119).

The mixture is blown at 200°C and films of 150 microns thickness are obtained.

The films are exposed on the south face roof of a greenhouse in Pontecchio Marconi (Bologna-Italy).

The following pesticide are applied in the greenhouse :
VAPAM® (Baslini® S.p.A., Treviglio/BG, Italy), which, in turn, in an aqueous solution of 382 g per litre of metam-sodium, having the formula CH₃-NH-CS-SNa;
SESMETRIN® (Bimex® SpA, Isola/VI, Italy), which is a 23.75 % (%w/w) aqueous solution of permethrin.

The greenhouse is treated with a solution of 4 litres of VAPAM® in 10 litres of water every 6 months, and with SESMETRIN® (5 g in 5 litres of water) every month.

During the exposure, the performance is periodically evaluated measuring the carbonyl increment by means of a FT-IR spectrophotometer.

The exposure is measured in kilolangley (Klys; energy per unit area); 100 Klys corresponds to 1 year of exposure.

The increase of the carbonyl concentration (iCO) after 159 kLys exposure is shown in the following Table:

| | Concentration of component A | Concentration of component B | iCO |
|---|---|---|---|
| Sample 1 | 0.2 weight % | 0 | 0.34 |
| Sample 2 | 0.4 weight % | 0 | 0.19 |
| Sample 3 | 0.2 weight % | 0.2 weight % | 0.10 |

## Claims

1. A composition comprising
(a) an organic material subject to degradation induced by light, heat or oxidation and
(b) at least one high molecular weight hindered hydrocarbyloxyamine stabilizer,
wherein the hindered hydrocarbyloxyamines of component (b) are of the formulae 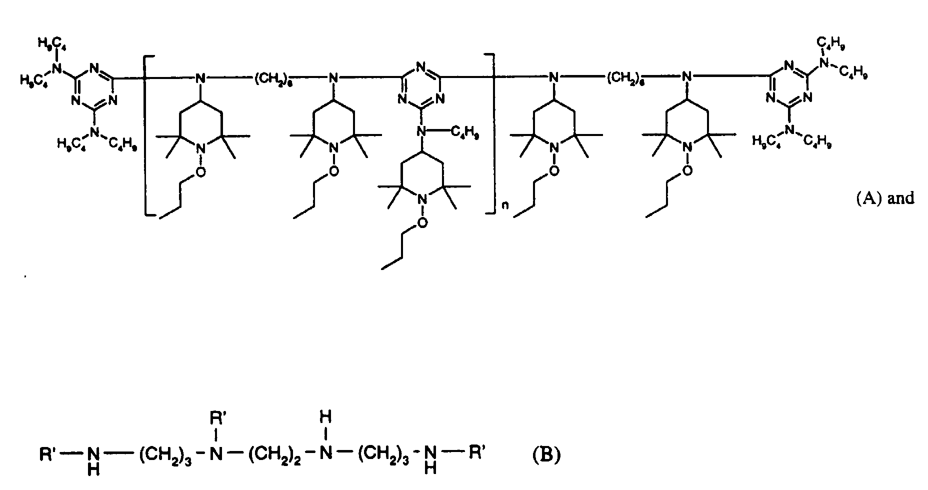 where R' is
